# EUROPEAN PATENT APPLICATION

(11) **EP 4 567 573 A1**
(43) Date of publication of application: **11.06.2025**
(21) Application number: 23893389.9
(22) Date of filing: 19.09.2023
(51) Int. Cl.: G06F 3/04883

(54) **MULTI-DEVICE TASK STREAM TRANSFER METHOD AND RELATED APPARATUS**

(30) Priority: 22.11.2022 CN 202211474246
(71) Applicant: Honor Device Co., Ltd., Shenzhen, Guangdong 518040 (CN)
(72) Inventor: WANG, Long, Shenzhen, Guangdong 518040 (CN); GE, Feng, Shenzhen, Guangdong 518040 (CN); PANG, Haotian, Shenzhen, Guangdong 518040 (CN); ZHU, Bin, Shenzhen, Guangdong 518040 (CN)
(74) Representative: MERH-IP Matias Erny Reichl Hoffmann Patentanwälte PartG mbB
(86) International application number: PCT/CN2023/119815
(87) International publication number: WO 2024/109296

(57) **Abstract**

Embodiments of this application provide a multi-device task transferring method and a related apparatus. The method includes: A master device displays a first interface including a page of a first application; in response to a first operation, the master device displays a second interface including a device identifier of a first slave device; in response to a second operation, the master device displays a third interface and sends the page of the first application to the first slave device, and the first slave device displays the page of the first application; the master device displays a fifth interface including a page of a second application; in response to a fourth operation, the master device displays a sixth interface including the device identifier of the first slave device; and in response to a fifth operation, the master device displays a seventh interface and sends content displayed on the page of the second application to the first slave device, and the first slave device starts a third application corresponding to the second application. The first application and the second application are transferred to the first slave device respectively through different-source screen projection and handoff. Different applications adapt to different transferring manners, to implement smart transferring and improve user experience.

## Description

This application claims priority to Chinese Patent Application No. 202211474246.3, filed with China National Intellectual Property Administration on November 22, 2022 and entitled "MULTI-DEVICE TASK TRANSFERRING METHOD AND RELATED APPARATUS", which is incorporated herein by reference in its entirety.

### TECHNICAL FIELD

This application relates to the field of terminal technologies, and in particular, to a multi-device task transferring method and a related apparatus.

### BACKGROUND

Multi-device collaboration is a distribution technology applied to a plurality of electronic devices. By using the multi-device collaboration technology, cross-system and cross-device collaboration can be performed between two or more electronic devices, to implement resource sharing and collaboration operations. Task transferring is a technology that implements seamless handoff between a plurality of devices.

With continuous development of terminal technologies, a plurality of different task transferring manners, for example, same-source screen projection, handoff, and different-source screen projection, have emerged for multi-device collaboration.

### SUMMARY

Embodiments of this application provide a multi-device task transferring method and a related apparatus, and are applied to the field of terminal technologies. A first application and a second application are transferred to a first slave device respectively through different-source screen projection and handoff. Different applications adapt to different transferring manners, to implement smart transferring and improve user experience.

According to a first aspect, an embodiment of this application provides a multi-device task transferring method. The method includes: A master device displays a first interface, where the first interface includes a page of a first application; the master device receives a first operation; the master device displays a second interface in response to the first operation, where the second interface includes a device identifier of a first slave device; the master device receives a second operation for the device identifier of the first slave device; in response to the second operation, the master device displays a third interface, and sends the page of the first application to the first slave device, so that the first slave device displays the page of the first application; the master device receives a third operation, where the third operation is a back operation; the master device displays a fourth interface in response to the third operation, where the fourth interface does not include the page of the first application; the master device displays a fifth interface, where the fifth interface includes a page of a second application; the master device receives a fourth operation; the master device displays a sixth interface in response to the fourth operation, where the sixth interface includes the device identifier of the first slave device; the master device receives a fifth operation for the device identifier of the first slave device; in response to the fifth operation, the master device displays a seventh interface, and sends content displayed on the page of the second application to the first slave device, so that the first slave device starts a third application, where the third application corresponds to the second application, and content displayed on a page of the third application is the same as the content displayed on the page of the second application; the master device receives a sixth operation, where the sixth operation is a back operation; and the master device displays an eighth interface in response to the sixth operation, where the eighth interface includes a page of the second application.

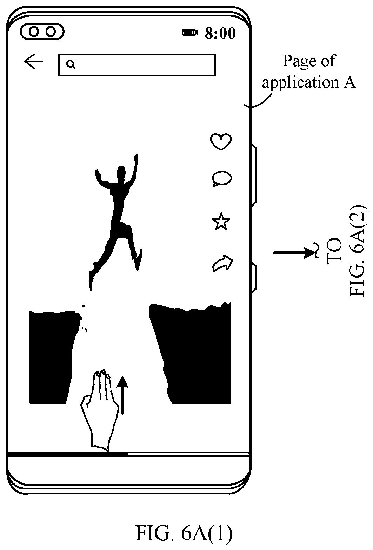

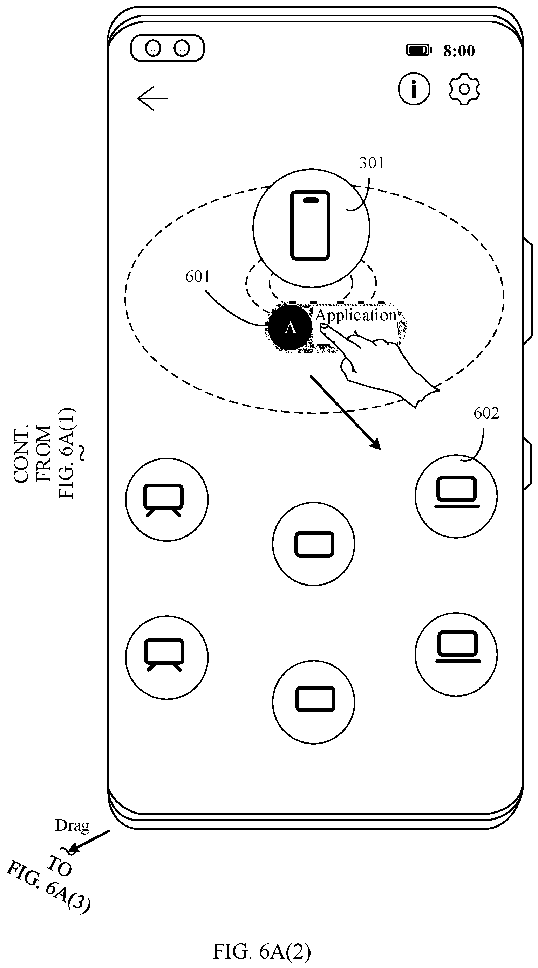

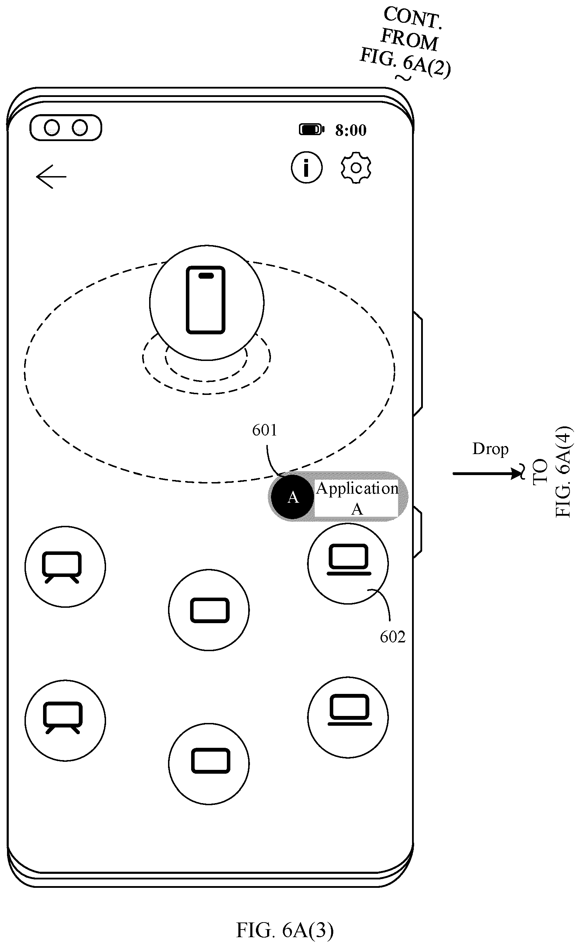

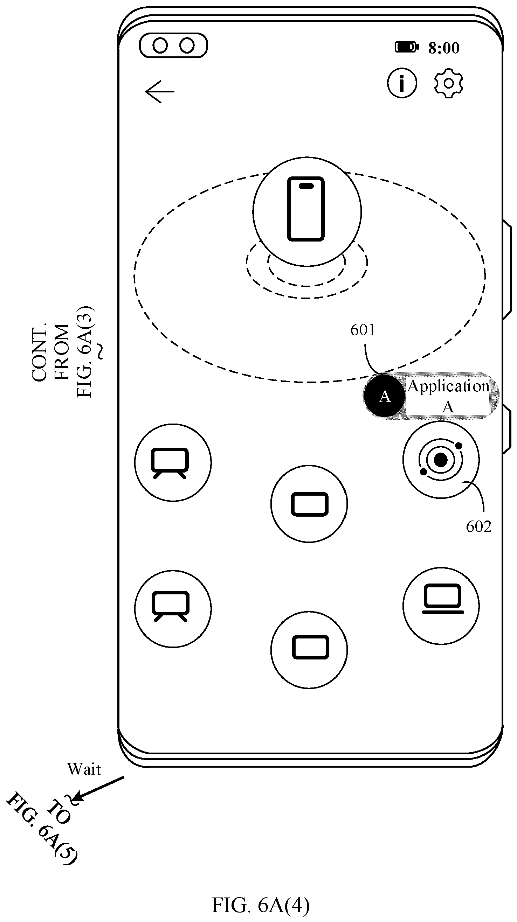

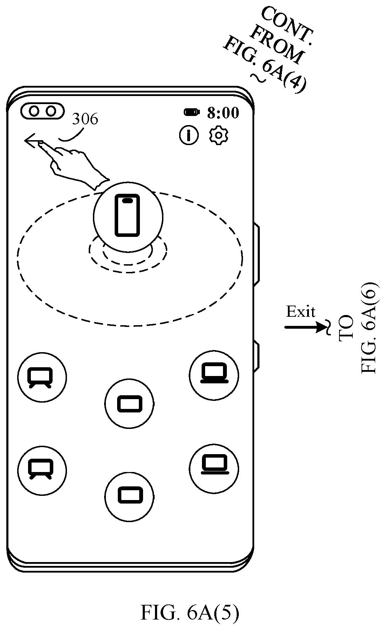

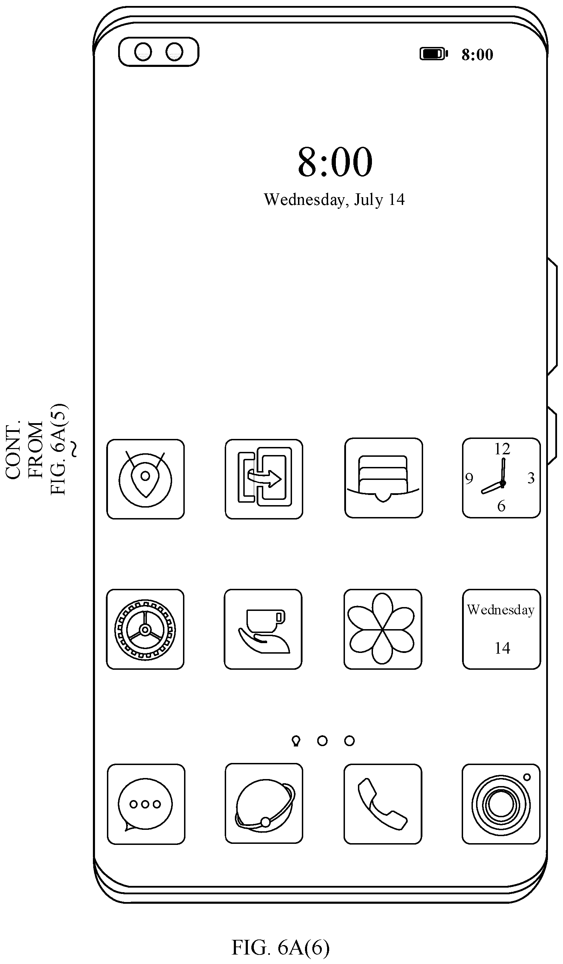

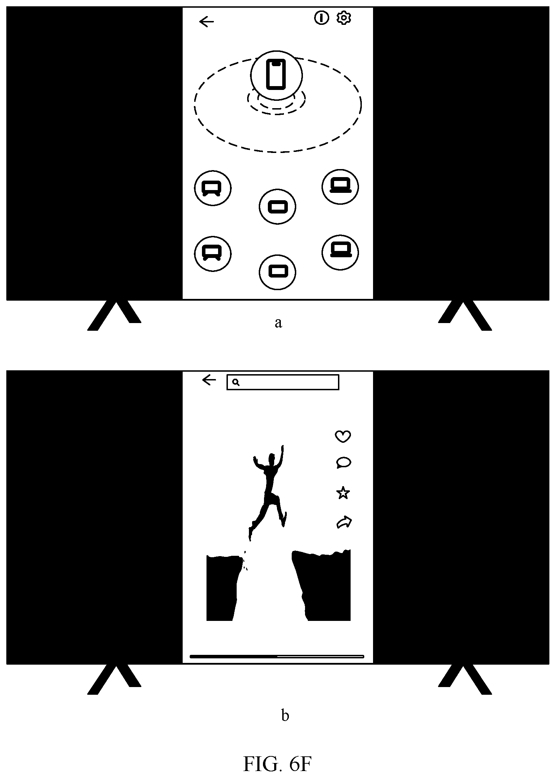

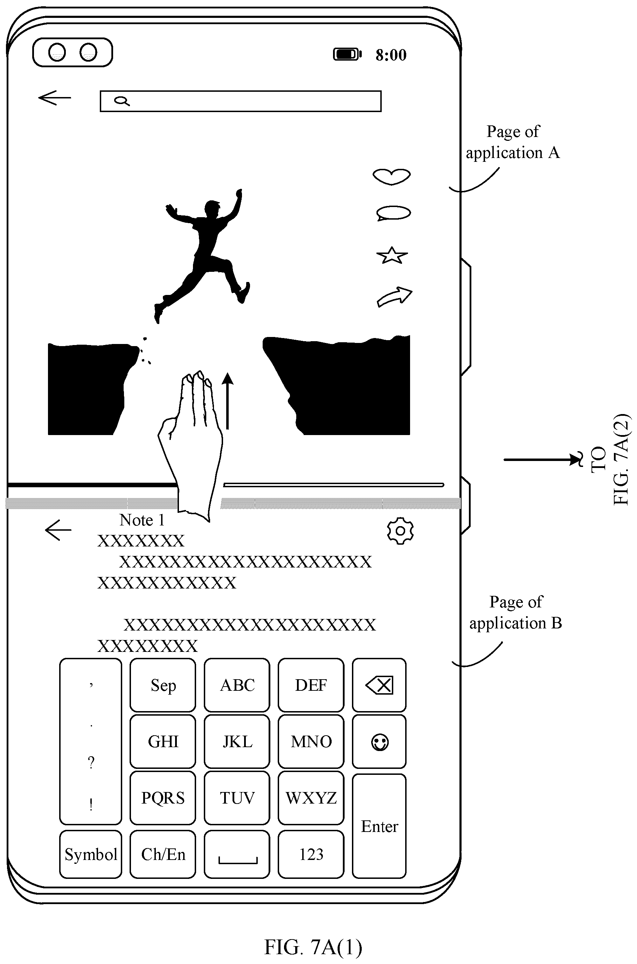

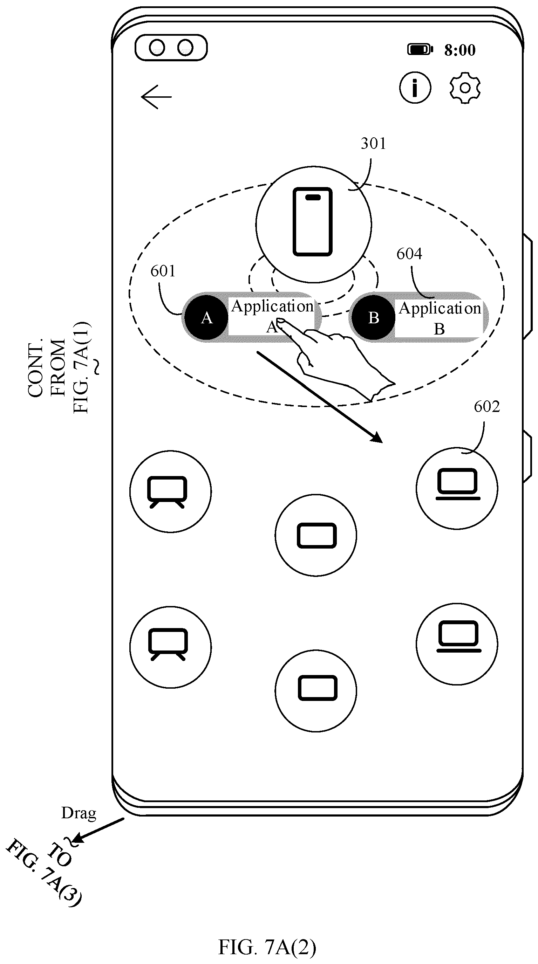

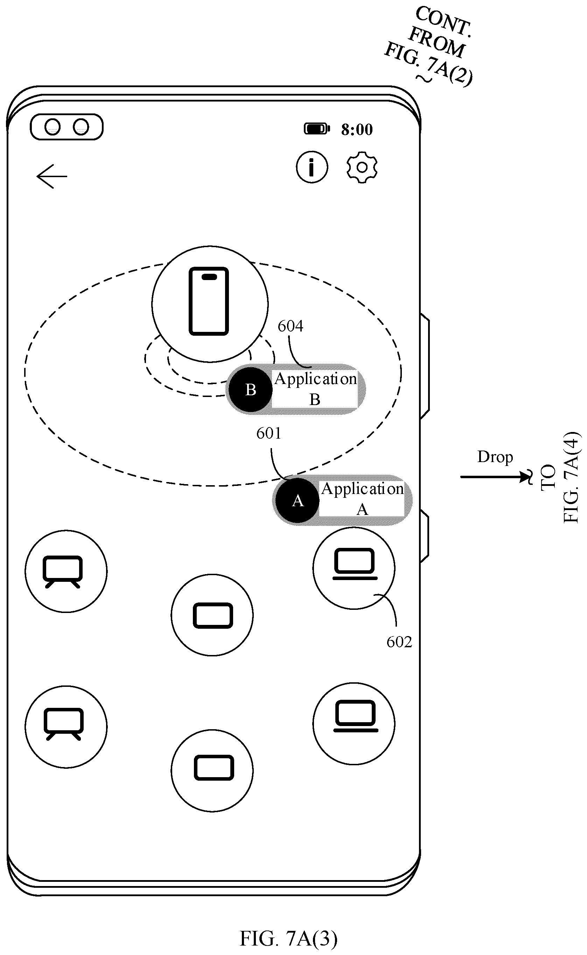

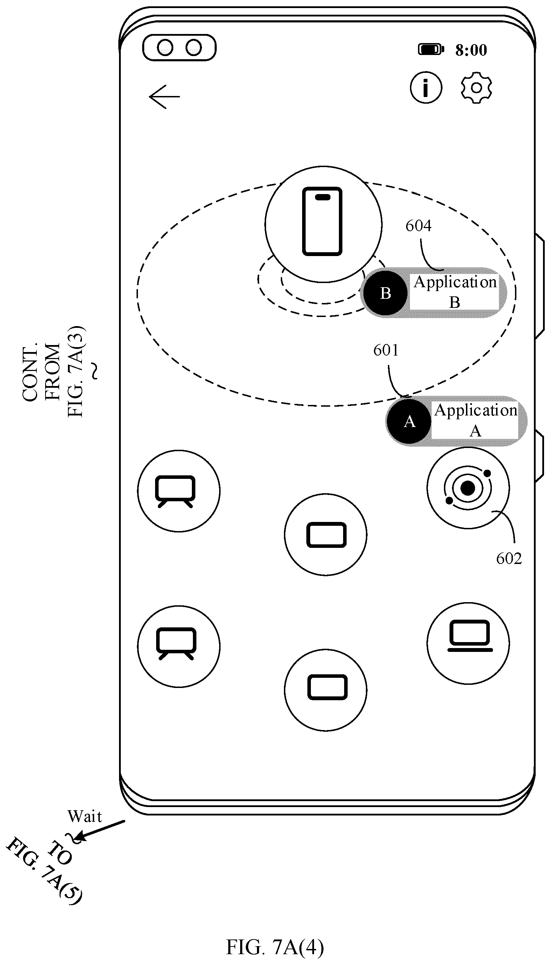

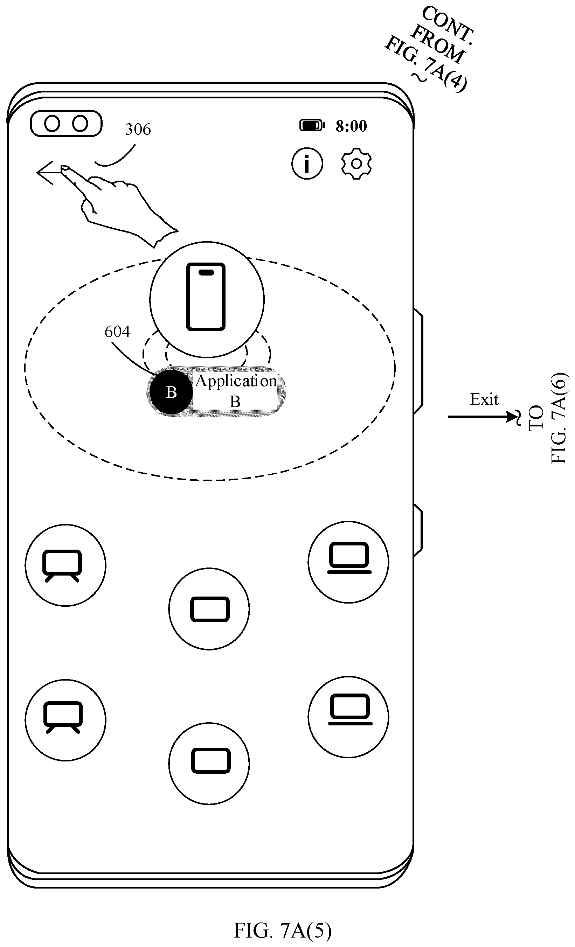

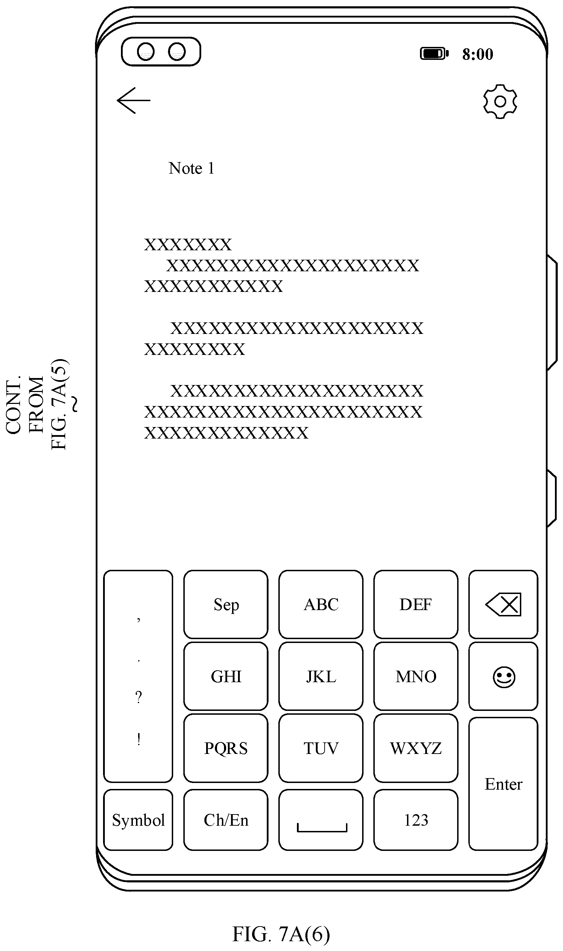

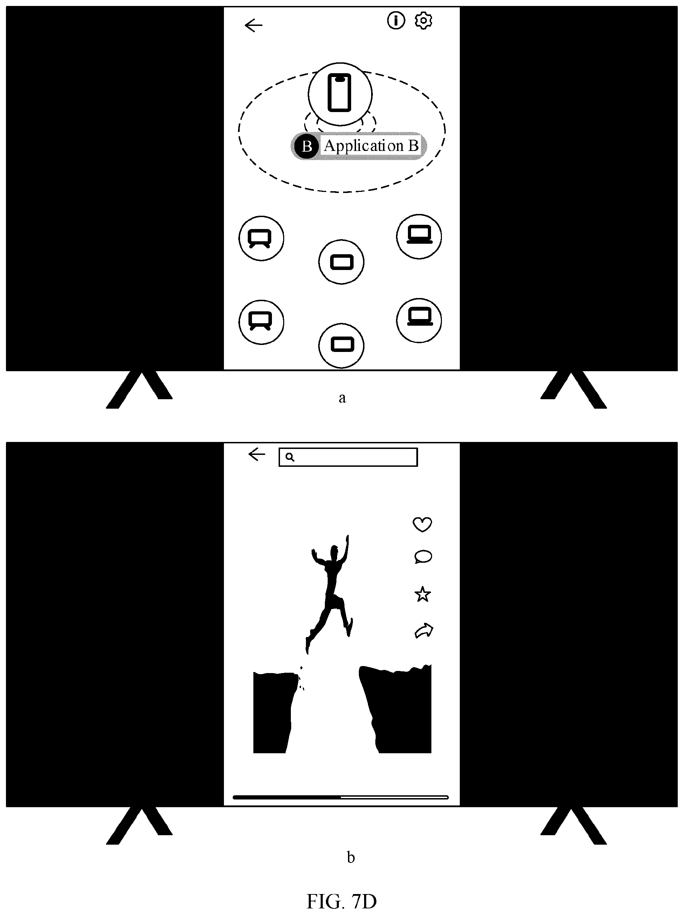

In this embodiment of this application, the first interface is a page of an application, and the first interface may correspond to the interface shown in FIG. 6A(1) or FIG. 7A(1). The page of the first application may correspond to the page of the application A shown in FIG. 6A(1) to FIG. 6A(6). The first application may be a video application, or may be another type of application. This is not limited in this embodiment of this application. The first operation is used to access a control center page. The first operation may be a shortcut gesture operation, or may be a voice operation or another type of operation. This is not limited in this embodiment of this application. The shortcut gesture operation may be a gesture operation such as three-finger upward sliding.

The second interface is the control center page, and may correspond to the interface shown in FIG. 6A(2) or the interface shown in FIG. 7A(2). For a form of the device identifier of the first slave device, refer to the description in the embodiments. Details are not described herein. In this embodiment of this application, the second operation is used to select the first slave device. Based on different pages, selection manners may be different, and may be a drag-and-drop selection, may be tapping on the device identifier of the first slave device for selecting, and the like. A type of the second operation is not limited in this embodiment of this application.

The third interface is a control center page after task transferring succeeds, and may correspond to the interface shown in FIG. 6A(5) or FIG. 7A(5). The third operation is a back operation. The back operation in this embodiment of this application is an operation of invoking a back instruction. Alternatively, the back operation may be understood as an operation of exiting the control center page. The third operation may be a tap operation, may be a shortcut operation, or may be a voice operation. A specific type of the third operation is not limited in this embodiment of this application.

The fourth interface is an interface displayed after a control center is exited, and may correspond to the interface shown in FIG. 6A(6) or FIG. 7A(6). It may be understood that, after the master device transfers the first application in a different-source screen projection manner, the master device disables the first application, and does not display the page of the first application.

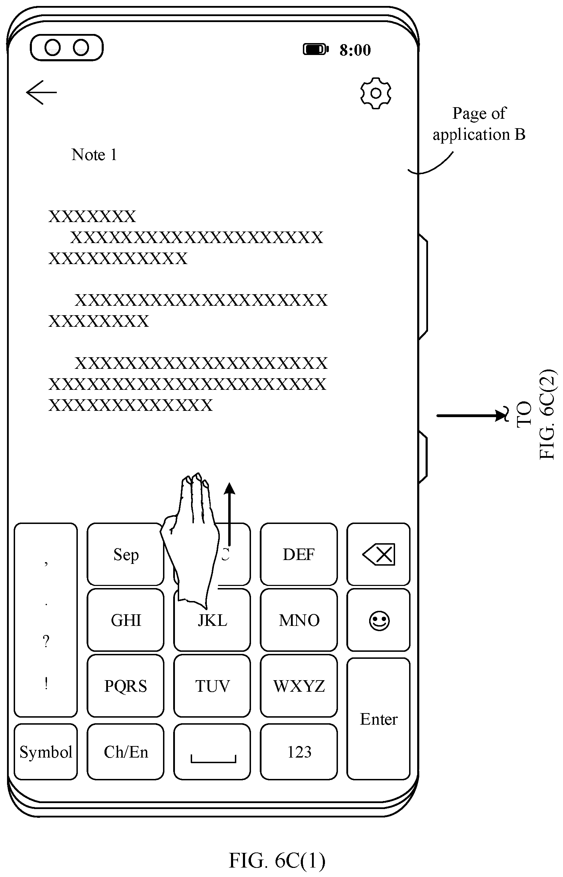

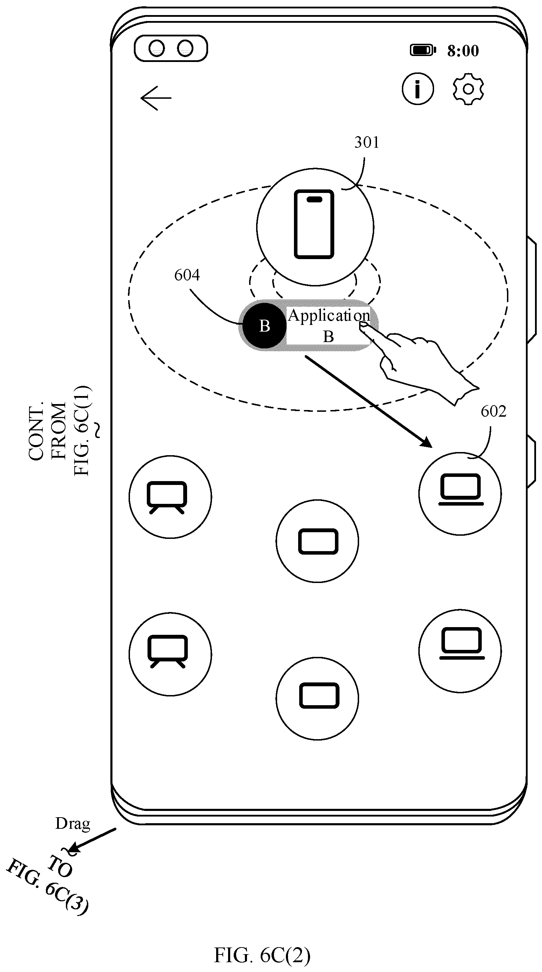

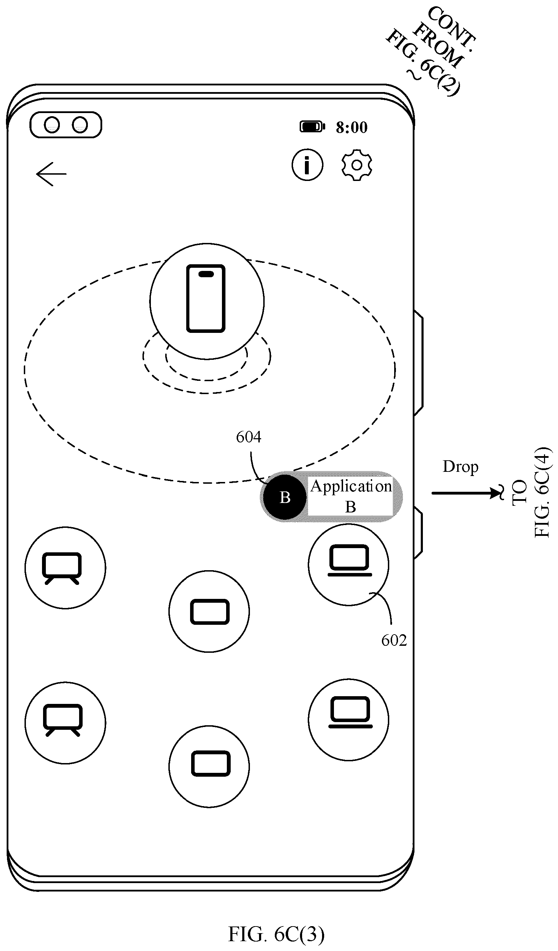

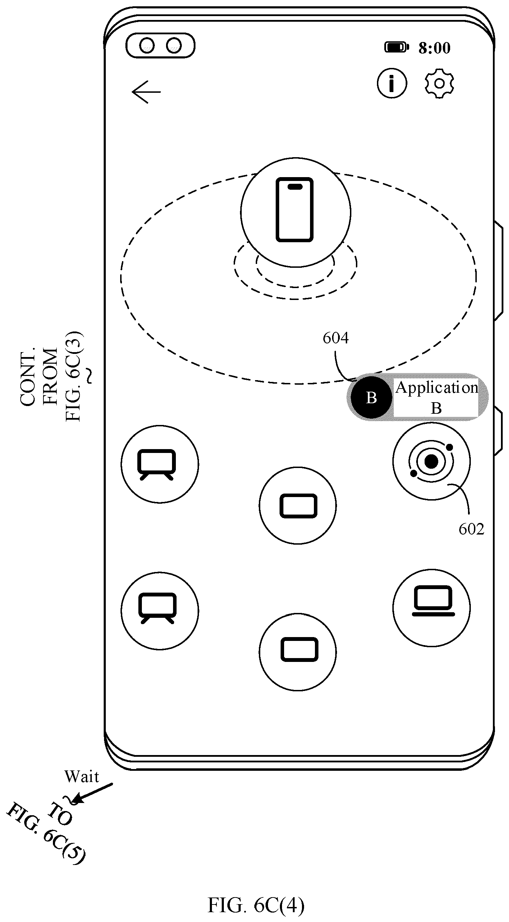

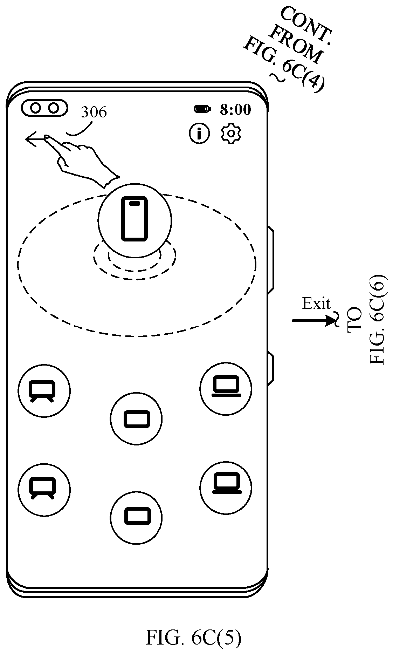

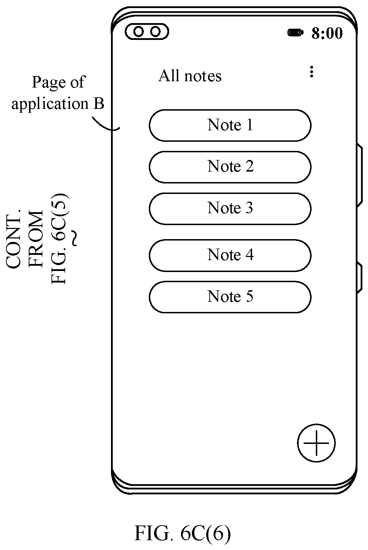

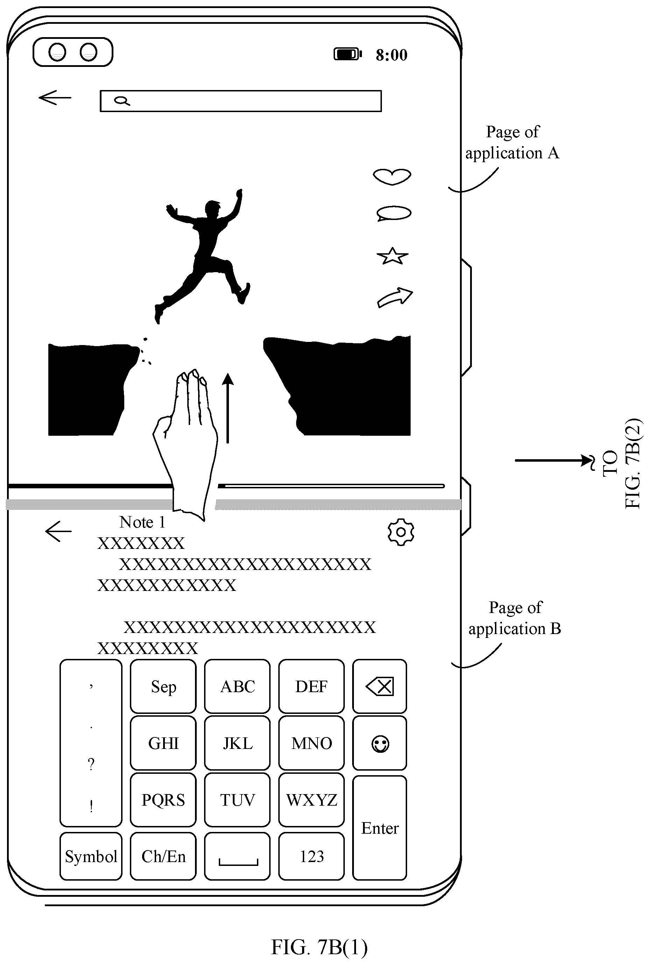

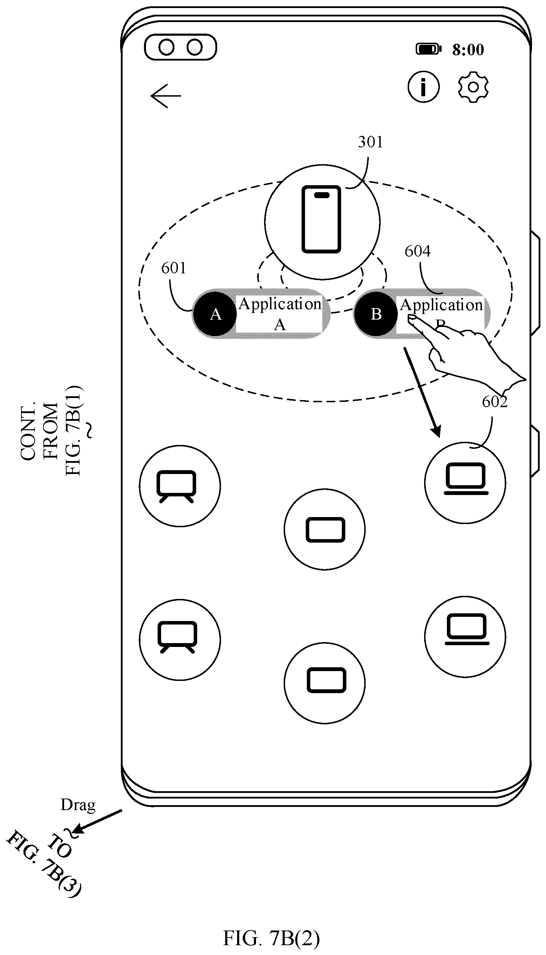

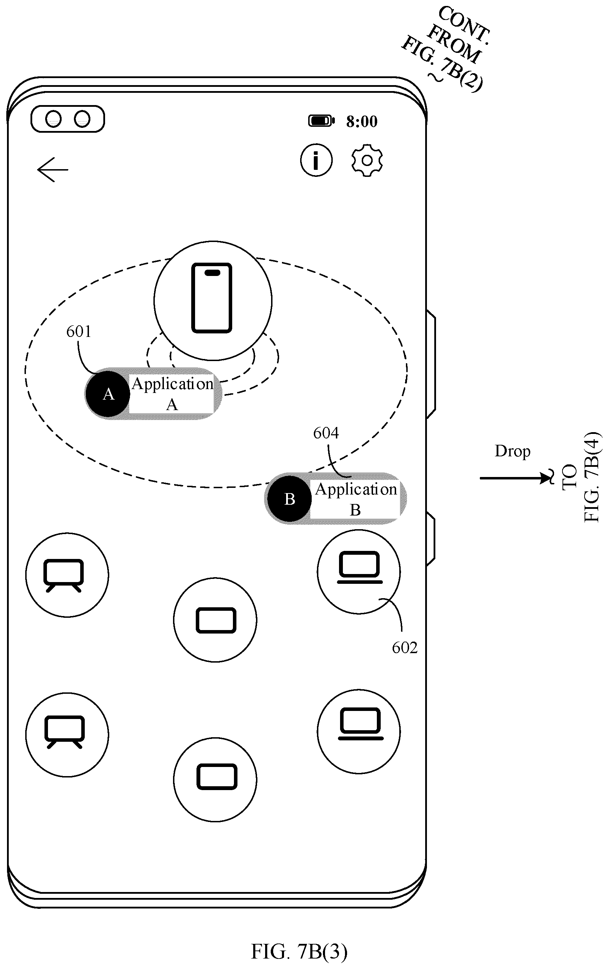

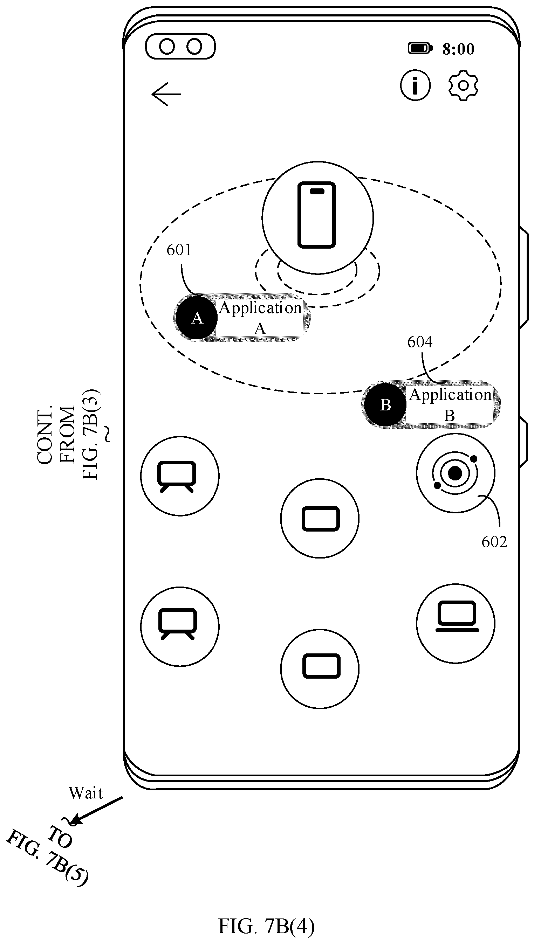

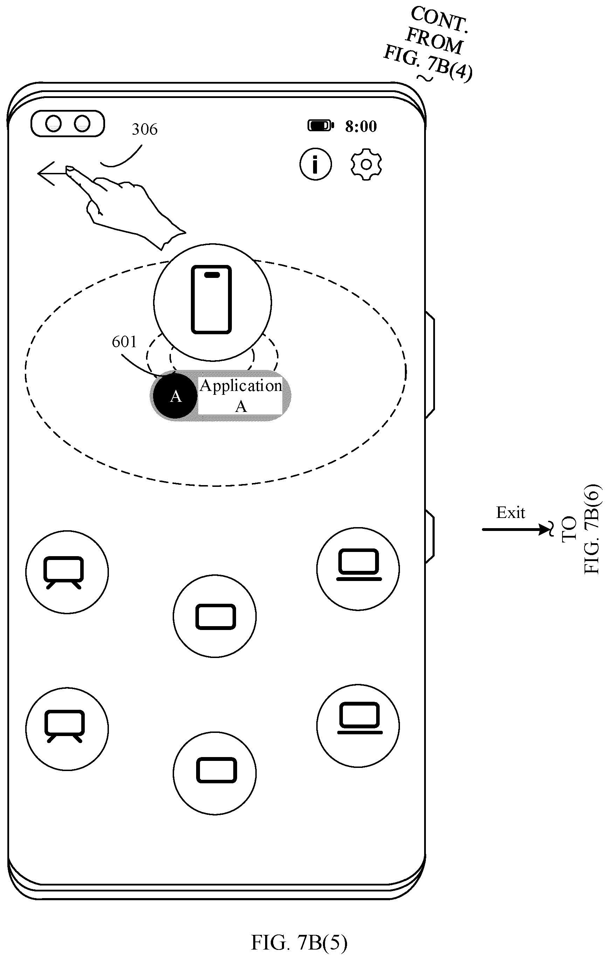

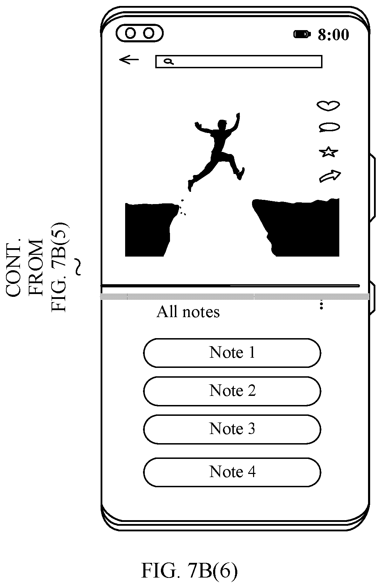

In this embodiment of this application, the fifth interface is a page of an application, and the fifth interface may correspond to the interface shown in FIG. 6C(1) or FIG. 7B(1). The page of the second application may correspond to the page of the application B shown in FIG. 6C(1) to FIG. 6C(6). The second application may be a note-taking application, or may be another type of application. This is not limited in this embodiment of this application. The fourth operation is used to access the control center page. The fourth operation may be a shortcut gesture operation, or may be a voice operation or another type of operation. This is not limited in this embodiment of this application. The shortcut gesture operation may be a gesture operation such as three-finger upward sliding. The sixth interface is the control center page, and may correspond to the interface shown in FIG. 6C(2) or the interface shown in FIG. 7B(2).

In this embodiment of this application, the fifth operation is used to select the first slave device. Based on different pages, selection manners may be different, and may be a drag-and-drop selection, may be tapping on the device identifier of the first slave device for selecting, and the like. A type of the fifth operation is not limited in this embodiment of this application. The seventh interface is a control center page after task transferring succeeds, and may correspond to the interface shown in FIG. 6C(5) or FIG. 7B(5). The third application and the second application may be understood as a same application of different versions, for example, a note-taking application on a mobile phone and a note-taking application on a computer.

The sixth operation is a back operation. The back operation in this embodiment of this application is an operation of invoking a back instruction. Alternatively, the back operation may be understood as an operation of exiting the control center page. The sixth operation may be a tap operation, may be a shortcut operation, or may be a voice operation. A specific type of the sixth operation is not limited in this embodiment of this application. The eighth interface is an interface displayed after the control center is exited, and may correspond to the interface shown in FIG. 6C(6) or FIG. 7B(6).

In this way, the first application and the second application are adapted to different manners, and can be transferred to the first slave device respectively through different-source screen projection and handoff. The master device can automatically adjust a transferring manner according to an application, to implement smart transferring. Therefore, it is unnecessary for a user to separately search for a corresponding transferring entry, thereby reducing user memory costs, and improving user experience.

Optionally, the second interface further includes an identifier of the first application, and the sixth interface further includes an identifier of the second application. The second operation is an operation of dragging the identifier of the first application to the vicinity of the device identifier of the first slave device. The fifth operation is an operation of dragging the identifier of the second application to the vicinity of the device identifier of the first slave device.

In this embodiment of this application, both the identifier of the first application and the identifier of the second application may correspond to the foregoing task identifiers. Details are not described herein again. The identifier of the first application may correspond to the task identifier of the application A, and the identifier of the second application may correspond to the task identifier of the application B.

The vicinity of the device identifier of the first slave device may be understood as a case in which a distance away from the device identifier of the first slave device is less than a second threshold.

In this way, an identifier of a corresponding application is displayed on the control center page, which is simple, intuitive, and clear at a glance. A slave device is selected by dragging an identifier of an application to the vicinity of a device identifier of the slave device, so that an operation is simple and easy to understand.

Optionally, the first operation is the same as the fourth operation, and the first operation is any one of the following operations: a three-finger upward sliding operation, a double-tap operation, a three-finger downward sliding operation, and a three-tap operation.

In this way, the control center page is accessed by using a shortcut, so that an operation is convenient and fast, thereby improving user experience.

Optionally, the third operation is a leftward sliding operation or a rightward sliding operation on a screen edge, or a tap operation on a first control displayed on the third interface. The sixth operation is a leftward sliding operation or a rightward sliding operation on the screen edge, or a tap operation on the first control displayed on the seventh interface.

The first control may correspond to an exit control. It may be understood that the master device may exit the control center page by using a sideward sliding operation, or may exit the control center page by tapping the exit control on the control center page. The third operation and the sixth operation may be the same or different.

In this way, a plurality of exit manners are provided, and the user can exit the control center page in a proper manner, thereby improving user experience.

Optionally, the master device is any one of a mobile phone, a computer, and a tablet, and the first slave device is any one of a mobile phone, a computer, and a tablet.

In this way, it can be applicable to task transferring between a plurality of types of devices, so that a coverage area is wide, and practicality is high, thereby improving user experience.

Optionally, the fifth interface and the eighth interface are different interfaces, the fifth interface includes a first page of the second application, the eighth interface includes a second page of the second application, and the first page of the second application is different from the second page of the second application.

It may be understood that the fifth interface may correspond to a page being editing or another page being modified. The second page is a page obtained after editing is exited, or a page obtained after modification is exited.

In this case, when performing task transferring through handoff, the master device exits a state such as editing or modifying. Content on interfaces displayed by the application is different before and after task transferring.

Optionally, the second application is a note-taking application. The first page of the second application is an editing page, and the editing page includes content of a first note. The second page of the second application is a list page, and the list page includes an identifier of the first note.

Task transferring in this embodiment of this application may be applicable to the note-taking application. For the note-taking application, content on interfaces displayed by the application is different before and after task transferring.

Optionally, the first interface includes only the page of the first application, and the fourth interface is a home screen of the master device.

In this embodiment of this application, including only the page of the first application may mean that the page of the first application is displayed in full screen, or may mean that the page of the first application is displayed in a region other than a status bar region above. Alternatively, including only the page of the first application may be understood as including no page of another application other than the page of the first application. This is not specifically limited in this embodiment of this application.

It may be understood that, after the master device transfers the first application in the different-source screen projection manner, the master device disables the first application, and does not display the page of the first application. If running only the first application in the foreground, the master device displays the home screen after transferring the first application in the different-source screen projection manner.

Optionally, the first interface further includes a page of a fourth application, the page of the fourth application and the page of the first application are displayed in split-screen mode, and the fourth interface includes the page of the fourth application.

The fourth application may be a note-taking application, or may be another type of application. This is not limited in this embodiment of this application. The fourth application may be the same as or different from the second application.

It may be understood that, if running the first application and the fourth application in the foreground, the master device displays the page of the fourth application after transferring the first application in the different-source screen projection manner.

Optionally, the fifth interface further includes a page of a fifth application, and the page of the fifth application and the page of the second application are displayed in split-screen mode; and the eighth interface further includes a page of the fifth application, and the page of the second application and the page of the fifth application are displayed in split-screen mode.

The fifth application may be a video application, or may be another type of application. This is not limited in this embodiment of this application. The fifth application may be the same as or different from the first application.

It may be understood that, if running the second application and the fifth application in the foreground, the master device displays the page of the second application and the page of the fifth application after transferring the second application in the handoff manner.

Optionally, the first interface further includes a first floating window, and the first floating window displays a page of a sixth application; the second interface does not include an identifier of the sixth application, and the fourth interface further displays a second control; and the first floating window is displayed on the fourth interface in response to an operation performed by the user on the second control.

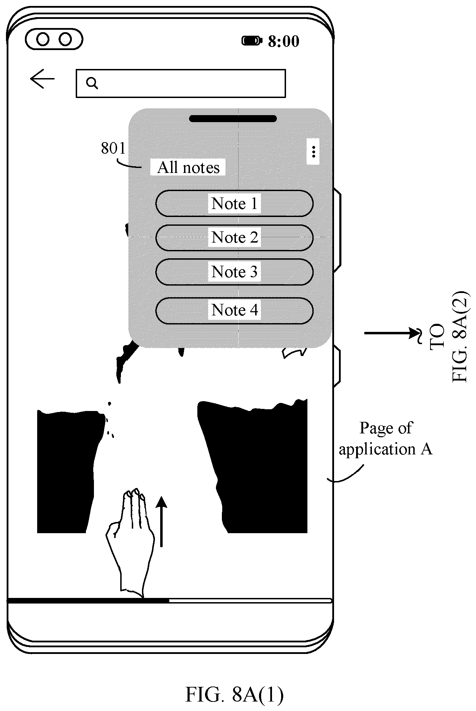

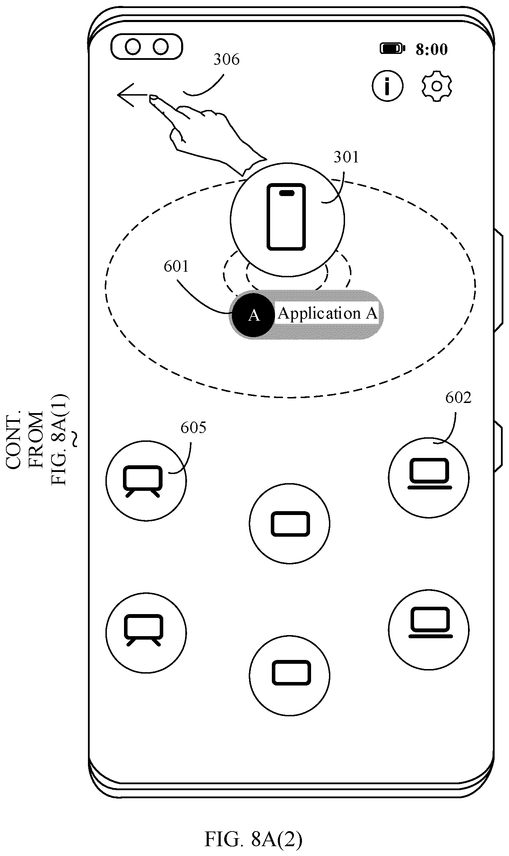

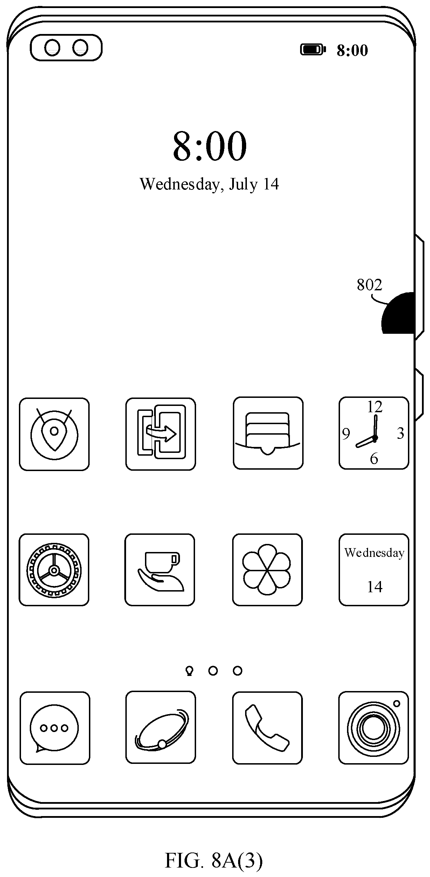

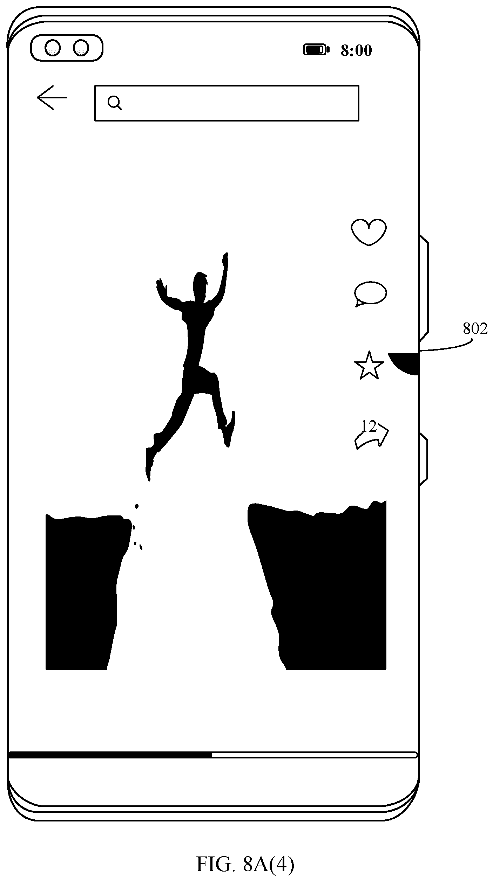

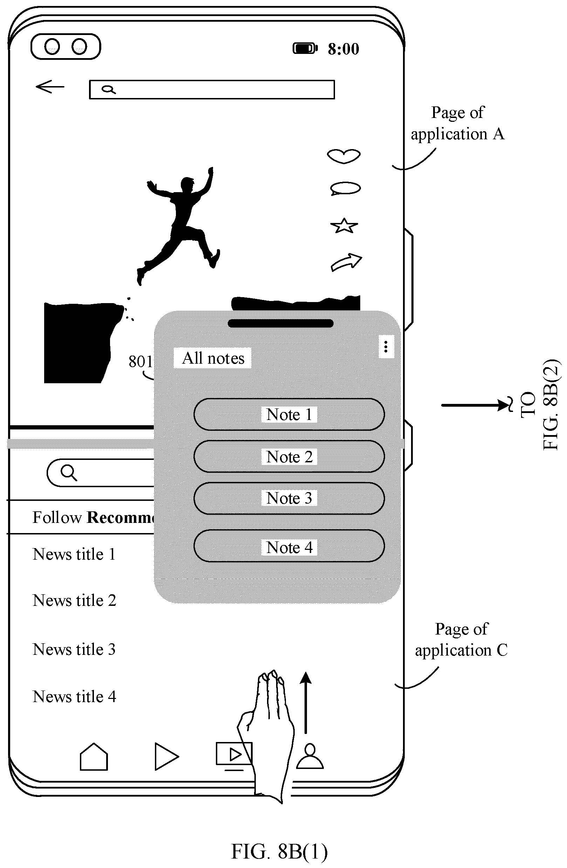

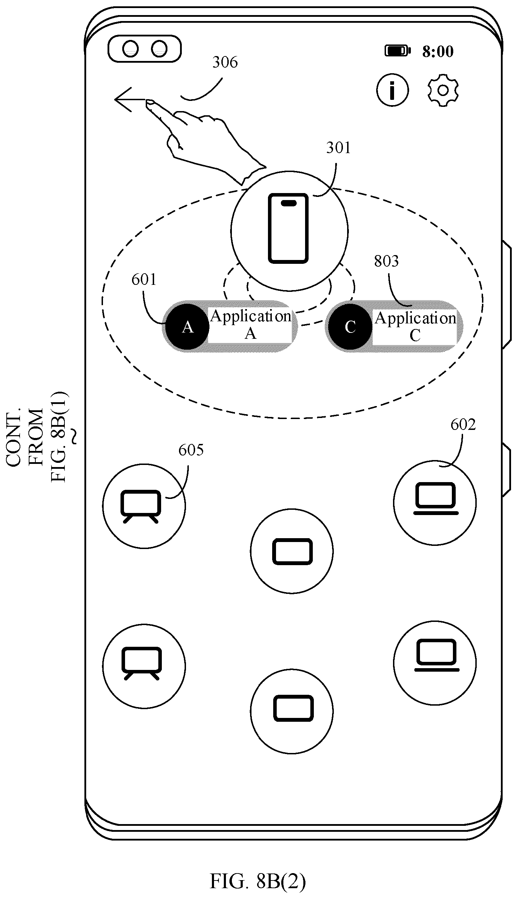

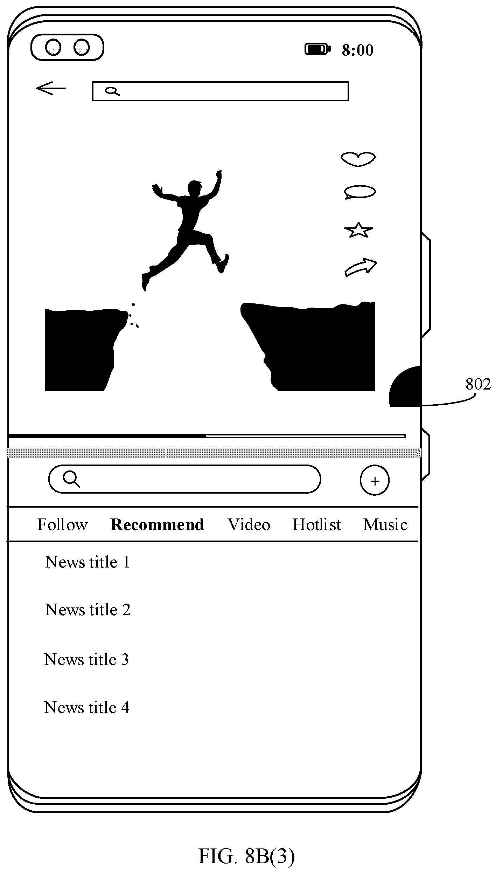

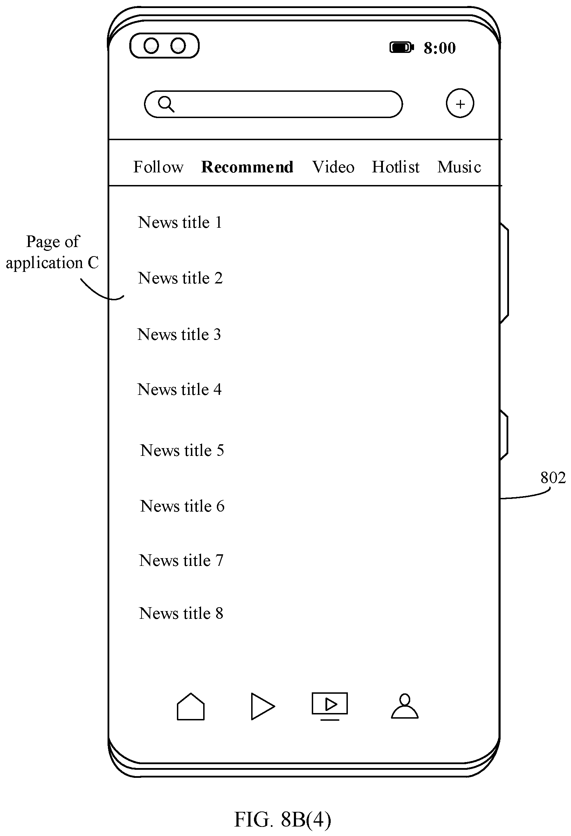

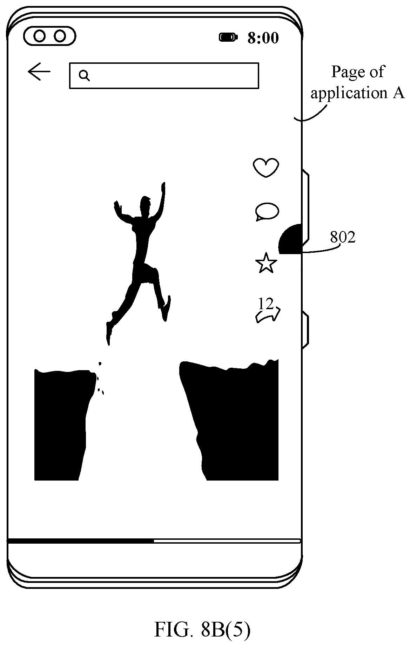

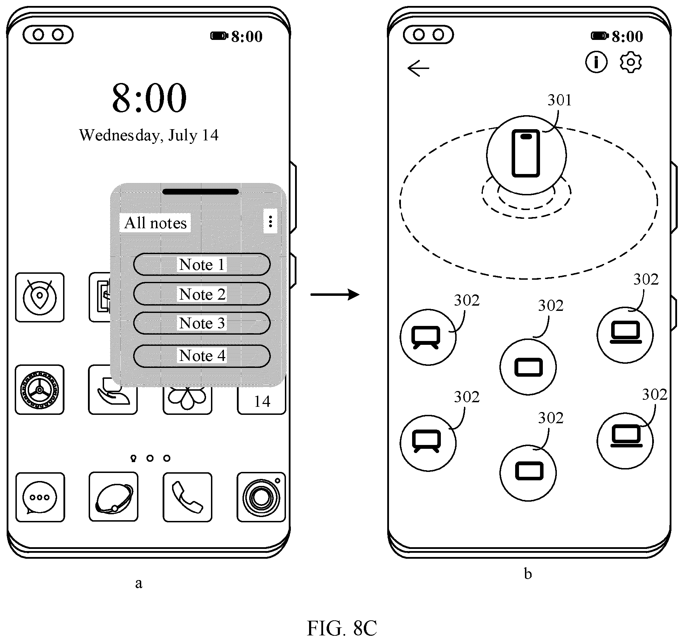

The application displayed by using the floating window may correspond to the foregoing small-window application. The sixth application may be a video application, or may be another type of application. This is not limited in this embodiment of this application. The second control may correspond to the zoom-out small-window application, or may be referred to as a floating ball. The fourth interface may correspond to the interface shown in FIG. 8A(1) to FIG. 8A(4) or FIG. 8B(1) to FIG. 8B(5).

It may be understood that task transferring is not performed on the small-window application. After task transferring, the small-window application is zoomed out to the screen edge. Display of the small-window application may be restored by using the zoom-out small-window application.

Optionally, the fifth interface further includes a second floating window, and the second floating window displays a page of a seventh application; the sixth interface does not include an identifier of the seventh application, and the eighth interface further displays a third control; and the second floating window is displayed on the eighth interface in response to an operation performed by the user on the third control.

The application displayed by using the floating window may correspond to the foregoing small-window application. The seventh application may be a video application, or may be another type of application. This is not limited in this embodiment of this application. The third control may correspond to the zoom-out small-window application, or may be referred to as a floating ball. The eighth interface may correspond to the interface shown in FIG. 8A(1) to FIG. 8A(4) or FIG. 8B(1) to FIG. 8B(5). It may be understood that task transferring is not performed on the small-window application. After task transferring, the small-window application is zoomed out to the screen edge. Display of the small-window application may be restored by using the zoom-out small-window application.

Optionally, the master device is any one of a mobile phone, a computer, and a tablet, the first slave device is a large screen, and the fourth interface includes the page of the first application.

When the slave device is a large screen, task transferring is performed on the first application in a same-source screen projection manner. Before and after task transferring in same-source screen projection, a page of an application remains unchanged, and displayed content is the same. A page displayed on the slave device is the same as a page displayed on the master device.

Optionally, the first interface further includes a page of a fourth application, and when the page of the fourth application and the page of the first application are displayed in split-screen mode, the fourth interface does not include the page of the fourth application.

In a split-screen display scenario, before and after task transferring in same-source screen projection, a page of an application remains unchanged, and displayed content is the same. A page displayed on the slave device is the same as a page displayed on the master device.

Optionally, the master device is any one of a mobile phone, a computer, and a tablet, the first slave device is a large screen, and the page of the second application included on the fifth interface and the page of the second application included on the eighth interface are a same page.

When the slave device is a large screen, task transferring is performed on the second application in the same-source screen projection manner. Before and after task transferring in same-source screen projection, a page of an application remains unchanged, and displayed content is the same. A page displayed on the slave device is the same as a page displayed on the master device.

Optionally, the page of the first application is a page for playing a video.

Optionally, the method further includes: The master device displays a ninth interface, where the ninth interface includes a page of an eighth application; the master device receives a seventh operation; the master device displays a tenth interface in response to the seventh operation, where the tenth interface includes a device identifier of a second slave device; the master device receives an eighth operation for the device identifier of the second slave device; and the master device displays an eleventh interface in response to the eighth operation, where the eleventh interface includes a device identifier of the master device and the device identifier of the second slave device, and the device identifier of the master device is connected to the device identifier of the second slave device.

The ninth interface is a page of an application, and may correspond to the interface shown in FIG. 6A(1) or FIG. 6C(1), or another page on which a foreground application runs. The seventh operation is similar to the first operation. For details, refer to the foregoing description of the first operation. Details are not described herein again. The tenth interface may correspond to a control center page not in a collaboration state. The eleventh interface may correspond to a control center page in collaboration. The eighth operation is used to select the device identifier of the second slave device, and may be a tap operation or a drag-and-drop operation. A specific type of the eighth operation is not limited in this embodiment of this application.

In this embodiment of this application, the connection may be a connection, and may be with a relatively close distance (next to or the like). This is not limited herein.

In this way, the control center page may further implement a collaboration connection between the master device and the slave device.

Optionally, the eighth operation is an operation of dragging the device identifier of the second slave device to the vicinity of the device identifier of the master device.

In this way, the vicinity of the device identifier of the master device may be understood as a case in which a distance away from the device identifier of the master device is less than a third threshold.

In this way, a slave device collaborating with the master device is selected by dragging a device identifier of the slave device to the vicinity of the device identifier of the master device, so that an operation is simple and easy to understand.

Optionally, the tenth interface further includes an identifier of the eighth application, and the eleventh interface does not include the identifier of the eighth application.

It may be understood that an identifier of an application is displayed on a control center page not in a collaboration state, and task transferring can be performed. The control center page in collaboration does not display an identifier of an application, and task transferring cannot be performed.

Optionally, the eleventh interface further includes a first identifier, and the first identifier indicates a collaboration type between the master device and the second slave device.

The first identifier may correspond to same-source screen projection, screen extension, screen mirroring, keyboard and mouse sharing, and the like.

In this way, it is convenient for the user to confirm the collaboration type between the master device and the slave device, thereby improving user experience.

Optionally, the eleventh interface further includes a second identifier, and the method further includes: The master device receives a ninth operation for the second identifier; and the master device and the second slave device switch to a collaboration type corresponding to the second identifier in response to the ninth operation.

The second identifier may correspond to collaboration types such as same-source screen projection, screen extension, screen mirroring, and keyboard and mouse sharing. The ninth operation may be a tap operation, a touch operation, or the like. The ninth operation is not limited in this embodiment of this application.

In this way, the user can adjust the collaboration type between the master device and the slave device by using the second identifier, and switch a collaboration manner, thereby improving user experience.

Optionally, the eleventh interface further includes a fourth control, and the method further includes: The master device receives a tenth operation for the fourth control; the master device disconnects from the second slave device in response to the tenth operation; and the master device displays a twelfth interface, where the twelfth interface includes the device identifier of the master device and the device identifier of the second slave device, and the device identifier of the master device is not connected to the device identifier of the second slave device.

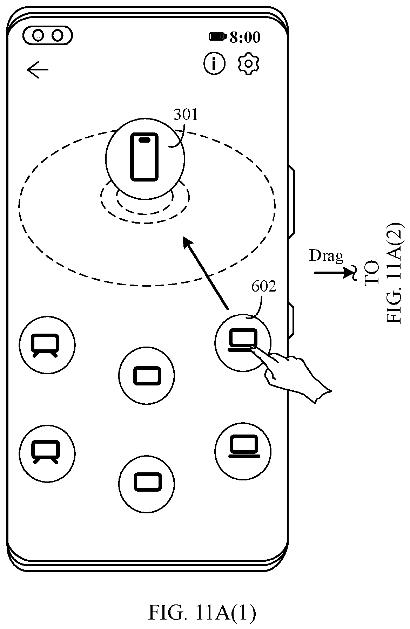

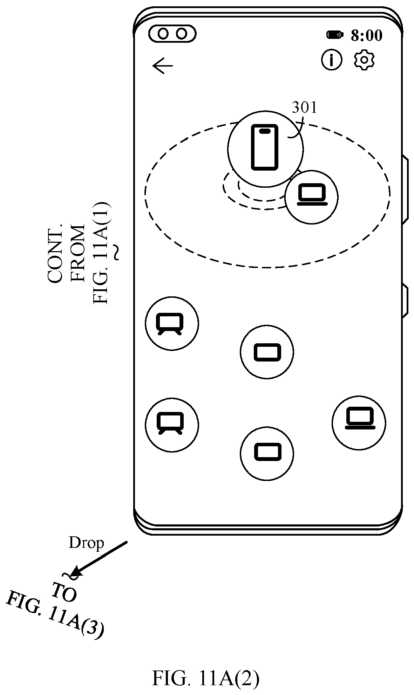

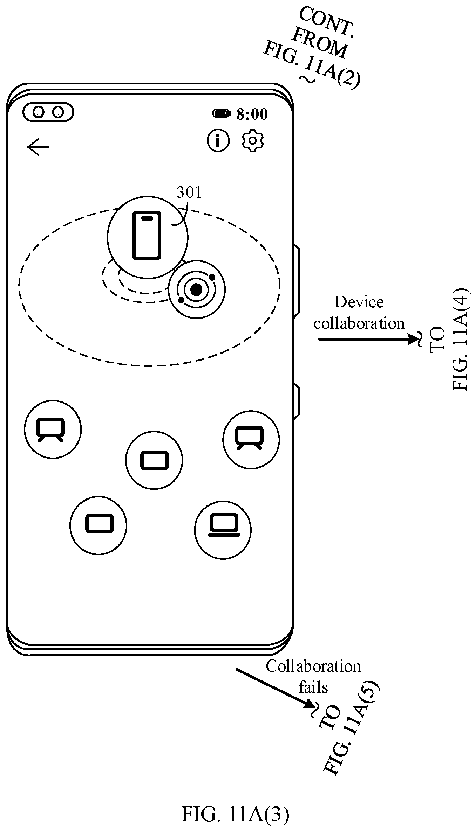

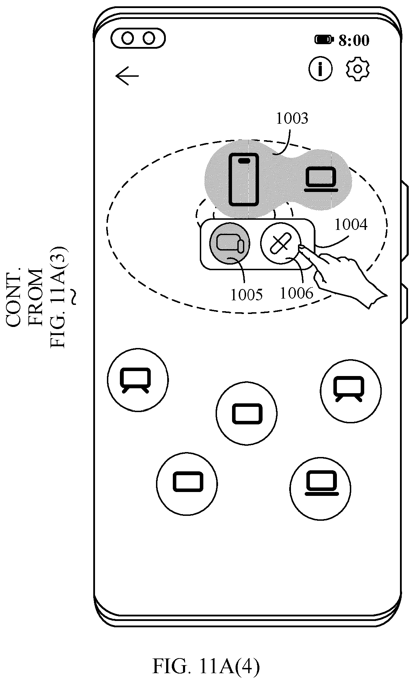

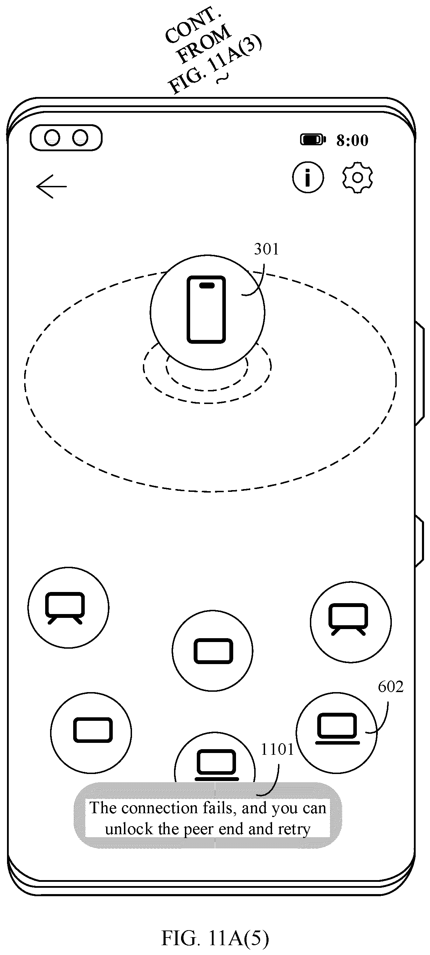

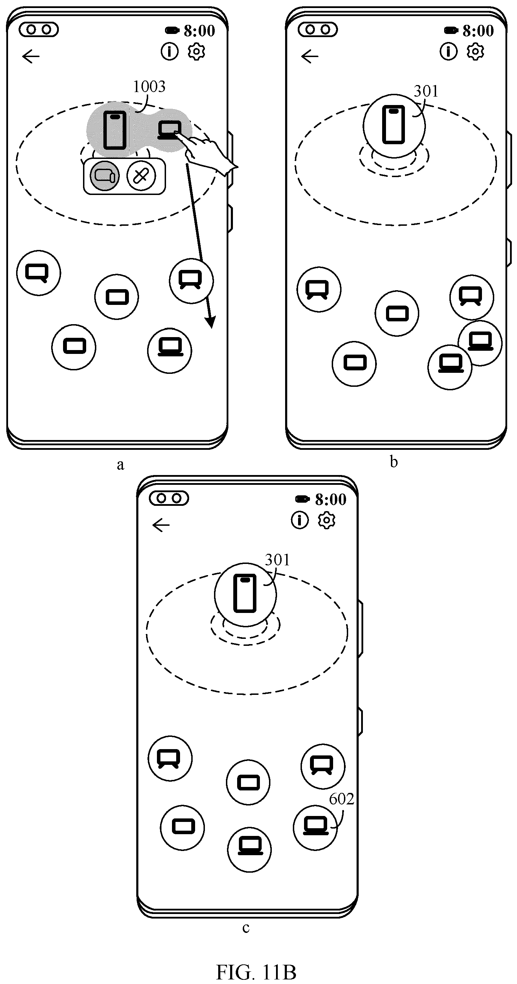

The twelfth interface is a control center page after the collaboration connection is disconnected, and may correspond to the interface shown in FIG. 11A(1) to FIG. 11A(5). The fourth control may correspond to a disconnect control (button). The tenth operation may be a tap operation, a touch operation, or another type of operation. This is not specifically limited in this embodiment of this application.

In this way, a connection between the master device and the slave device can be disconnected by using the fourth control, to disable collaboration, so that an operation is simple and convenient.

Optionally, the method further includes: The master device receives an eleventh operation for the device identifier of the second slave device on the eleventh interface; the master device disconnects from the second slave device in response to the eleventh operation; and the master device displays a thirteenth interface, where the thirteenth interface includes the device identifier of the master device and the device identifier of the second slave device, and the device identifier of the master device is not connected to the device identifier of the second slave device.

The thirteenth interface is a control center page after the collaboration connection is disconnected, and may correspond to the interface shown in FIG. 11B. The eleventh operation may be a drag-and-drop operation or another type of operation. This is not specifically limited in this embodiment of this application.

In this way, a connection between the master device and the slave device is disconnected in a drag-and-drop manner, to disable collaboration, so that an operation is simple and convenient.

Optionally, the eleventh interface further includes an identifier of a third slave device, and the device identifier of the master device is not connected to the device identifier of the third slave device; and the method further includes: The master device receives a twelfth operation for the device identifier of the third slave device on the eleventh interface; in response to the twelfth operation, the master device disconnects from the second slave device, and establishes a connection to the third slave device; and the master device displays a fourteenth interface, where the fourteenth interface includes the device identifier of the master device, the device identifier of the second slave device, and the identifier of the third slave device, the device identifier of the master device is connected to the device identifier of the third slave device, and the device identifier of the master device is not connected to the device identifier of the second slave device.

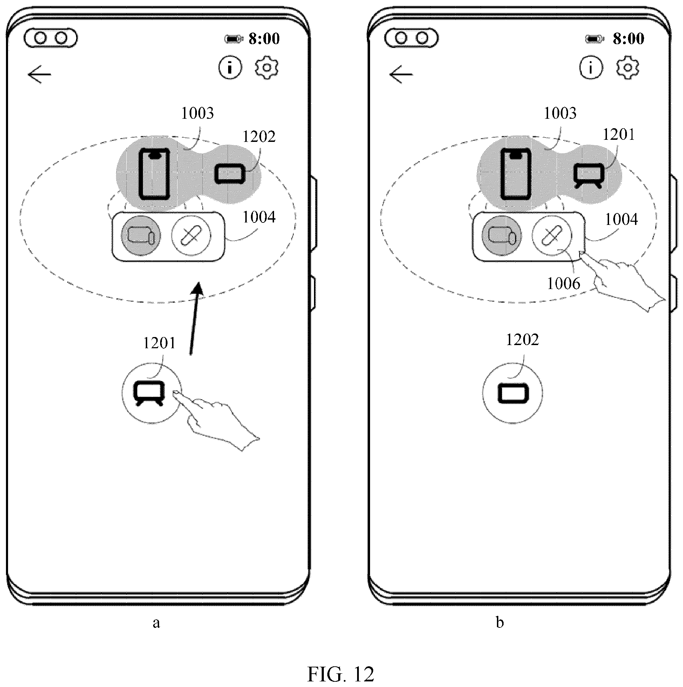

The twelfth operation is used to switch a slave device connected to the master device. The twelfth operation may be an operation of dragging the device identifier of the third slave device, or may be another type of operation. This is not limited in this embodiment of this application. The fourteenth interface may correspond to the interface shown in FIG. 12.

In this way, the master device can switch a collaboration slave device, thereby improving user experience.

Optionally, the collaboration type includes any one of the following types: same-source screen projection, screen extension, screen mirroring, and keyboard and mouse sharing.

According to a second aspect, an embodiment of this application provides an electronic device, and the electronic device includes a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The electronic device includes a processor and a memory. The memory stores computer-executable instructions. The processor executes the computer-execution instructions stored in the memory, to enable the electronic device to perform the method according to the first aspect.

According to a third aspect, an embodiment of this application provides a computer-readable storage medium, and the computer-readable storage medium stores a computer program. When the computer program is executed by a processor, the method according to the first aspect is implemented.

According to a fourth aspect, an embodiment of this application provides a computer program product, and the computer program product includes a computer program. When the computer program is run, a computer is enabled to perform the method according to the first aspect.

According to a fifth aspect, an embodiment of this application provides a chip. The chip includes a processor, and the processor is configured to invoke a computer program in a memory to perform the method according to the first aspect.

It should be understood that the technical solutions of the second aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF DRAWINGS

FIG. 1 is a schematic diagram of a hardware structure of a terminal device according to an embodiment of this application;
FIG. 2 is a schematic diagram of a software structure of a terminal device according to an embodiment of this application;
FIG. 3 is a schematic diagram of an interface of a control center page according to an embodiment of this application;
FIG. 4A(1) to FIG. 4A(3) are a schematic diagram of an interface of accessing a control center page according to an embodiment of this application;
FIG. 4B(1) to FIG. 4B(3) are a schematic diagram of an interface of hiding a control center card according to an embodiment of this application;
FIG. 4C is a schematic diagram of an interface of a control center card according to an embodiment of this application;
FIG. 5 is a schematic diagram of another interface of accessing a control center page according to an embodiment of this application;
FIG. 6A(1) to FIG. 6A(6) are a schematic diagram of an interface of task transferring according to an embodiment of this application;
FIG. 6B is a schematic diagram of an interface of a slave device according to an embodiment of this application;
FIG. 6C(1) to FIG. 6C(6) are a schematic diagram of another interface of task transferring according to an embodiment of this application;
FIG. 6D is a schematic diagram of an interface of a slave device according to an embodiment of this application;
FIG. 6E(1) to FIG. 6E(6) are a schematic diagram of still another interface of task transferring according to an embodiment of this application;
FIG. 6F is a schematic diagram of an interface of a slave device according to an embodiment of this application;
FIG. 7A(1) to FIG. 7A(6) are a schematic diagram of an interface of task transferring during split-screen display according to an embodiment of this application;
FIG. 7B(1) to FIG. 7B(6) are a schematic diagram of another interface of task transferring during split-screen display according to an embodiment of this application;
FIG. 7C(1) to FIG. 7C(6) are a schematic diagram of still another interface of task transferring during split-screen display according to an embodiment of this application;
FIG. 7D is a schematic diagram of an interface of a slave device according to an embodiment of this application;
FIG. 8A(1) to FIG. 8A(4) are a schematic diagram of an interface of task transferring with a small-window application according to an embodiment of this application;
FIG. 8B(1) to FIG. 8B(5) are a schematic diagram of another interface of task transferring with a small-window application according to an embodiment of this application;
FIG. 8C is a schematic diagram of still another interface of task transferring with a small-window application according to an embodiment of this application;
FIG. 9A to FIG. 9D are a schematic diagram of an interface on which task transferring fails according to an embodiment of this application;
FIG. 10A to FIG. 10D are a schematic diagram of an interface of device collaboration according to an embodiment of this application;
FIG. 11A(1) to FIG. 11A(5) are a schematic diagram of an interface of establishing a device collaboration connection according to an embodiment of this application;
FIG. 11B is a schematic diagram of an interface of disconnecting a device collaboration connection according to an embodiment of this application;
FIG. 12 is a schematic diagram of an interface of switching a collaboration device according to an embodiment of this application;
FIG. 13A is a schematic diagram of an interface of a master device according to an embodiment of this application;
FIG. 13B is a schematic diagram of an interface of a master device according to an embodiment of this application;
FIG. 14 is a schematic diagram of an interface of a master device according to an embodiment of this application;
FIG. 15A and FIG. 15B are a schematic flowchart of a multi-device task transferring method according to an embodiment of this application; and
FIG. 16 is a schematic diagram of a structure of a multi-device task transferring apparatus according to an embodiment of this application.

### DESCRIPTION OF EMBODIMENTS

To clearly describe the technical solutions in the embodiments of this application, the following briefly describes some terms and technologies related to the embodiments of this application.
1. Multi-screen collaboration: A user interface of an electronic device A is projected to a screen of an electronic device B for display. In addition, a user is allowed to perform, on the electronic device B, an operation on the user interface of the electronic device A, and to perform a specific operation (for example, dragging a file from a user interface of the electronic device B to the user interface of the electronic device A) on the electronic device B to transmit a file in the electronic device B to the electronic device A, thereby implementing a cross-device operation and cross-device file transmission between the electronic device A and the electronic device B, and the like. The user interface of the electronic device A may be displayed in any region of the screen of the electronic device B, or may be displayed in full screen.
   The multi-screen collaboration in the embodiments of this application includes: same-source screen projection, screen extension, screen mirroring, keyboard and mouse sharing, and the like. At a same moment, one collaboration manner is used between any two devices.
2. Screen extension: The screen of the electronic device B is used as a secondary screen of the electronic device A, and the electronic device A may transfer some content that needs to be displayed by the electronic device A to the secondary screen for display. A screen of the electronic device A and the screen of the electronic device B can jointly display content, thereby extending a display capability of the electronic device A.
3. Screen mirroring: All content on the screen of the electronic device A is completely mirrored and displayed on the screen of the electronic device B. The content of the electronic device A that is displayed on the electronic device B is the same as the content displayed on the electronic device A, and changes with the content displayed on the electronic device A.
4. Keyboard and mouse sharing: The electronic device A and the electronic device B may share original input devices with each other, for example, a mouse and a keyboard. For example, an input device of the electronic device A is shared with the electronic device B, and the shared input device may perform input on the electronic device A and the electronic device B. In addition, in a keyboard and mouse sharing type, file transmission may be further performed between the electronic device A and the electronic device B.
5. Handoff: A user runs an application on the electronic device A. On the interface of the electronic device B, the user may be prompted to open, on the electronic device B, the application running on the electronic device A, to transfer the application to the electronic device B for a handoff operation. Alternatively, the user runs an application on the electronic device A. When the user opens the application on the electronic device B, an application progress on the electronic device B is the same as a progress on the electronic device A. That is, the progress of the application running on the electronic device A is synchronized with the electronic device B, for example, watching a video and editing a document. For example, a document application is running on the electronic device A, and the document application may be a memo, word, or the like. The user is editing a document on the electronic device A. When the electronic device B is close to the electronic device A, prompt information is displayed on the electronic device B, and the user taps the prompt information on the electronic device B. In response to a tap operation of the user, the electronic device B opens the document application and displays a location at which the user is editing, so that the document is transferred to the electronic device B for continuous editing and the like.
6. Single-window application screen projection (different-source screen projection): The electronic device A uses two-channel encoding, and one of the two-channel encoding displays a default interface (that is, is displayed on a display screen of the electronic device A). The other-channel encoding sends, to the electronic device B, a standard video stream corresponding to a screen projection application interface rendered on a virtual screen.
   It may be understood that, by using an example in which different-source screen projection is performed on an application A, the user may perform a close operation on a window of the application A on the electronic device B and perform controlling such as switching a page displayed in the window of the application A, and cannot control another application in the electronic device A.
7. Same-source screen projection: Content (for example, a video and a photo) on the screen of the electronic device A is delivered to the screen of the electronic device B for display. In a same-source screen projection scenario, both the electronic device A and the electronic device B display an interface displayed by the electronic device A.

Alternatively, it may be understood that, in a screen extension manner, interfaces of a plurality of applications started on the electronic device A are projected to the electronic device B. In a same-source screen projection manner, the electronic device A sends, to the electronic device B by using one-channel encoding, the screen projection application interface rendered on the virtual screen and a video stream corresponding to the default interface, to display, on a display screen of the electronic device B, the default interface and interfaces of one or more screen projection applications started in a free floating window form on the electronic device A. The default interface may be understood as an interface displayed by the electronic device A.

In some embodiments, the electronic device B may reversely control the electronic device A. For example, a PC may reversely control a mobile phone.

It may be understood that continuity of an application can be ensured in the same-source screen projection manner. However, in a different-source screen projection manner, the application needs to be restarted when being switched between different screens.

Device collaboration: A master device and a slave device are collaboratively connected. Task transferring: A task is transferred to the slave device, but no collaboration is performed between devices.

### 8. Other terms:

In the embodiments of this application, words such as "first" and "second" are used to distinguish between same items or similar items with basically the same functions and effects. For example, a first chip and a second chip are merely intended to distinguish between different chips, and are not intended to limit a sequence of the first chip and the second chip. A person skilled in the art may understand that the words such as "first" and "second" do not limit a quantity and an execution sequence, and the words such as "first" and "second" do not indicate a definite difference.

It should be noted that the words such as "example" or "for example" in the embodiments of this application are used to indicate an example, an illustration, or a description. Any embodiment or design solution described as an "example" or "for example" in this application should not be explained as being more preferred or having more advantages than other embodiments or design solutions. Exactly, use of the words such as "example" or "for example" is intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a--c, b-c, or a-b-c, where a, b, and c may be singular or plural.

### 9. Terminal device

A terminal device in the embodiments of this application may also be an electronic device in any form. For example, the electronic device may include a handheld device with an image processing function, an onboard device, or the like. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, a terminal device in a 5G network, a terminal device in a future evolved public land mobile network (public land mobile network, PLMN), and the like. This is not limited in the embodiments of this application.

As an example rather than a limitation, in embodiments of this application, the electronic device may alternatively be a wearable device. The wearable device may also be referred to as a wearable smart device, and is a generic term for wearable devices such as glasses, gloves, watches, clothing, and shoes that are intelligently designed and developed from daily wear by using wearable technologies. The wearable device is a portable device that is worn directly on a body or integrated into clothing or accessories of a user. The wearable device is not merely a hardware device, but can implement powerful functions through software support, data interaction, and cloud interaction. In a broad sense, the wearable smart device includes a full-featured and large-size device that can implement all or some of functions without relying on a smartphone, for example a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may also be a terminal device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The electronic device in the embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

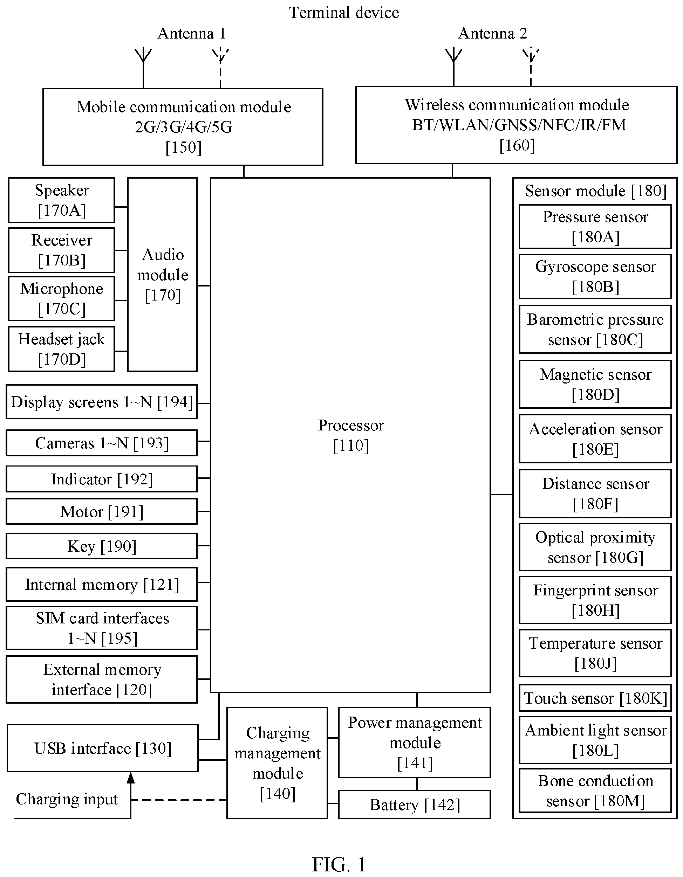

For example, FIG. 1 is a schematic diagram of a structure of a terminal device.

The terminal device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the terminal device. In some other embodiments of this application, the terminal device may include more or fewer parts than those shown in the figure, some parts may be combined, some parts may be split, or a different part arrangement may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship among the modules shown in this embodiment of the present invention is merely an example for description, and does not constitute a limitation on the structure of the terminal device. In some other embodiments of this application, the terminal device may alternatively use an interface connection manner different from that in the foregoing embodiment, or use a combination of a plurality of interface connection manners.

The terminal device implements a display function by using the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change displayed information.

The terminal device may implement a shooting function by using the ISP, the camera 193, the video codec, the GPU, the display screen 194, the application processor, and the like.

The external memory interface 120 may be configured to be connected to an external memory card such as a Micro SD card, to expand a storage capacity of the terminal device. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and an address book) created during use of the terminal device, and the like. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various functional applications and data processing of the terminal device by running instructions stored in the internal memory 121 and/or instructions stored in the memory disposed in the processor. For example, the multi-device task transferring method in the embodiments of this application may be performed.

It may be understood that the structure shown in this embodiment of this application does not constitute a specific limitation on the terminal device. In some other embodiments of this application, the terminal device may include more or fewer parts than those shown in the figure, some parts may be combined, some parts may be split, or a different part arrangement may be used. The components shown in the figure may be implemented by using hardware, software, or a combination of software and hardware.

A software system of the terminal device may use a layered architecture, an event-driven architecture, a microkernel architecture, a micro-service architecture, or a cloud architecture. In the embodiments of this application, an Android system with a layered architecture is used as an example to describe a software structure of the terminal device.

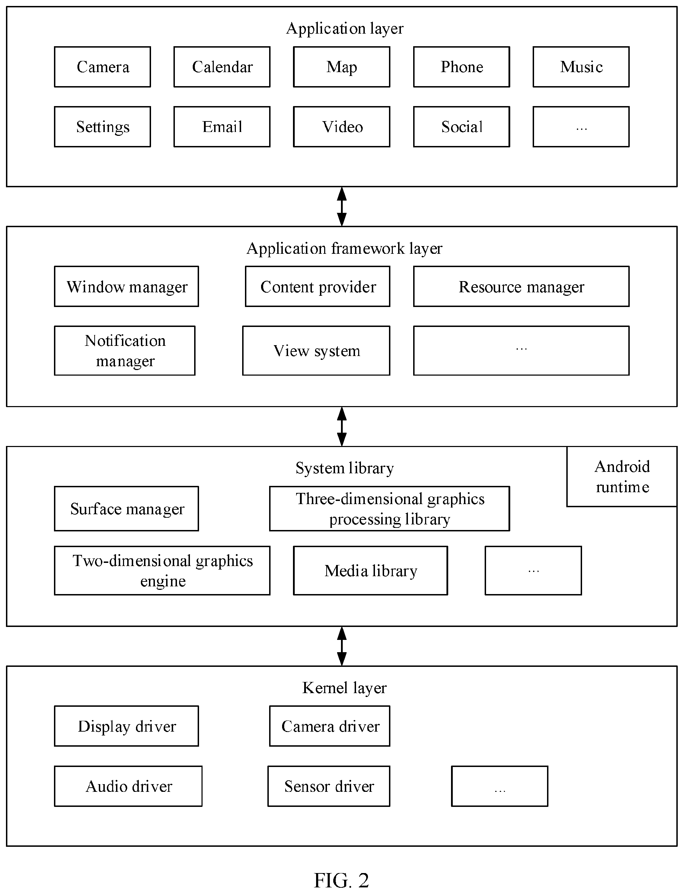

FIG. 2 is a block diagram of a software structure of the terminal device according to an embodiment of this application. In the layered architecture, software is divided into several layers, and each layer has a clear role and task. The layers communicate with each other through software interfaces. In some embodiments, the Android system may be divided into four layers that are respectively an application (applications) layer, an application framework (application framework) layer, an Android runtime (Android runtime) and system library, and a kernel (kernel) layer.

The application layer may include a series of application packages. The application layer runs an application by invoking an application programming interface (application programming interface, API) provided by the application framework layer. As shown in FIG. 2, the application package may include applications such as Camera, Calendar, Phone, Map, Phone, Music, Settings, Email, Videos, Social, and the like.

The application framework layer provides an application programming interface (application programming interface, API) and a programming framework for the applications at the application layer. The application framework layer includes some predefined functions.

As shown in FIG. 2, the application framework layer may include a window manager, a content provider, a resource manager, a view system, a notification manager, and the like.

The window manager is configured to manage a window program. The window manager may obtain a size of a display screen, determine whether there is a status bar, lock a screen, touch a screen, drag a screen, capture a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to construct an application. A display interface may include one or more views. For example, a display interface including an SMS message notification icon may include a view for displaying text and a view for displaying a picture.

The resource manager provides various resources for an application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the terminal device vibrates, or an indicator light blinks.

The Android runtime includes a kernel library and a virtual machine. The Android runtime is responsible for scheduling and management of an Android system.

The kernel library includes two parts: One part is a functional function that needs to be invoked in a java language, and the other part is an Android kernel library.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playing and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display driver, a camera driver, an audio driver, and a sensor driver.

It should be understood that, in some embodiments, a layer that implements a same function may be referred to as another name, or a layer that can implement functions of a plurality of layers may be used as one layer, or a layer that can implement functions of a plurality of layers may be divided into a plurality of layers. This is not limited in this embodiment of this application.

Multi-device collaboration is a distribution technology applied to a plurality of electronic devices. By using the multi-device collaboration technology, cross-system and cross-device collaboration can be performed between two or more electronic devices, to implement resource sharing and collaboration operations.

The multi-device collaboration may be applied to electronic devices of a same type or different types. Types of electronic devices include but are not limited to devices such as a mobile phone, a tablet computer, a notebook computer, a large-screen device (for example, a smart television or a smart screen), a personal computer (personal computer, PC), a handheld computer, a netbook, a personal digital assistant (personal digital assistant, PDA), a wearable electronic device, an onboard device, and a virtual reality device. The mobile phone in the embodiments of this application may be a foldable mobile phone, or may be a non-foldable mobile phone, which is not limited herein.

The multi-device collaboration needs to be implemented based on a communication connection between devices. The communication connection may be a wired communication connection, or may be a wireless communication connection. Solutions for the wired communication connection may include, for example, a USB On-The-Go (OTG) technology. Solutions for wireless communication may include, for example, wireless fidelity (wireless fidelity, Wi-Fi), Wi-Fi direct (Wi-Fi Direct), Bluetooth (bluetooth, BT), a near field communication (near field communication, NFC) technology, and an infrared (infrared, IR) technology.

With continuous development of terminal technologies, a plurality of different collaboration types (also referred to as collaboration services) have emerged for the multi-device collaboration, for example, screen extension, screen projection, screen mirroring, multi-screen collaboration, keyboard and mouse sharing, and super keyboard and mouse. In the plurality of collaboration types listed above, some collaboration types are initiated by a master device (usually an initiator of multi-device collaboration) to a slave device (usually a participant of the multi-device collaboration) in response to a user operation, and thus may be referred to as manual collaboration services or manual collaboration businesses, for example, screen extension, a screen projection, screen mirroring, a multi-screen collaboration, and keyboard and mouse sharing. Some other collaboration types are automatically triggered when a triggering rule is satisfied in a state that a user enables a function, and thus may be referred to as automatic collaboration services or automatic collaboration businesses, for example, super-handoff.

For two electronic devices, a collaboration type supported by the two electronic devices is usually related to factors such as a device type, a screen size, and a device capability. Therefore, the two electronic devices may support only one collaboration type, or may support a plurality of collaboration types.

In a conventional solution, an application for performing task transferring in a terminal device is a video application, and a type of the application for performing transferring is single. In addition, when task transferring is performed, smart transferring cannot be implemented for different devices. Consequently, user experience is poor.

In view of this, embodiments of this application provide a multi-device task transferring method. Based on a type of a slave device and an application type, different transferring manners are adapted for smart transferring, to reduce user memory costs, and improve user experience.

To enable a person skilled in the art to understand the technical solutions of the embodiments of this application, electronic devices that may be included in various scenarios of multi-device collaboration are classified in this embodiment of this application. The electronic devices include but are not limited to being classified into: a master device and a slave device.

The master device includes a device currently handheld by a user. The user may perform an operation on the master device, to initiate multi-device collaboration and task transferring to another device. In this case, the master device is usually a device initiating the multi-device collaboration and task transferring. The multi-device task transferring method provided in embodiments of this application may be implemented in the master device.

The slave device includes a device that is located near the master device and that logs in a same account as the master device. The master device and the slave device are usually electronic devices manufactured by a same manufacturer. For example, the master device may be a mobile phone manufactured by a manufacturer A, and the slave device may be a tablet computer, a large-screen device, or the like manufactured by the manufacturer A. Accounts that the master device and the slave device log in may be accounts that the user applies from the device manufacturer.

The multi-device task transferring method provided in embodiments of this application may be implemented in the master device. For example, the master device may perform the steps of the multi-device task transferring method in response to one or more operations performed by the user.

The following describes in detail the multi-device task transferring method in embodiments of this application by using specific embodiments. The following embodiments may be combined with each other or separately implemented, and same or similar concepts or processes may not be described in some embodiments.

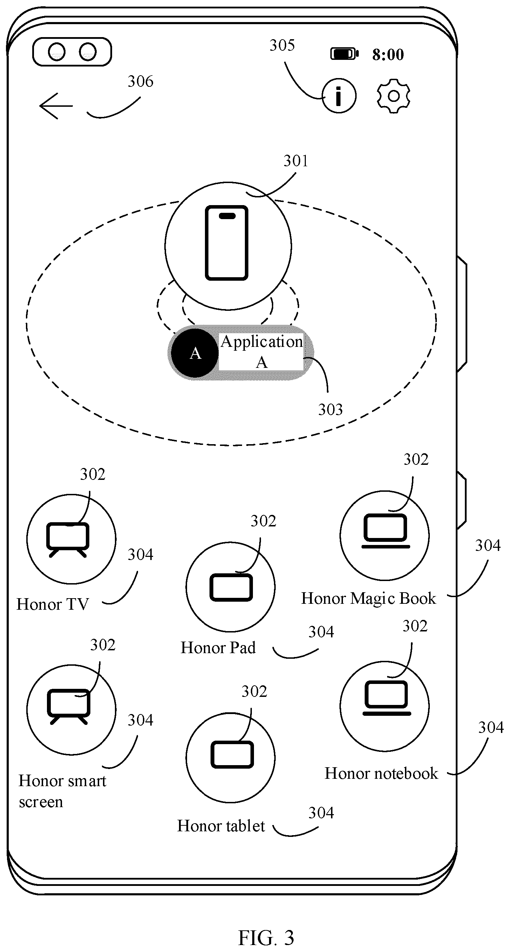

The following describes a control center page provided in an embodiment of this application with reference to FIG. 3. An example of the control center page shown in FIG. 3 is as follows: In a process in which a master device runs an application A, the master device detects a preset gesture of a user, and displays the control center page shown in FIG. 3, and the page shown in FIG. 3 includes an identifier of the application A. The preset gesture may be three-finger upward sliding on a screen, upward sliding from the bottom of the screen, or the like. This is not limited in this application. Alternatively, in another possible implementation, in a process in which the master device runs the application A, the master device detects that the user opens a notification center, for example, slides downward from the top to open a pull-down menu of the notification center. The pull-down menu may include a card for the user to access a control center. When detecting that the user taps the card, the master device may display the control center page shown in FIG. 3, or may display another control center page. The another control center page does not include the identifier of the application A.

As shown in FIG. 3, the control center page includes a device identifier 301 of the master device, a device identifier 302 of a slave device, and a task identifier 303. The device identifier may be a device identifier of a tablet computer, a device identifier of a large-screen device, a device identifier of a PC, a device identifier of a mobile phone, or the like. The task identifier 303 indicates the identifier of the application A running on the master device.

The device identifier 301 of the master device and the device identifier 302 of the slave device may be graphical identifiers, for example, icons or other skeuomorphic elements.

In some embodiments, on the control center page, the device identifier 301 of the master device and the device identifier 302 of the slave device may be in different colors, so that the user can distinguish between them. For example, the device identifier 301 of the master device may be blue, and the device identifier 302 of the slave device may be white (or in a transparent color). In addition, on the control center page, the device identifier 301 of the master device and the device identifier 302 of the slave device may be in different sizes, so that the user can distinguish between them. For example, the device identifier 301 of the master device may have a larger size than the device identifier 302 of the slave device.

In a scenario in which no multi-device collaboration is established between the master device and the slave device, the control center page may include the device identifier 301 of the master device and device identifiers 302 of slave devices. The device identifier 301 of the master device may be located in a central region of the control center page, for example, located in a true center, a lower central region, or an upper central region of the control center page 300. This is not limited in this embodiment of this application. The device identifiers 302 of the slave devices may be distributed on a periphery of the device identifier of the master device. In some embodiments, the device identifier 302 of the slave device is located below the device identifier 301 of the master device.

For example, the device identifier 301 of the master device is located in the upper central region of the control center page. The device identifiers 302 of the slave devices, for example, a device identifier of a tablet computer, a device identifier of a large-screen device, a device identifier of a PC, and a device identifier of a mobile phone, may be evenly distributed in a semicircle below the device identifier 301 of the master device.

For a scenario in which multi-device collaboration is established between the master device and the slave device, refer to related descriptions in the following collaboration part. Details are not described herein.

The task identifier 303 may be a graphical identifier, for example, an icon or another skeuomorphic element. For example, an icon of an application may be used as the task identifier 303, or an application name may be used as the task identifier 303. This is not limited in this embodiment of this application.

In some embodiments, the control center page may further include device names 304 of the slave devices. The device name 304 may be displayed in collaboration with the device identifier 302 corresponding to the slave device. For example, the device name may be displayed above, below, or at another location of the device identifier 302 corresponding to the slave device. In this embodiment of this application, the device names 304 may be product names of the slave devices, for example, Honor TV, Honor Pad, and Honor Magic Book. The device names 304 may alternatively be user-defined names, for example, Honor pad of Xiao Li, and Honor smart screen in living room. This is not limited in this embodiment of this application.

It may be understood that, the task identifiers 303 may be distributed around the device identifier 301 of the master device, for example, may be distributed above the device identifier 301 of the master device, or may be distributed below the device identifier 301 of the master device. This is not limited in this embodiment of this application.

In some embodiments, the control center page further includes one or more function buttons, for example, a details button 305 and an exit button 306. The user may learn about a usage manner of the control center page by tapping the details button 305. The user may exit the control center page by tapping the exit button 306. The user may alternatively exit the control center page by using a shortcut operation such as a sideward sliding operation.

In this embodiment of this application, when the user drags the device identifier 302 of any slave device to the vicinity of the device identifier 301 of the master device, the master device establishes a connection to the slave device to perform a collaboration connection, and the like. When the user drags the task identifier 303 to the vicinity of the device identifier 302 of any slave device, the master device transfers an application corresponding to the task identifier to a corresponding slave device based on a type of the slave device, an application installation status of the slave device, and the like.

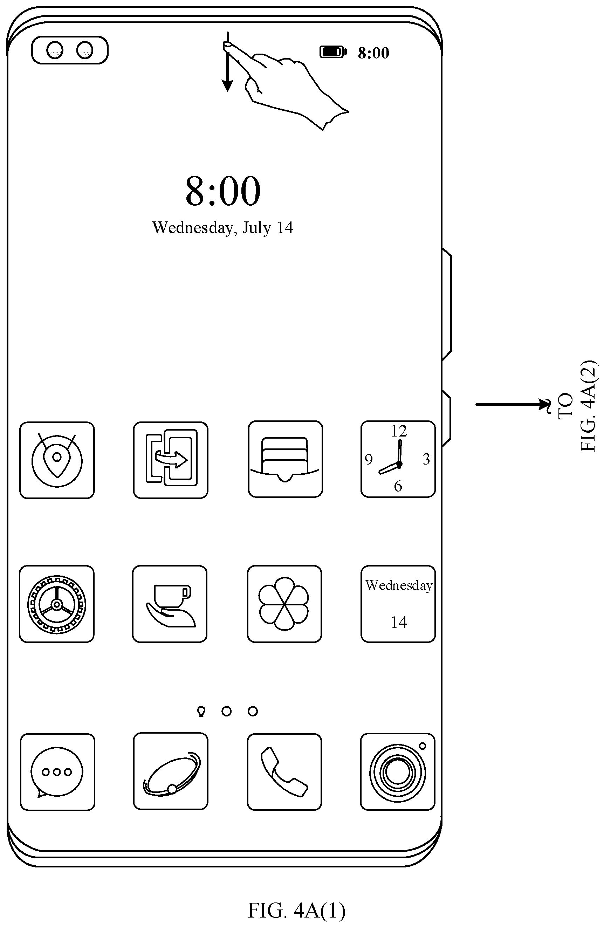

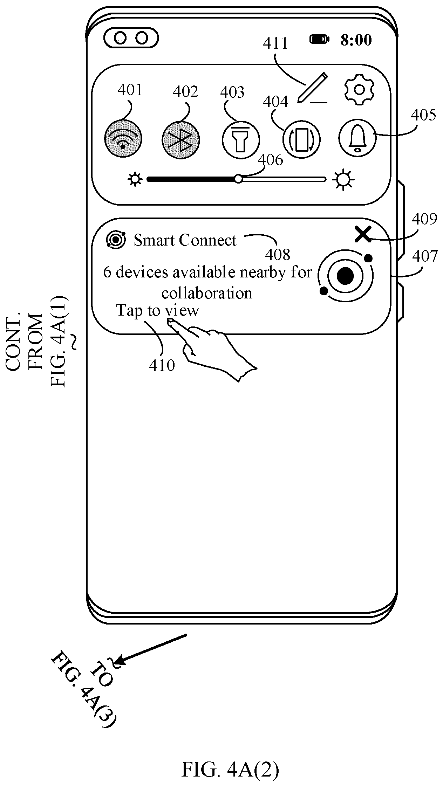

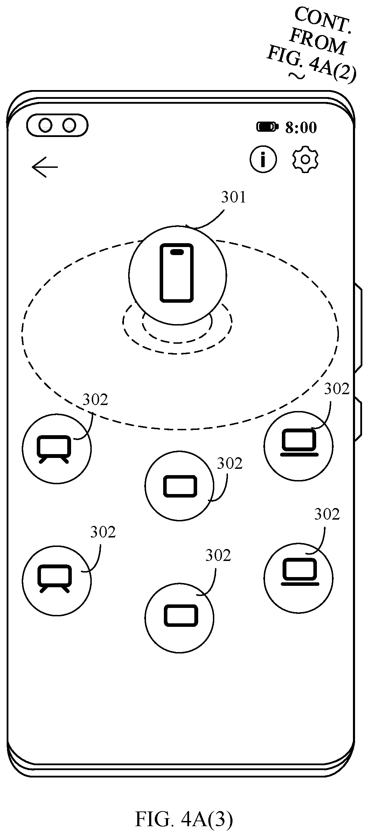

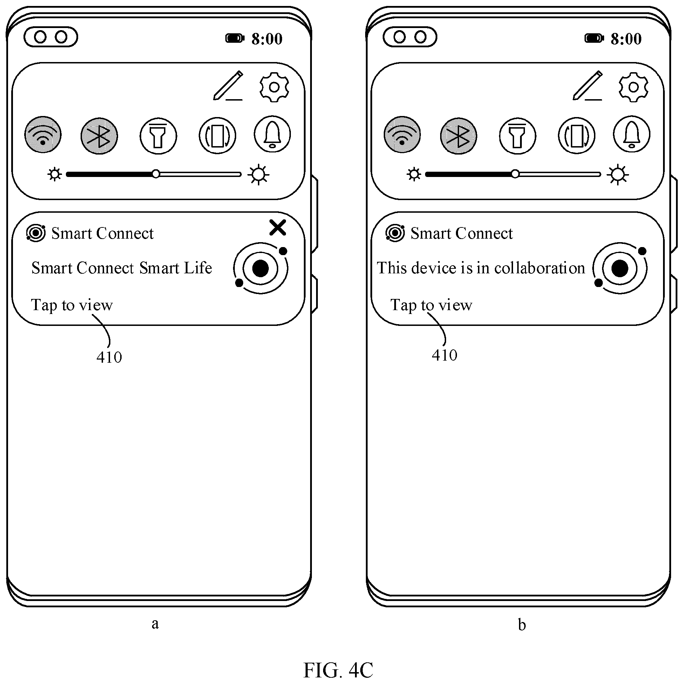

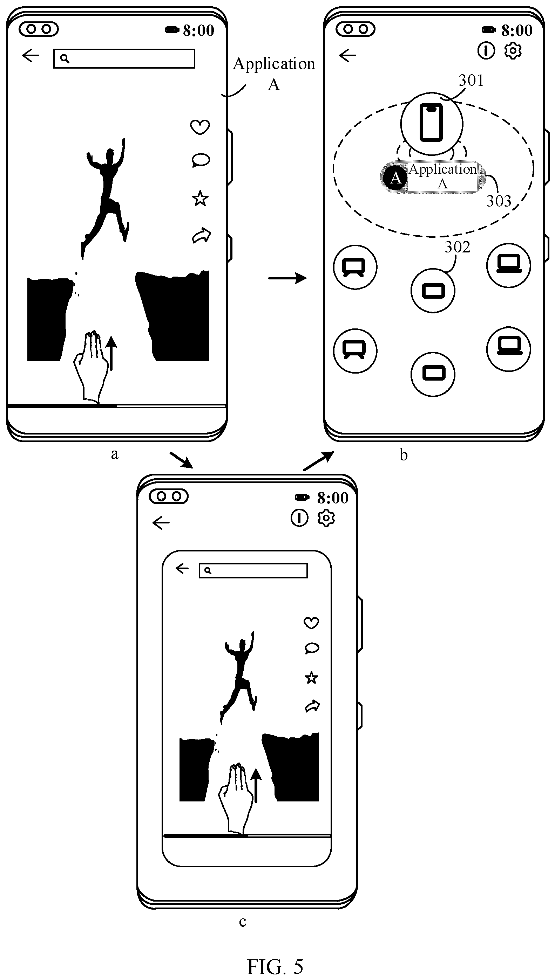

The following describes access manners of the control center page with reference to FIG. 4A(1) to FIG. 4A(3) to FIG. 5.

In this embodiment of this application, the user may access the control center page by using a control center card on the notification center page, or may access the control center page by using a shortcut operation. The shortcut operation may be three-finger upward sliding, or may be another type of shortcut operation. This is not limited in this embodiment of this application.

For example, that the master device is a mobile phone is used as an example. As shown in FIG. 4A(1) to FIG. 4A(3), when a finger of the user slides downward on a home screen shown in FIG. 4A(1), the master device receives an operation of accessing the notification center page, and accesses a notification center page shown in FIG. 4A(2). The notification center page includes one or more function on/off buttons, for example, a WLAN on/off button 401, a Bluetooth on/off button 402, a flashlight on/off button 403, a vibration on/off button 404, and a silent on/off button 405. When the user taps an on/off button, the master device may enable or disable a corresponding function.

The notification center page may further include one or more sliding controls, for example, a sliding control 406 configured to adjust brightness of a display screen. When the user drags a slider in the sliding control 406, the master device may adjust the brightness of the display screen.

The notification center page may further include a control center card 407. The control center card 407 may include a card name 408 and one or more tappable elements, for example, a hide icon 409 of the control center card 407 and an entry button 410 of the control center card 407. Specific content of the control center card 407 is described in detail below.

The above card name is merely an example of this application, and a function of Smart Connect may alternatively be named by another name. This is not limited in this application. For example, the name may be "HONOR Connect" or "Super Terminal". Therefore, the card name 408 displayed in the control center card 407 may be "HONOR Connect", "Super Terminal", or the like. Accordingly, a multi-device collaboration home page may alternatively be referred to as an HONOR Connect home page or a Super Terminal home page.

When the user taps the entry button 410 on the notification center page, the master device receives an operation of opening the control center, and accesses a control center page shown in FIG. 4A(3). The control center page includes the device identifier 301 of the master device and the device identifier 302 of the slave device.

In some embodiments, the notification center page further includes an edit button 411. The user may further display or hide the control center card 407 by using the edit button 411.

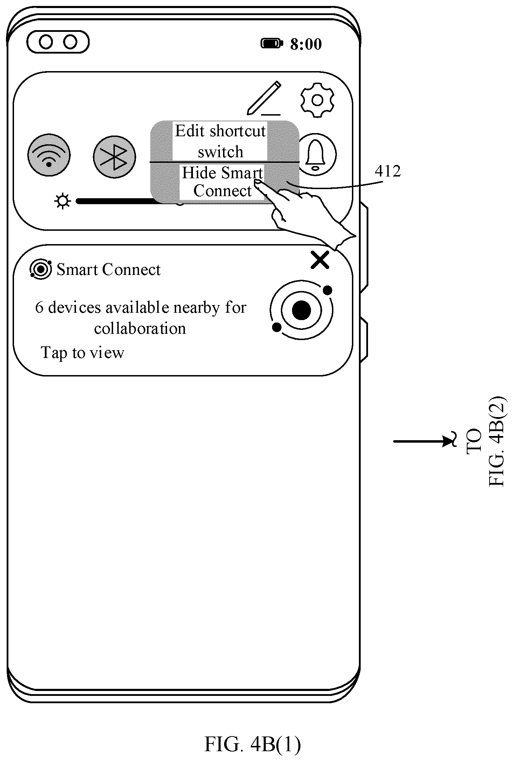

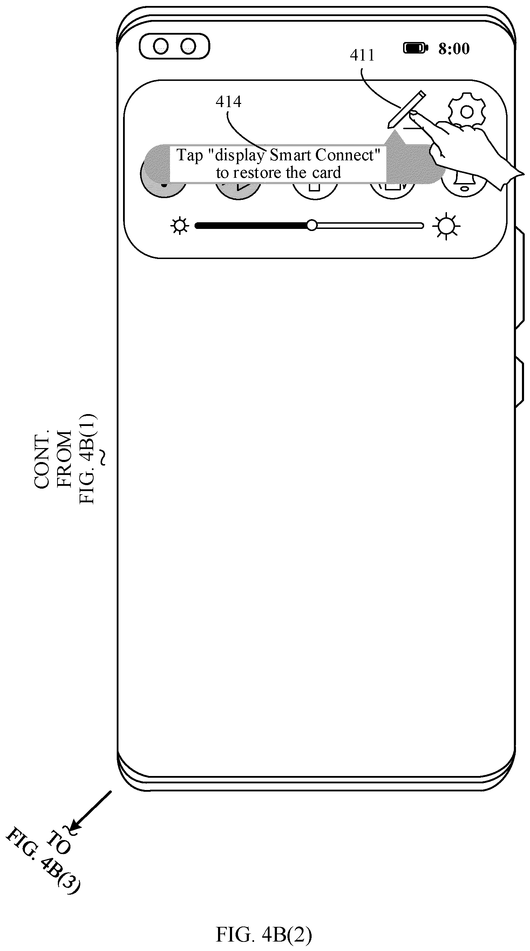

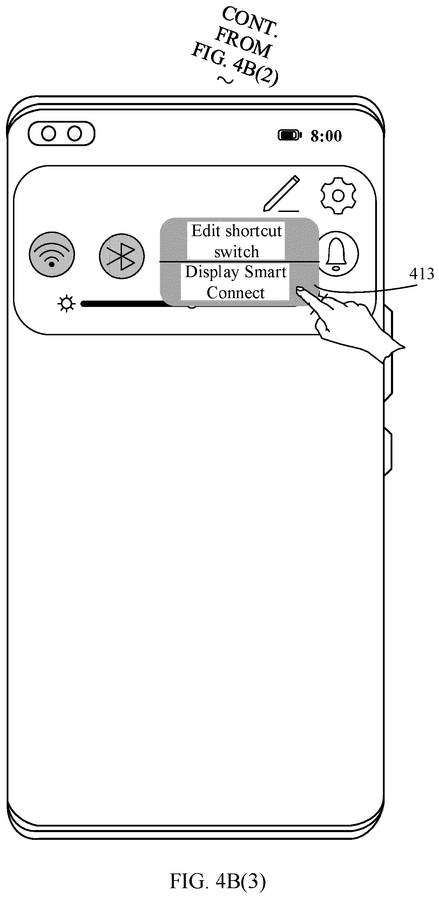

For example, when the user taps the edit button 411 on the page shown in FIG. 4A(2), the master device receives an operation of displaying an edit menu, and accesses a page shown in FIG. 4B(1). The edit menu on this page includes a hide button 412. When the user taps the hide button 412, the master device receives an operation of hiding the control center card, and accesses a page shown in FIG. 4B(2). The control center card is not displayed on this page.

When the user taps the edit button 411 on the page shown in FIG. 4B(2), the master device receives an operation of displaying an edit menu, and accesses a page shown in FIG. 4B(3). The edit menu on this page includes a display button 413. When the user taps the display button 413, the master device receives an operation of displaying the control center card, and accesses the page shown in FIG. 4A(2). The control center card is displayed on this page.

In some embodiments, when the user taps the hide icon 409 on the page shown in FIG. 4A(2), the master device receives an operation of hiding the control center card, and accesses the page shown in FIG. 4B(2).

In a possible implementation, the page shown in FIG. 4B(2) further includes a prompt message 414. The prompt message 414 is used to remind the user of an operation manner of calling out the control center card. The prompt message 414 may be a text message, for example: tap "display Smart Connect" to restore the card.

The prompt message 414 may be displayed in a form of a bubble, or may be displayed in a form of a toast message. A specific display form of the prompt message 414 is not limited in this embodiment of this application.

The prompt message 414 may disappear after being displayed for a period of time, or may disappear after any operation is received. In this way, blocking another button on the notification center page by the prompt message 414 can be reduced. A disappearance manner of the prompt message 414 is not limited in this embodiment of this application.

It may be understood that the prompt message 414 may be displayed only when the user hides the control center card for the first time by using the hide icon. The prompt message 414 may alternatively be displayed when the control center card is hidden by using the hide icon for the first N times. A specific display condition of the prompt message 414 is not limited in this embodiment of this application.

On a basis of the foregoing embodiment, the control center card 407 further displays a status of a collaboration function.

If the master device has found one or more slave devices when displaying the notification center page, the master device may directly display a search result on the control center card 407 when displaying the notification center page. For example, the control center card 407 may display a quantity of slave devices that have been found by the master device (as shown in FIG. 4A(2)), or may display device identifiers of one or more slave devices that have been found, or may display device names of the one or more slave devices that have been found. Adaptively, the user taps the entry button 410, and the master device displays the control center interface shown in FIG. 4A(3). The control center interface includes device identifiers of a corresponding quantity of slave devices.

If the master device finds no slave device or does not perform searching when displaying the notification center page, the master device may display, on the control center card 407, an interface element used to indicate a control center function when displaying the notification center page. For example, the control center card 407 may display a slogan of the control center, for example, "Smart Connect Smart Life" (as shown in part a of FIG. 4C).

If the master device is in collaboration with the slave device when displaying the notification center page, the master device may display, on the control center card 407, an interface element used to indicate the control center function when displaying the notification center page. For example, the control center card 407 may display a slogan of the control center, for example, "this device is in collaboration" (as shown in part b of FIG. 4C). In some embodiments, the control center card 407 does not include the hide icon 409 when the master device is in collaboration.

It may be understood that in the foregoing embodiment shown in FIG. 4A(1) to FIG. 4A(3)-FIG. 4C, when the master device displays the home screen, the user accesses the notification center page by using a downward sliding operation. Because the master device does not run a foreground application before accessing the notification center page, the control center page accessed by using the notification center page does not include the task identifier 303.

The user may further access the notification center page by using the downward sliding operation when the master device displays an application page. Correspondingly, because the master device runs a foreground application before accessing the notification center page, the control center page accessed by using the notification center page includes the task identifier 303 (for example, as shown in FIG. 3).

The following describes another access manner of the control center page with reference to FIG. 5.

For example, that the master device is a mobile phone and a shortcut operation is three-finger upward sliding is used as an example. As shown in FIG. 5, the master device is running a video application and playing a video. When three fingers of the user slide upward on a page shown in part a of FIG. 5, if the master device determines that a distance corresponding to an upward sliding operation exceeds a first threshold, the master device receives an operation of accessing the control center page, and the master device accesses a control center page shown in part b of FIG. 5. The control center page includes the device identifier 301 of the master device, the device identifier 302 of the slave device, and the task identifier 303.

In some embodiments, if the master device determines that the distance corresponding to the upward sliding operation exceeds the first threshold, the master device receives the operation of accessing the control center page. If the master device determines that the distance corresponding to the upward sliding operation does not exceed the first threshold, the master device does not receive the operation of accessing the control center page, does not access the control center page, and returns to an interface on which the application runs.

In this embodiment of this application, the first threshold may be 20 pixels (px), or may be any other value. This is not limited herein.

In some embodiments, the master device may further display a dynamic special effect based on three-finger upward sliding in a process of receiving the three-finger upward sliding operation. The dynamic special effect may be a zooming dynamic special effect. For example, a page on which the three-finger upward sliding operation is received is zoomed in a proportion until a form shown by the task identifier 303 is displayed, and the device identifiers of the master device and the slave device are displayed. Alternatively, the dynamic special effect may be any other type of dynamic special effect. This is not limited in this embodiment of this application.

For example, after receiving the three-finger upward sliding operation, the master device accesses the control center page shown in part b of FIG. 5 from a page shown in part c of FIG. 5.

It may be understood that the user may access the control center page on any interface by using a preset shortcut operation. In the foregoing embodiment shown in FIG. 5, because the master device runs one foreground application before accessing the control center page, the control center page includes an identifier card of one application. If the master device runs a plurality of foreground applications before accessing the control center page, the control center page may include identifier cards of the plurality of applications.

The following describes a task transferring function of the control center with reference to FIG. 6A(1) to FIG. 6A(6)-FIG. 6F.

In an embodiment of this application, if the master device runs a foreground application before accessing the control center page, the control center page may include an identifier card of the application, to implement task transferring.

It may be understood that due to differences in types of slave devices, applications corresponding to task identifiers, and the like, task transferring manners implemented by the master device and the slave devices are different. The task transferring manners include single-window screen projection, same-source screen projection, handoff, and the like.

For example, FIG. 6A(1) to FIG. 6A(6) are a schematic diagram of an interface of task transferring according to an embodiment of this application. For example, the master device is a mobile phone, the slave device is a computer, the application A is a video application, and the application A is not installed on the slave device.

When displaying an application page corresponding to the application A, the master device receives a three-finger upward sliding operation of the user, and the master device accesses a control center page shown in FIG. 6A(2) from a page shown in FIG. 6A(1). The control center page includes the device identifier 301 of the master device, an identifier card 601 of the application A, and a device identifier 602 of the computer.

The user may drag the identifier card 601 of the application A in a direction of the device identifier 602 of the computer by using a drag-and-drop operation. When the user drags the identifier card 601 of the application A to the vicinity of the device identifier 602 of the computer, the device identifier 602 of the computer automatically adsorbs the identifier card 601 of the application A (as shown in FIG. 6A(3)).

When a location at which the drag-and-drop operation ends is near the device identifier 602 of the computer, the master device initiates task transferring to the computer, and the master device accesses an interface shown in FIG. 6A(4). On the interface, an identifier in the device identifier 602 of the computer becomes a connection identifier, to visually feed back an ongoing state of task transferring to the user.

For example, when a distance, dragged by the user, between the identifier card 601 of the application A and the device identifier 602 of the computer is less than a second threshold, the device identifier 602 of the computer automatically adsorbs the identifier card 601 of the application A. When a distance between the location at which the drag-and-drop operation ends and the device identifier 602 of the computer is less than the second threshold, the master device initiates task transferring to the computer.

In this embodiment of this application, the second threshold may be 20 pixels (px), or may be any other value. This is not limited herein.

Because the application A is not installed on the computer, the master device projects content (for example, a video or a photo) displayed by the application A to a screen of the computer for display, to implement single-window application screen projection, namely, different-source screen projection.

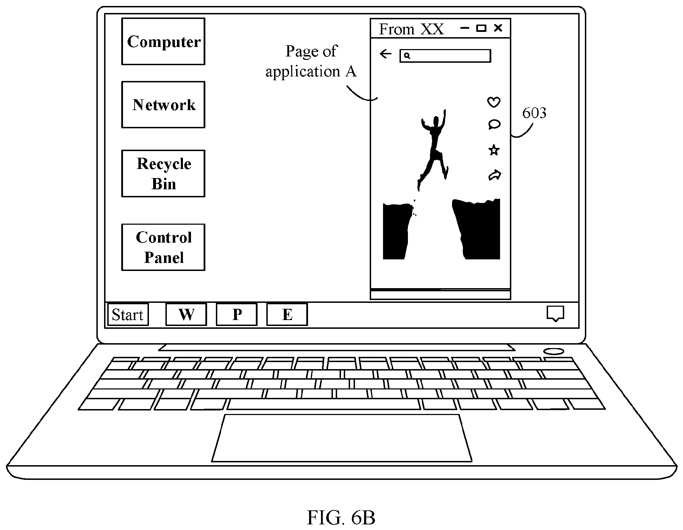

When task transferring between the master device and the computer is completed, the master device accesses an interface shown in FIG. 6A(5), and this page does not display the identifier card 601 of the application A. Adaptively, the computer displays a screen projection window 603, and the window displays the content of the application A (as shown in FIG. 6B).

When the master device exits the control center after transferring ends, a page of the application A is not displayed. For example, when the master device receives, on a page shown in FIG. 6A(5), tapping the exit button 306 by the user, the master device accesses a page shown in FIG. 6A(6) from the page shown in FIG. 6A(5). The page shown in FIG. 6A(6) is a home screen of the master device. Alternatively, when the master device receives, on the page shown in FIG. 6A(5), a sideward sliding operation of the user, the master device accesses the page shown in FIG. 6A(6) from the page shown in FIG. 6A(5). The page shown in FIG. 6A(6) is the home screen of the master device. The sideward sliding operation may be a leftward sliding operation, or may be a rightward sliding operation. This is not limited herein.

For example, FIG. 6C(1) to FIG. 6C(6) are a schematic diagram of an interface of task transferring according to an embodiment of this application. That the master device is a mobile phone, the slave device is a computer, and an application B is installed on the slave device is used as an example. For example, the application B is a note-taking application, and the note-taking application is installed on both the master device and the slave device.

When displaying an application page corresponding to the application B, the master device receives a three-finger upward sliding operation of the user, and the master device accesses a control center page shown in FIG. 6C(2) from a page shown in FIG. 6C(1). The control center page includes the device identifier 301 of the master device, an identifier card 604 of the application B, and a device identifier 602 of the computer.

The user may drag the identifier card 604 of the application B in a direction of the device identifier 602 of the computer by using a drag-and-drop operation. When the user drags the identifier card 604 of the application B to the vicinity of the device identifier 602 of the computer, the device identifier 602 of the computer automatically adsorbs the identifier card 604 of the application B (as shown in FIG. 6C(3)).

When a location at which the drag-and-drop operation ends is near the device identifier 602 of the computer, the master device initiates task transferring to the computer, and the master device accesses an interface shown in FIG. 6C(4). On the interface, an identifier in the device identifier 602 of the computer becomes a connection identifier, to visually feed back an ongoing state of task transferring to the user.

For example, when a distance, dragged by the user, between the identifier card 604 of the application B and the device identifier 602 of the computer is less than a first threshold, the device identifier 602 of the computer automatically adsorbs the identifier card 604 of the application B. When a distance between the location at which the drag-and-drop operation ends and the device identifier 602 of the computer is less than the first threshold, the master device initiates task transferring to the computer.

Because the application B is installed on the computer, and both the application B installed on the computer and the application B installed on the master device support handoff, the master device exits an editing state of the application B, and controls the computer to open the application B and display the application page corresponding to the application B, and a task on an application interface corresponding to the application B displayed in the computer has a same progress, to implement display content handoff. That is, the master device synchronizes progress or location information of running the application B by the master device with the slave device. When the slave device opens the application B, a corresponding progress or location can be directly displayed, to implement handoff.

It may be understood that if the application B is not installed on the computer, or the application B installed on the computer does not support handoff, or the application B installed on the master device does not support handoff, the master device exits the editing state of the application B, and projects content (for example, a video or a photo) displayed by the application B to a screen of the computer for display, to implement single-window application screen projection, namely, different-source screen projection.

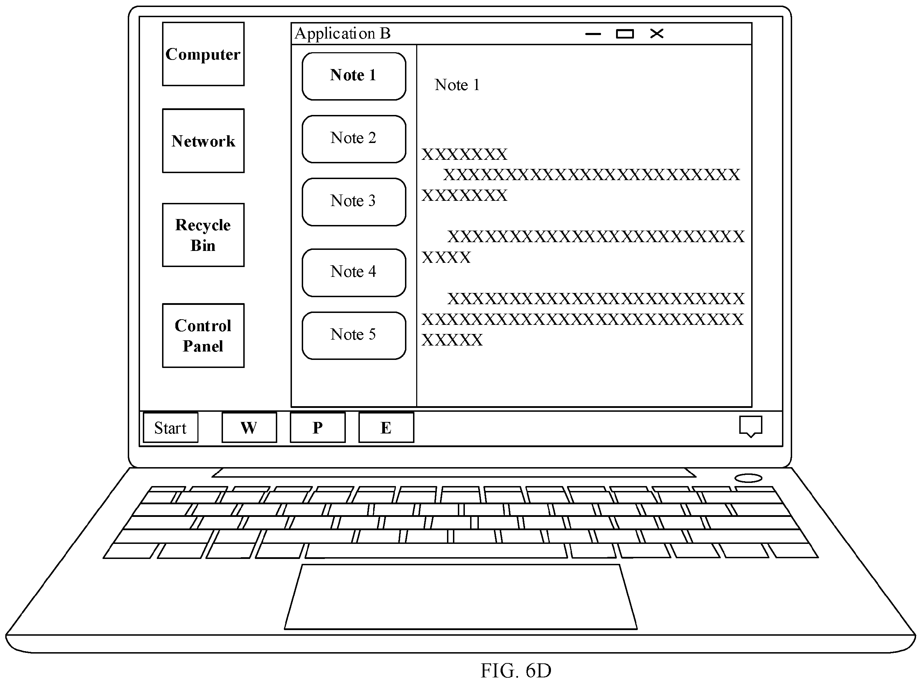

When task transferring between the master device and the computer is completed, the master device accesses an interface shown in FIG. 6C(5), and this page does not display the identifier card 604 of the application B. Adaptively, the computer opens the application B, and displays the application page corresponding to the application B (as shown in FIG. 6D).

When the master device exits the control center after transferring ends, a page of the application B is displayed. For example, when the master device exits the control center after transferring ends, the master device accesses a page shown in FIG. 6C(6) from a page shown in FIG. 6C(5). The page shown in FIG. 6C(6) is the application page corresponding to the application B, for example, a main interface of the application B. The application B in the master device does not exit the foreground, but displays an interface based on a logical change of application handoff.

In some embodiments, if the application B is in an editing state when the master device performs task transferring, the master device exits the editing state, and then performs task transferring.

It may be understood that the master device may exit the control center by using the exit button 306, or may exit the control center by using a sideward sliding operation. A specific operation of exiting the control center is not limited in this embodiment of this application.

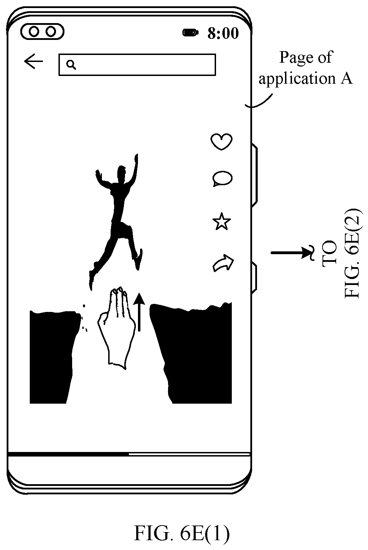

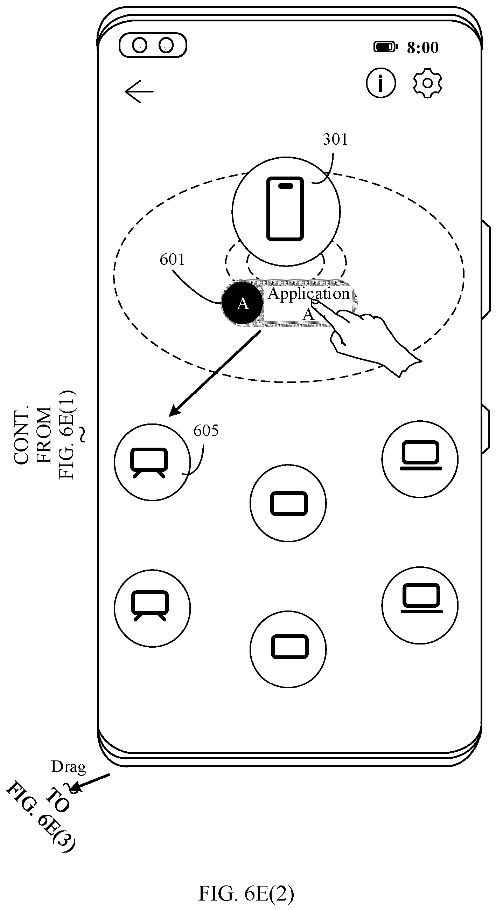

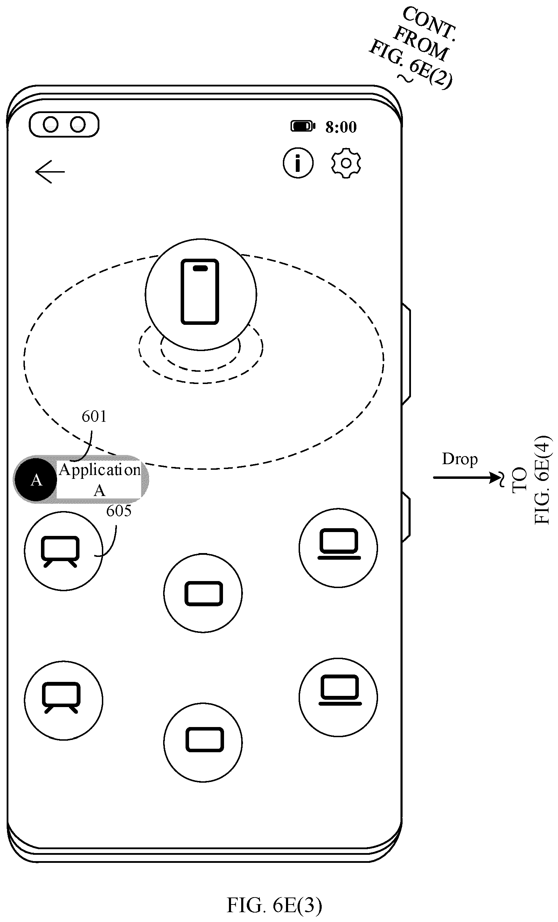

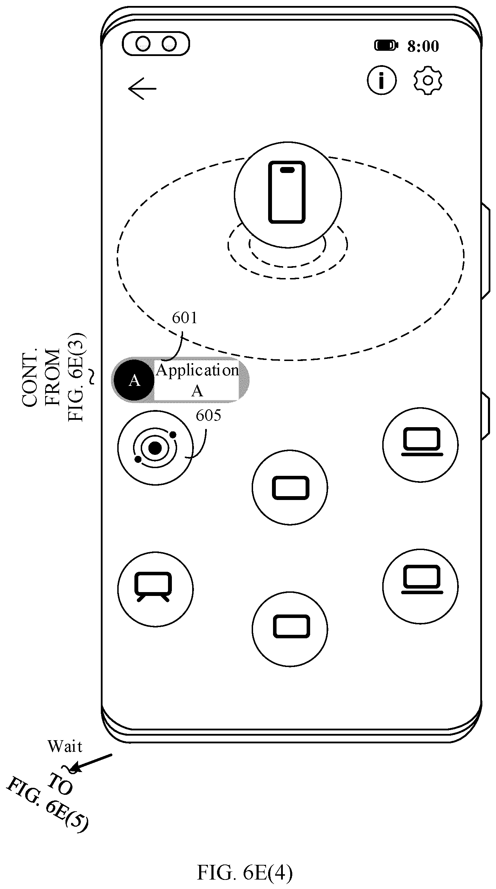

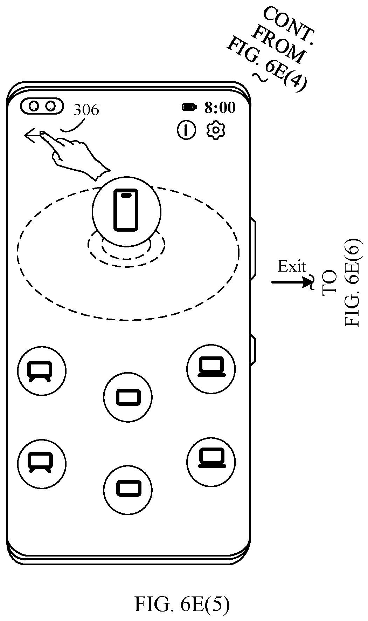

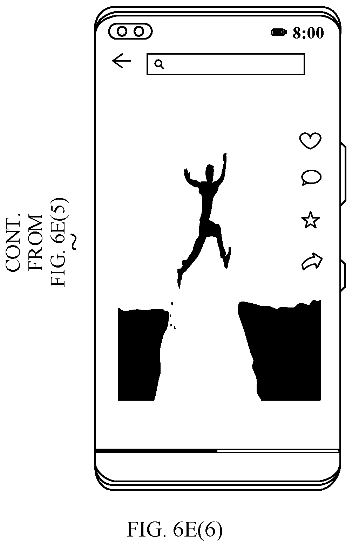

For example, FIG. 6E(1) to FIG. 6E(6) are a schematic diagram of an interface of task transferring according to an embodiment of this application. An example of a task transferring method in another embodiment of this application is described by using an example in which the master device is a mobile phone, the slave device is a large-screen device, and the application A is a video application.

When displaying an application page corresponding to the application A, the master device receives a three-finger upward sliding operation of the user, and the master device accesses a control center page shown in FIG. 6E(2) from a page shown in FIG. 6E(1). The control center page includes the device identifier 301 of the master device, the identifier card 601 of the application A, and a device identifier 605 of the large-screen device.

The user may drag the identifier card 601 of the application A in a direction of the device identifier 605 of the large-screen device by using a drag-and-drop operation. When the user drags the identifier card 601 of the application A to the vicinity of the device identifier 605 of the large-screen device, the device identifier 605 of the large-screen device automatically adsorbs the identifier card 601 of the application A (as shown in FIG. 6E(3)).

When a location at which the drag-and-drop operation ends is near the device identifier 605 of the large-screen device, the master device initiates task transferring to the large-screen device, and the master device accesses an interface shown in FIG. 6E(4). On the interface, an identifier in the device identifier 605 of the large-screen device becomes a connection identifier, to visually feed back an ongoing state of task transferring to the user.

For example, when a distance, dragged by the user, between the identifier card 601 of the application A and the device identifier 605 of the large-screen device is less than a second threshold, the device identifier 605 of the large-screen device automatically adsorbs the identifier card 601 of the application A. When a distance between the location at which the drag-and-drop operation ends and the device identifier 605 of the large-screen device is less than the second threshold, the master device initiates task transferring to the large-screen device.

Because the slave device is the large-screen device, the master device projects content (for example, a video or a photo) displayed by the master device to a screen of the large-screen device for display, to implement same-source screen projection.

When task transferring between the master device and the computer is completed, the master device accesses an interface shown in FIG. 6E(5), and this page does not display the identifier card 601 of the application A. Adaptively, content displayed by the large-screen device is the same as the content displayed by the master device (as shown in part a of FIG. 6F).

When the master device exits the control center after transferring ends, the master device accesses the application page of the application A shown in FIG. 6E(6) from a page shown in FIG. 6E(5). Adaptively, the content displayed by the large-screen device is the same as the content displayed by the master device (as shown in part b of FIG. 6F).

It may be understood that the master device may exit the control center by using the exit button 306, or may exit the control center by using a sideward sliding operation. A specific operation of exiting the control center is not limited in this embodiment of this application.

It may be understood that, when the master device performs task transferring with the large-screen device, a status of an application on which task transferring is performed remains unchanged. For example, the note-taking application is used as an example. If the note-taking application is in an editing state, the note-taking application is still in the editing state after the master device exits the control center page.

It may be understood that, FIG. 6A(1) to FIG. 6A(6)-FIG. 6F are all described by using an example in which an application runs in the foreground during task transferring. With reference to FIG. 7A(1) to FIG. 7A(6)-FIG. 7D, the following describes a scenario in which task transferring is performed during screen splitting.

For example, FIG. 7A(1) to FIG. 7A(6) are a schematic diagram of an interface of task transferring according to an embodiment of this application. That the master device is a mobile phone, the slave device is a computer, the application A is a video application, the application B is a note-taking application, the application A is not installed on the slave device, and the application B is installed on the slave device is used as an example to describe a task transferring method in this embodiment of this application. For example, the video application and the note-taking application are installed on the master device, and the note-taking application is installed on the slave device.

When split-screen displaying an application page corresponding to the application A and an application page corresponding to the application B, the master device receives a three-finger upward sliding operation of the user, and the master device accesses a control center page shown in FIG. 7A(2) from a page shown in FIG. 7A(1). The control center page includes the device identifier 301 of the master device, the identifier card 601 of the application A, the identifier card 604 of the application B, and the device identifier 602 of the computer.

The user may drag the identifier card 601 of the application A in a direction of the device identifier 602 of the computer by using a drag-and-drop operation. When the user drags the identifier card 601 of the application A to the vicinity of the device identifier 602 of the computer, the device identifier 602 of the computer automatically adsorbs the identifier card 601 of the application A (as shown in FIG. 7A(3)).

When a location at which the drag-and-drop operation ends is near the device identifier 602 of the computer, the master device initiates task transferring to the computer, and the master device accesses an interface shown in FIG. 7A(4). On the interface, an identifier in the device identifier 602 of the computer becomes a connection identifier, to visually feed back an ongoing state of task transferring to the user.

For example, when a distance, dragged by the user, between the identifier card 601 of the application A and the device identifier 602 of the computer is less than a second threshold, the device identifier 602 of the computer automatically adsorbs the identifier card 601 of the application A. When a distance between the location at which the drag-and-drop operation ends and the device identifier 602 of the computer is less than the second threshold, the master device initiates task transferring to the computer.

Because the application A is not installed on the computer, the master device projects content (for example, a video or a photo) displayed by the application A to a screen of the computer for display, to implement single-window application screen projection.

When task transferring between the master device and the computer is completed, the master device accesses an interface shown in FIG. 7A(5), and this page does not display the identifier card 601 of the application A. Adaptively, the computer displays a screen projection window 703, and the window displays the content of the application A (as shown in FIG. 6B).

When the master device exits the control center after transferring ends, the master device accesses a page shown in FIG. 7A(6) from a page shown in FIG. 7A(5). On the page shown in FIG. 7A(6), the application page corresponding to the application B is displayed in full screen.

It may be understood that the master device may exit the control center by using the exit button 306, or may exit the control center by using a sideward sliding operation. A specific operation of exiting the control center is not limited in this embodiment of this application.

For example, FIG. 7B(1) to FIG. 7B(6) are a schematic diagram of an interface of task transferring according to an embodiment of this application. That the master device is a mobile phone, the slave device is a computer, the application A is a video application, the application B is a note-taking application, and the application B is installed on the slave device is used as an example to describe a task transferring method in this embodiment of this application. For example, the video application and the note-taking application are installed on the master device, and the note-taking application is installed on the slave device.

When split-screen displaying an application page corresponding to the application A and an application page corresponding to the application B, the master device receives a three-finger upward sliding operation of the user, and the master device accesses a control center page shown in FIG. 7B(2) from a page shown in FIG. 7B(1). The control center page includes the device identifier 301 of the master device, the identifier card 601 of the application A, the identifier card 604 of the application B, and the device identifier 602 of the computer.

The user may drag the identifier card 604 of the application B in a direction of the device identifier 602 of the computer by using a drag-and-drop operation. When the user drags the identifier card 604 of the application B to the vicinity of the device identifier 602 of the computer, the device identifier 602 of the computer automatically adsorbs the identifier card 604 of the application B (as shown in FIG. 7B(3)).

When a location at which the drag-and-drop operation ends is near the device identifier 602 of the computer, the master device initiates task transferring to the computer, and the master device accesses an interface shown in FIG. 7B(4). On the interface, an identifier in the device identifier 602 of the computer becomes a connection identifier, to visually feed back an ongoing state of task transferring to the user.

For example, when a distance, dragged by the user, between the identifier card 604 of the application B and the device identifier 602 of the computer is less than a first threshold, the device identifier 602 of the computer automatically adsorbs the identifier card 604 of the application B. When a distance between the location at which the drag-and-drop operation ends and the device identifier 602 of the computer is less than the first threshold, the master device initiates task transferring to the computer.

Because the application B is installed on the computer, and both the application B installed on the computer and the application B installed on the master device support handoff, the master device exits an editing state of the application B, and controls the computer to open the application B and display the application page corresponding to the application B, to implement display content handoff.

When task transferring between the master device and the computer is completed, the master device accesses an interface shown in FIG. 7B(5), and this page does not display the identifier card 604 of the application B. Adaptively, the computer opens the application B, and displays the application page corresponding to the application B (as shown in FIG. 6D).

When the master device exits the control center after transferring ends, the master device accesses a page shown in FIG. 7B(6) from a page shown in FIG. 7B(5). The page displays the application page corresponding to the application A and the application page corresponding to the application B that are displayed in split-screen mode. In comparison with the page shown in FIG. 7B(1), the application B exits an editing state on the page shown in FIG. 7B(6).

In some embodiments, if the application B is in the editing state when the master device performs task transferring, the master device exits the editing state.

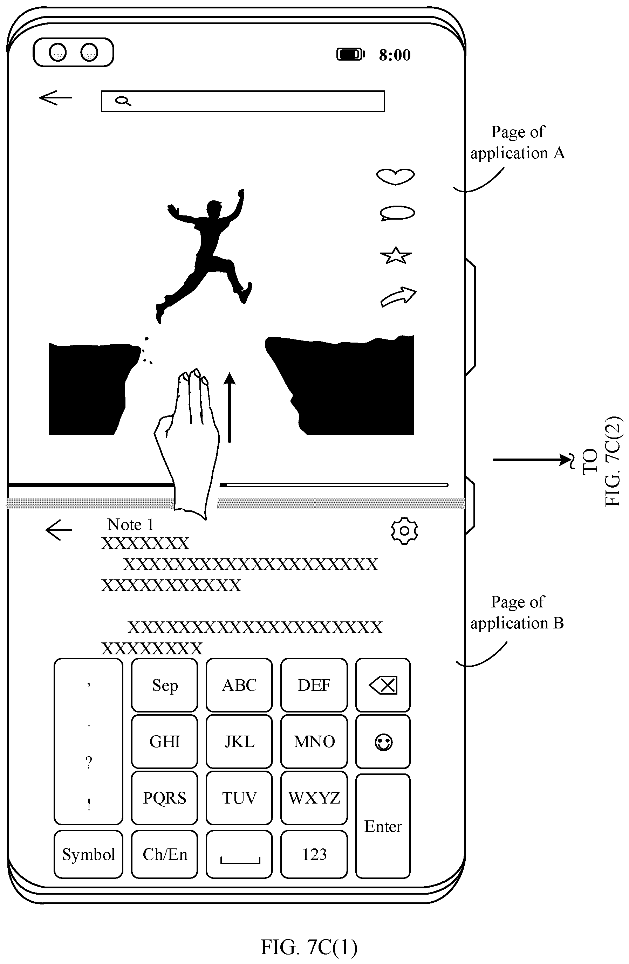

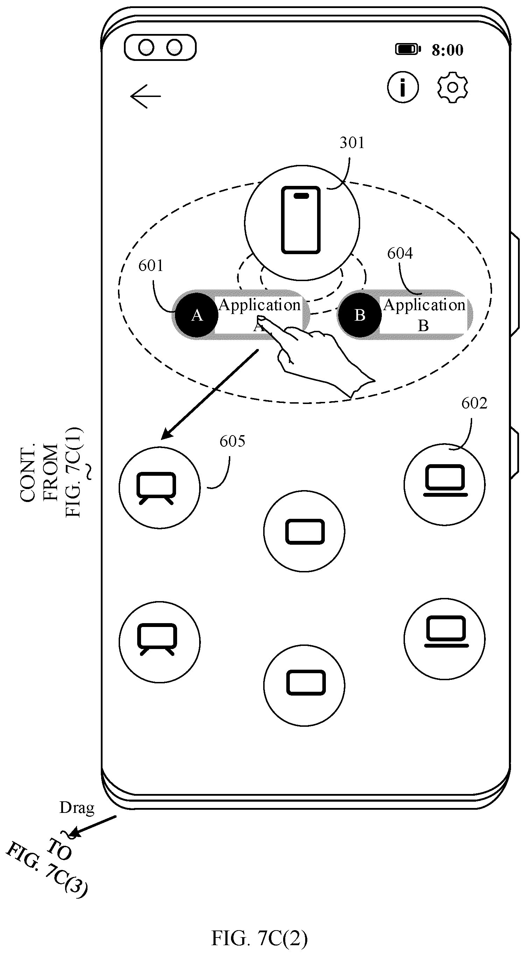

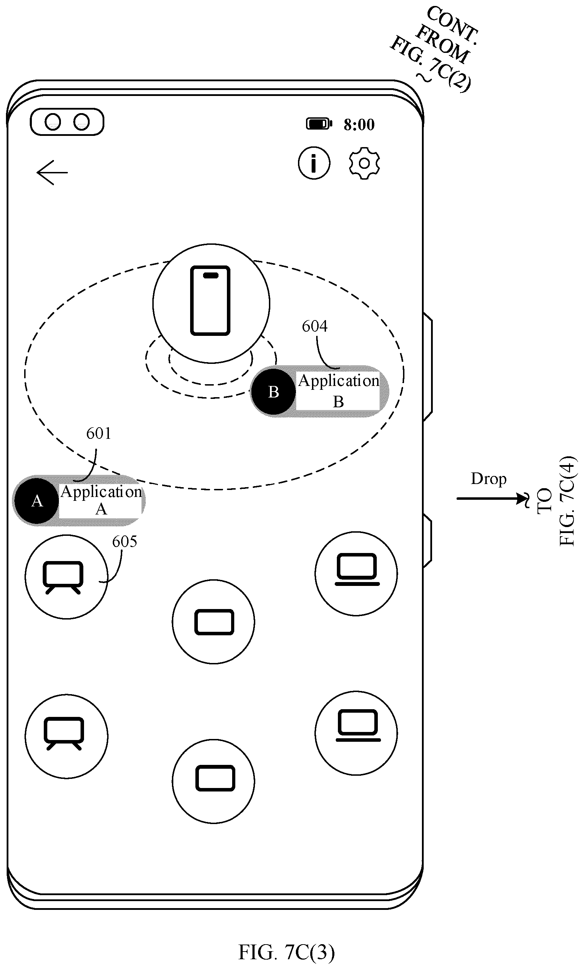

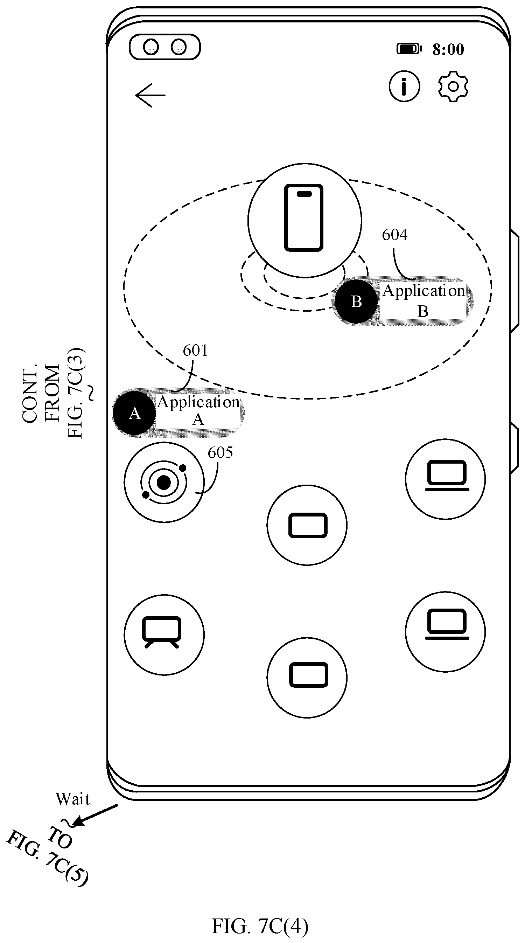

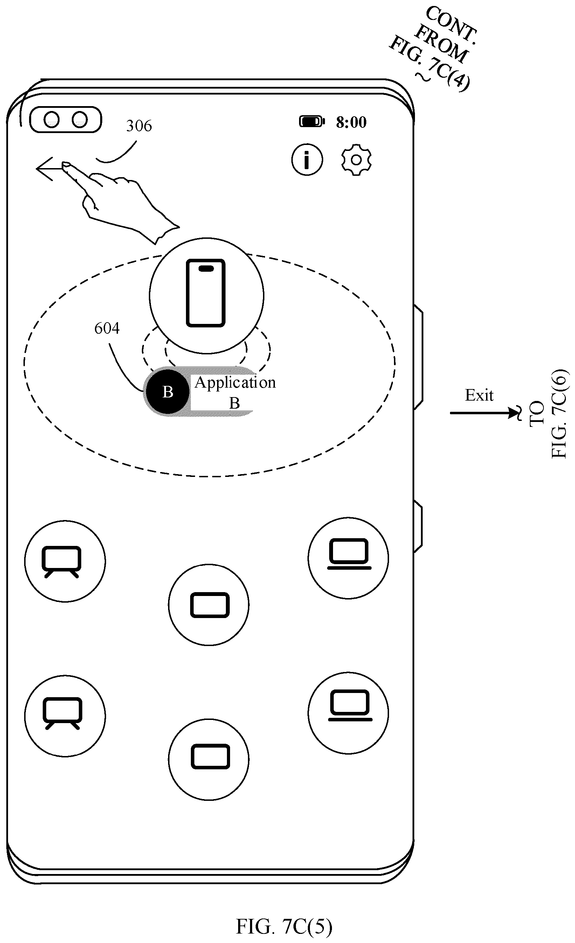

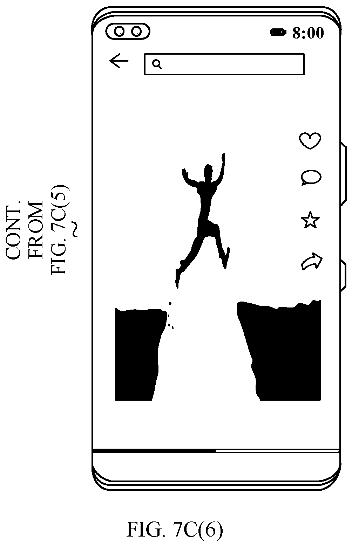

For example, FIG. 7C(1) to FIG. 7C(6) are a schematic diagram of an interface of task transferring according to an embodiment of this application. A task transferring method in another embodiment of this application is described by using an example in which the master device is a mobile phone, the slave device is a large-screen device, the application A is a video application, and the application B is a note-taking application. For example, the video application and the note-taking application are installed on the master device.

When split-screen displaying an application page corresponding to the application A and an application page corresponding to the application B, the master device receives a three-finger upward sliding operation of the user, and the master device accesses a control center page shown in FIG. 7C(2) from a page shown in FIG. 7C(1). The control center page includes the device identifier 301 of the master device, the identifier card 601 of the application A, and the device identifier 605 of the large-screen device.

The user may drag the identifier card 601 of the application A in a direction of the device identifier 605 of the large-screen device by using a drag-and-drop operation. When the user drags the identifier card 601 of the application A to the vicinity of the device identifier 605 of the large-screen device, the device identifier 605 of the large-screen device automatically adsorbs the identifier card 601 of the application A (as shown in FIG. 7C(3)).

When a location at which the drag-and-drop operation ends is near the device identifier 605 of the large-screen device, the master device initiates task transferring to the large-screen device, and the master device accesses an interface shown in FIG. 7C(4). On the interface, an identifier in the device identifier 605 of the large-screen device becomes a connection identifier, to visually feed back an ongoing state of task transferring to the user.

For example, when a distance, dragged by the user, between the identifier card 601 of the application A and the device identifier 605 of the large-screen device is less than a second threshold, the device identifier 605 of the large-screen device automatically adsorbs the identifier card 601 of the application A. When a distance between the location at which the drag-and-drop operation ends and the device identifier 605 of the large-screen device is less than the second threshold, the mobile phone initiates task transferring to the large-screen device.

Because the slave device is the large-screen device, the master device projects content (for example, a video or a photo) displayed by the application A to a screen of the large-screen device for display, to implement same-source screen projection.

When task transferring between the master device and the computer is completed, the master device accesses an interface shown in FIG. 7C(5), and this page does not display the identifier card 601 of the application A. Adaptively, content displayed by the large-screen device is the same as content displayed by the master device (as shown in part a of FIG. 7D).

When the master device exits the control center after transferring ends, the master device accesses the application page of the application A shown in FIG. 7C(6) from a page shown in FIG. 7C(5). Adaptively, the content displayed by the large-screen device is the same as the content displayed by the master device (as shown in part b of FIG. 7D).

It may be understood that the master device may exit the control center by using the exit button 306, or may exit the control center by using a sideward sliding operation. A specific operation of exiting the control center is not limited in this embodiment of this application.

It may be understood that, in the foregoing embodiment shown in FIG. 7A(1) to FIG. 7A(6)-FIG. 7D, the master device performs screen splitting in a horizontal split-screen manner. The master device may alternatively perform screen splitting in a vertical split-screen manner. A split-screen manner is not limited in this embodiment of this application.

In some embodiments, when the master device uses the horizontal split-screen manner, identifier cards of applications displayed on the control center page from left to right respectively correspond to applications displayed on a split-screen interface from top to bottom. When the master device uses the vertical split-screen manner, identifier cards of applications displayed on the control center page from left to right respectively correspond to applications displayed on a split-screen interface from top to bottom.

With reference to FIG. 8A(1) to FIG. 8A(4)-FIG. 8C, the following describes a scenario in which task transferring is performed when a small-window application runs.

For example, FIG. 8A(1) to FIG. 8A(4) are a schematic diagram of an interface of task transferring according to an embodiment of this application. That the master device is a mobile phone, the application A is a video application, and the small-window application is a note-taking application is used as an example.

A page shown in FIG. 8A(1) to FIG. 8A(4) includes an application page corresponding to the application A and a page 801 corresponding to the small-window application. When receiving a three-finger upward sliding operation of the user, the master device accesses a control center page shown in FIG. 8A(2). The control center page includes the device identifier 301 of the master device, the identifier card 601 of the application A, the device identifier 602 of the computer, and the device identifier 605 of the large-screen device, and does not include an identifier card corresponding to the small-window application.

In this embodiment of this application, the small-window application may be any application such as note-taking or instant messaging. This is not limited in this embodiment of this application.

The user may drag the identifier card 601 of the application A in a direction of the device identifier 302 of the slave device (for example, the device identifier 602 of the computer and the device identifier 605 of the large-screen device) by using a drag-and-drop operation, to perform task transferring. A specific process of task transferring is similar to the foregoing process in FIG. 6A(1) to FIG. 6A(6)-FIG. 7D. Details are not described herein again.

In this embodiment of this application, when the master device exits the control center after task transferring ends, the page corresponding to the small-window application is zoomed out, and is located at a side edge of the master device.

For example, that the page corresponding to the application A is dragged to the vicinity of the device identifier 602 of the computer is used as an example. If the application A is not installed on the computer, a task transferring manner is single-window screen projection. When the master device exits the control center after task transferring ends, the master device displays a home page and a zoom-out small-window application 802 (as shown in FIG. 8A(3)). The zoom-out small-window application 802 is located at the side edge of the master device.

That the page corresponding to the application A is dragged to the vicinity of the device identifier 602 of the computer is used as an example. If the application A is installed on the computer, a task transferring manner is handoff. When the master device exits the control center after task transferring ends, the master device displays the application page of the application A and the zoom-out small-window application 802 (as shown in FIG. 8A(4)).

In some embodiments, when the master device performs task transferring, the application A is in a playing state. After the master device exits the control center page, the application A stops playing a video, or exits this video playback page, and returns to a playlist interface.

It may be understood that the master device may exit the control center by using the exit button 306, or may exit the control center by using a sideward sliding operation. A specific operation of exiting the control center is not limited in this embodiment of this application.

That the page corresponding to the application A is dragged to the vicinity of the device identifier 605 of the large-screen device is used as an example, and in this case, a task transferring manner is same-source screen projection. When the master device exits the control center after task transferring ends, the master device displays the home page and the zoom-out small-window application 802 (as shown in FIG. 8A(4)). The zoom-out small-window application 802 is located at the side edge of the master device.

For example, FIG. 8B(1) to FIG. 8B(5) are a schematic diagram of an interface of task transferring according to an embodiment of this application. A page shown in FIG. 8B(1) to FIG. 8B(5) includes an application page corresponding to the application A displayed in split-screen mode, an application page corresponding to an application C displayed in split-screen mode, and the page 801 corresponding to the small-window application. That the master device is a mobile phone, the application A is a video application, the application C is a news application, and the small-window application is a note-taking application is used as an example to describe a task transferring method in this embodiment of this application.

When receiving a three-finger upward sliding operation of the user, the master device accesses a control center page shown in FIG. 8B(2). The control center page includes the device identifier 301 of the master device, the identifier card 601 of the application A, an identifier card 803 of the application C, the device identifier 602 of the computer, and the device identifier 605 of the large-screen device, and does not include an identifier card corresponding to the small-window application.

The user may drag task identifiers 303 (for example, the identifier card 601 of the application A and the identifier card 803 of the application B) in a direction of the device identifier 302 of the slave device (for example, the device identifier 602 of the computer or the device identifier 605 of the large-screen device) by using a drag-and-drop operation, to perform task transferring. A specific process of task transferring is similar to the foregoing process in FIG. 6A(1) to FIG. 6A(6)-FIG. 7D. Details are not described herein again.

In this embodiment of this application, when the master device exits the control center after task transferring ends, the page corresponding to the small-window application is zoomed out, and is located at a side edge of the master device.

That the page corresponding to the application A is dragged to the vicinity of the device identifier 602 of the computer is used as an example. If the application A is installed on the computer, a task transferring manner is handoff. When the master device exits the control center after task transferring ends, the master device displays the page corresponding to the application A, the page corresponding to the application B, and the zoom-out small-window application 802 (as shown in FIG. 8B(3)). The zoom-out small-window application 802 is located at the side edge of the master device.

For example, that the page corresponding to the application A is dragged to the vicinity of the device identifier 602 of the computer is used as an example. If the application A is not installed on the computer, a task transferring manner is single-window screen projection. When the master device exits the control center after task transferring ends, the master device displays the application page of the application C and the zoom-out small-window application 802 (as shown in FIG. 8B(4)). The zoom-out small-window application 802 is located at the side edge of the master device.

That the page corresponding to the application A is dragged to the vicinity of the device identifier 605 of the large-screen device is used as an example, and in this case, a task transferring manner is same-source screen projection. When the master device exits the control center after task transferring ends, the master device displays the page corresponding to the application A and the zoom-out small-window application 802 (as shown in FIG. 8B(5)). The zoom-out small-window application 802 is located at the side edge of the master device.

It may be understood that the master device may exit the control center by using the exit button 306, or may exit the control center by using a sideward sliding operation. A specific operation of exiting the control center is not limited in this embodiment of this application.

For example, FIG. 8C is a schematic diagram of an interface of task transferring according to an embodiment of this application. That the master device is a mobile phone, and the small-window application is a note-taking application is used as an example. A page shown in FIG. 8C includes the home page and the page 801 corresponding to the small-window application. When receiving a three-finger upward sliding operation of the user, the master device accesses a control center page shown in part b of FIG. 8C. The control center page includes the device identifier 301 of the master device and the device identifier 302 of the slave device, and does not include the task identifier 303.

It may be understood that, on a basis of the foregoing embodiments shown in FIG. 6A(1) to FIG. 6A(6)-FIG. 8C, when the master device receives a shortcut operation, the master device further displays a dynamic special effect. For the dynamic special effect, refer to the foregoing related description. Details are not described herein again.

It may be understood that when the slave device is a large-screen device, a task transferring manner between the master device and the slave device is same-source screen projection. When the slave device is any one of a mobile phone, a PC, and a tablet, a corresponding application is installed on the slave device, and both the application installed on the master device and the application installed on the slave device support handoff, a task transferring manner between the master device and the slave device is handoff. When the slave device is any one of a mobile phone, a PC, and a tablet, and a corresponding application is not installed on the slave device, a task transferring manner between the master device and the slave device is different-source screen projection. When the slave device is any one of a mobile phone, a PC, and a tablet, a corresponding application is installed on the slave device, and the application installed on any one of the master device and the slave device does not support handoff, a task transferring manner between the master device and the slave device is different-source screen projection.

For example, for the task transferring manner between the master device and the slave device, refer to the following Table 1. Details are not described herein again.

**Table 1 Task transferring manner**

| Master device | Slave device type | Whether an application is installed | Whether an application version supports handoff | Task transferring manner |
|---|---|---|---|---|
| Mobile phone | PC and tablet | Yes | Yes | Handoff |
| | | Yes | No | Different-source screen projection |
| | | No | | Different-source screen projection |
| | Large-screen device | | | Same-source screen projection |
| Tablet | Mobile phone and PC | Yes | Yes | Handoff |
| | | Yes | No | Different-source screen projection |
| | | No | | Different-source screen projection |
| | Large-screen device | | | Same-source screen projection |
| PC | Mobile phone and tablet | Yes | Yes | Handoff |
| | | Yes | No | Different-source screen projection |
| | | No | | Different-source screen projection |
| | Large-screen device | | | Same-source screen projection |

It may be understood that task transferring may fail for a plurality of reasons. Reasons include but are not limited to: The slave device is screen locked, the slave device is in a sleep mode, the slave device does not support transferring, an application does not support transferring, a network is abnormal, and the like.

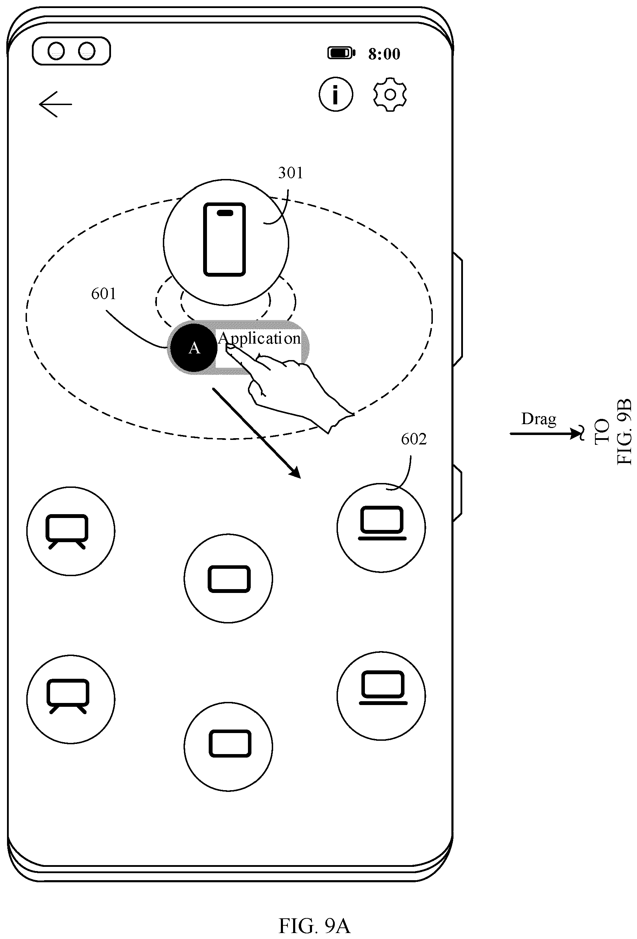

For example, FIG. 9A to FIG. 9D are a schematic diagram of a control center page according to an embodiment of this application. As shown in FIG. 9A to FIG. 9D, a page shown in FIG. 9A includes the device identifier 301 of the master device, the identifier card 601 of the application A, and the device identifier 602 of the computer.

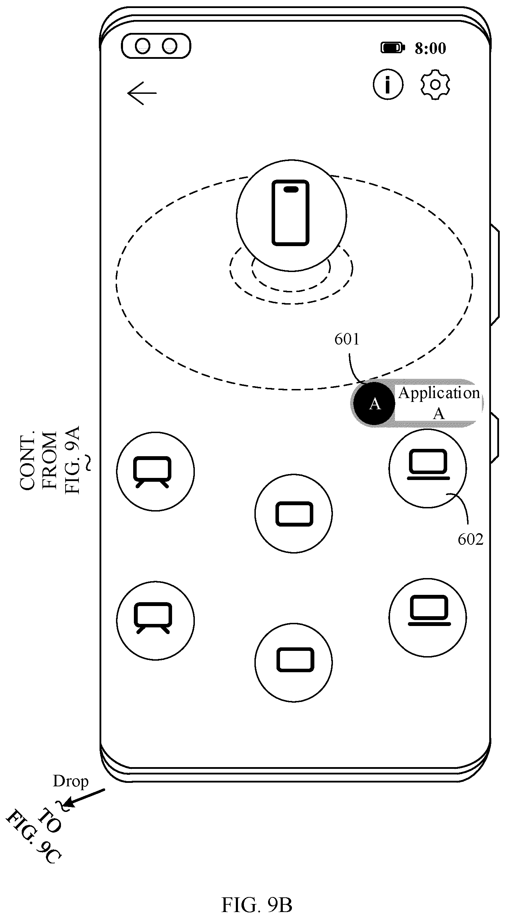

The user may drag the identifier card 601 of the application A in a direction of the device identifier 602 of the computer by using a drag-and-drop operation. When the user drags the identifier card 601 of the application A to the vicinity of the device identifier 602 of the computer, the device identifier 602 of the computer automatically adsorbs the identifier card 601 of the application A (as shown in FIG. 9B).

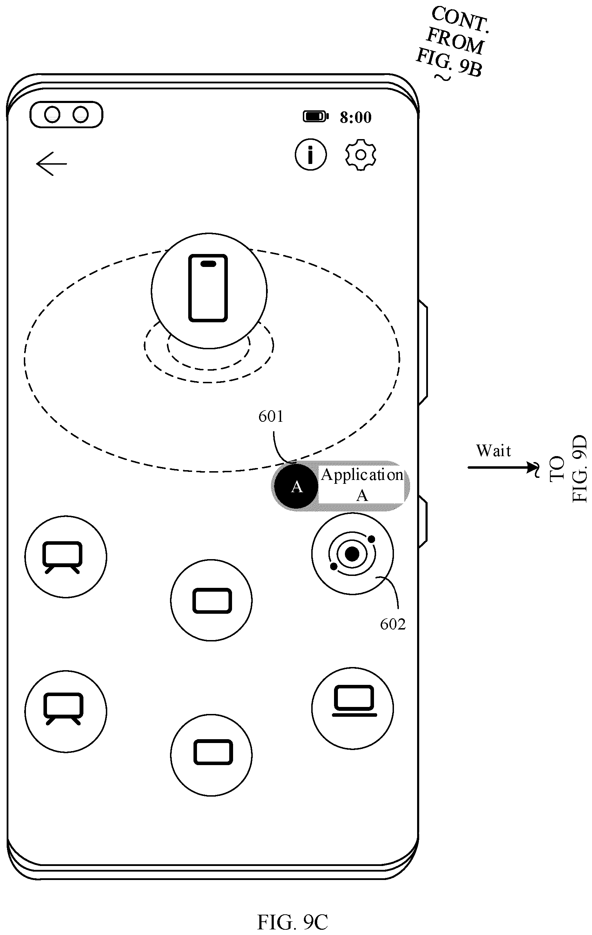

When a location at which the drag-and-drop operation ends is near the device identifier 602 of the computer, the master device initiates task transferring to the computer, and the master device accesses an interface shown in FIG. 9C. On the interface, an identifier in the device identifier 602 of the computer becomes a connection identifier, to visually feed back an ongoing state of task transferring to the user.

For example, when a distance, dragged by the user, between the identifier card 601 of the application A and the device identifier 602 of the computer is less than a second threshold, the device identifier 602 of the computer automatically adsorbs the identifier card 601 of the application A. When a distance between the location at which the drag-and-drop operation ends and the device identifier 602 of the computer is less than the second threshold, the master device initiates task transferring to the computer.

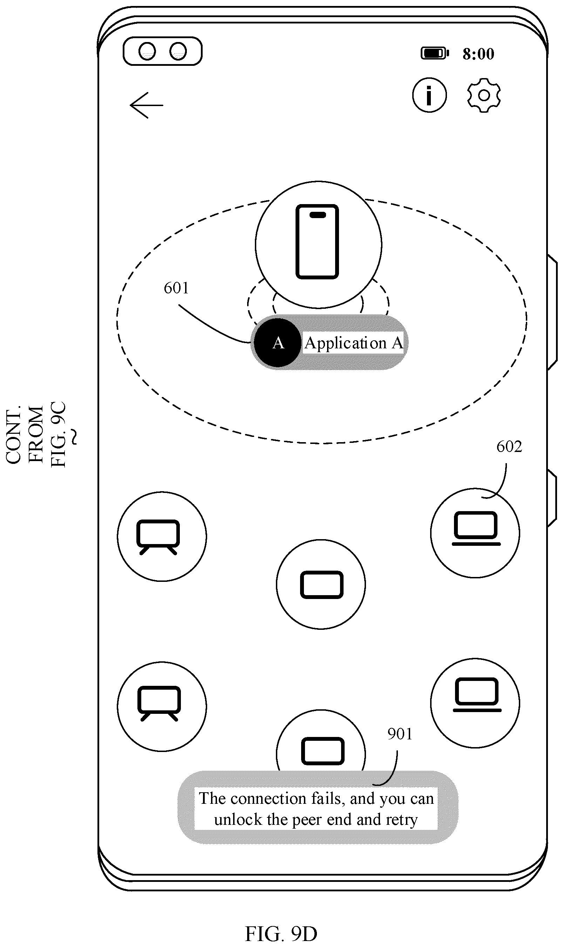

If task transferring fails, the master device accesses an interface shown in FIG. 9D from the interface shown in FIG. 9C. The interface includes the device identifier 301 of the master device, the identifier card 601 of the application A, and the device identifier 602 of the computer.

On a basis of the foregoing embodiment, if task transferring fails, the control center page of the master device may display a prompt message to prompt the user that task transferring fails.

For example, the control center page shown in FIG. 9D further includes a prompt message 901. The prompt message 901 is used to prompt the user that task transferring fails.

The prompt message 901 may be a text message, for example, a "connection failure".

The prompt message 901 may be displayed in a form of a bubble, or may be displayed in a form of a toast message. A specific display form of the prompt message 901 is not limited in this embodiment of this application.

The prompt message 901 may disappear after being displayed for a period of time, or may disappear after any operation is received. In this way, blocking the control center page by the prompt message 901 can be reduced. A disappearance manner of the prompt message 901 is not limited in this embodiment of this application.

In some embodiments, the prompt message 901 is further used to remind the user of a reason of a transferring failure. In this way, the user can adjust the slave device based on the failure reason, to facilitate performing task transferring again. This improves user experience.

For example, text corresponding to the prompt message 901 may be: "the connection fails, and you can unlock the peer end and retry", "task transferring to the slave device is not supported temporarily", "the application temporarily does not support transferring to the slave device", "the network connection is unstable, and you can retry later", or the like. Specific content of the prompt message 901 is not limited in this embodiment of this application.

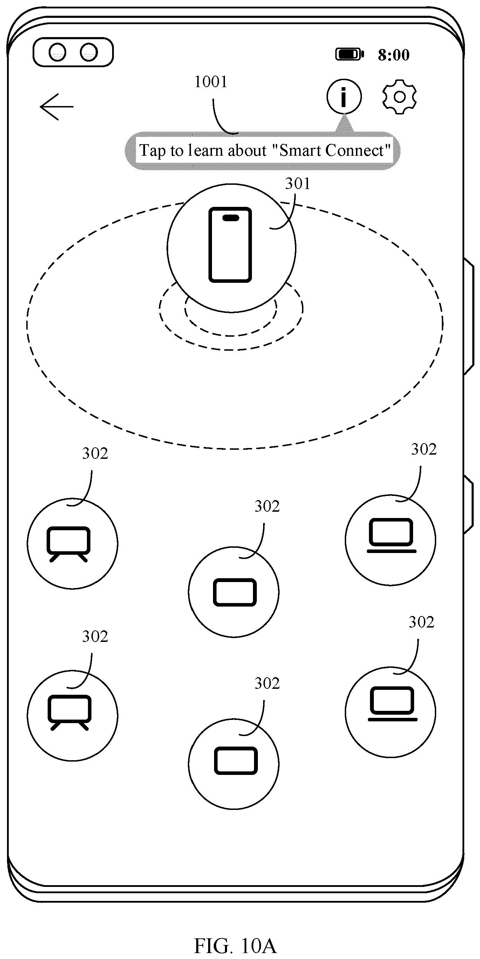

The following describes a device collaboration function of the control center with reference to FIG. 10A to FIG. 10D-FIG. 14.

It may be understood that the master device accesses the control center page in the foregoing two manners, and the control center may have the following three cases: In a first case, the master device has found one or more slave devices. In a second case, the master device finds no slave device. In a third case, the master device is in collaboration.

The following describes control center pages corresponding to the three cases with reference to FIG. 10A to FIG. 10D.

First case: If the master device has found one or more slave devices, the control center page is shown in FIG. 10A. The control center page includes the device identifier 301 of the master device and the device identifier 302 of the slave device. For locations, shapes, and the like of the device identifier 301 of the master device and the device identifier 302 of the slave device, refer to the foregoing corresponding description in FIG. 3. Details are not described herein again.

For example, when the user taps the entry button 410 on the notification center page shown in FIG. 4A(2), the master device receives an operation of opening the control center, and accesses the control center page shown in FIG. 10A.

On a basis of the foregoing embodiment, the control center page further displays a prompt message 1001. The prompt message 1001 is used to prompt the user to understand a manner of the collaboration function. In some embodiments, the prompt message 1001 may disappear after a user operation is received, or may disappear after a period of time (for example, 15S).

The master device may display the prompt message 1001 when accessing the control center page for the first N times, or may display the prompt message 1001 only when accessing the control center page for the first time. A display condition, a disappearance condition, and the like of the prompt message 1001 are not specifically limited in this embodiment of this application.

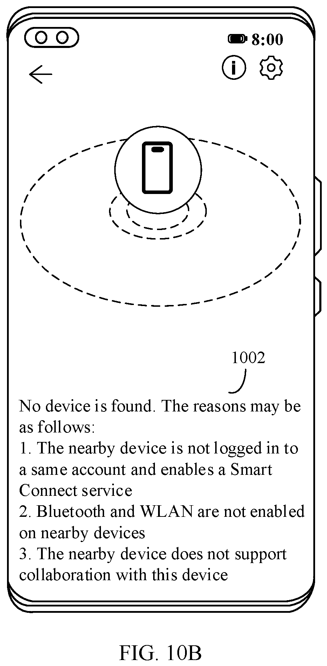

Second case: If the master device finds no slave device, the control center page is shown in FIG. 10B. The control center page includes the device identifier 301 of the master device, and does not include the device identifier 302 of the slave device.

For example, when the user taps the entry button 410 on the notification center page shown in part a of FIG. 4C, the master device receives an operation of opening the control center, and accesses the control center page shown in FIG. 10B.

In some embodiments, the control center page further displays a prompt message 1002. The prompt message 1002 is used to remind the user of reasons that no slave device is found. The reasons include but are not limited to: "the nearby device is not logged in to a same account, and enables a Smart Connect service", "Bluetooth and WLAN are not enabled on nearby devices", "the nearby device does not support collaboration with this device", and the like.

In a possible implementation, the master device finds no slave device within preset duration of displaying the control center page, and displays the prompt message 1002. When the slave device is found and the device identifier 302 of the slave device is displayed, the prompt message 1002 disappears.

It may be understood that when the master device finds the slave device, the master device may access the page shown in FIG. 10A from the page shown in FIG. 10B.

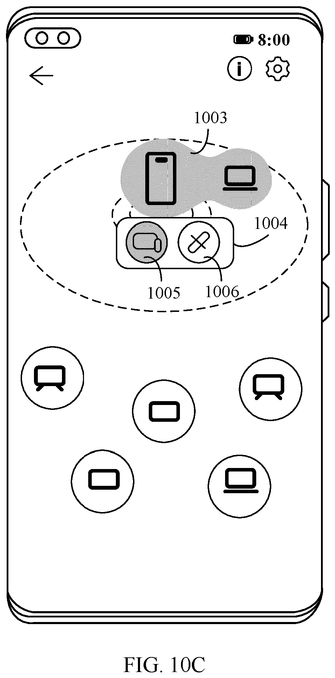

Third case: If the master device is in collaboration, the control center page is shown in FIG. 10C. The control center page includes a collaboration identifier 1003.

The collaboration identifier 1003 may be a graphical identifier, for example, an icon or another skeuomorphic element. For example, the device identifier of the master device and a device identifier of a collaboration device may be fused to form the collaboration identifier 1003. A specific shape of the collaboration identifier is not limited in this embodiment of this application.

In some embodiments, if the master device is in collaboration, the control center page further includes a collaboration type card 1004, and the collaboration type card 1004 includes a plurality of buttons, for example, a multi-screen collaboration button 1005 and a disconnect button 1006.

It should be noted that a button displayed on the collaboration type card is related to a collaboration type supported between the master device and the slave device. For example, when the master device is a mobile phone, and the slave device is any device in a PC, a PAD, or a large-screen device, collaboration between the master device and the slave device is same-source screen projection. The collaboration type card 1004 displayed on the control center page may include the multi-screen collaboration button 1005 and the disconnect button 1006 (as shown in FIG. 10C).

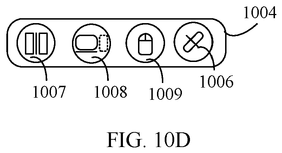

When the master device is a PC, and the slave device is a tablet, collaboration between the master device and the slave device may be any one of screen extension, screen mirroring, and keyboard and mouse sharing. The collaboration type card 1004 displayed on the control center page may include a screen extension button 1007, a screen mirroring button 1008, a keyboard and mouse sharing button 1009, and the disconnect button 1006 (as shown in FIG. 10D).

When the user taps the screen extension button 1007, a collaboration type between the master device and the slave device is switched to screen extension. When the user taps the screen mirroring button 1008, the collaboration type between the master device and the slave device is switched to screen mirroring. When the user taps the keyboard and mouse sharing button 1009, the collaboration type between the master device and the slave device is switched to keyboard and mouse sharing.

For example, collaboration types supported between the master device and the slave device may be shown in Table 2.

**Table 2 Collaboration between the master device and the slave device**

| Master device-slave device | Collaboration type | Default collaboration type |
|---|---|---|
| Mobile phone-PC | Same-source screen projection | Same-source screen projection |
| Mobile phone-tablet | Same-source screen projection | Same-source screen projection |
| Mobile phone-large-screen device | Same-source screen projection | Same-source screen projection |
| PC-mobile phone | Same-source screen projection | Same-source screen projection |
| PC-tablet | Screen extension, screen mirroring, or keyboard and mouse sharing | Screen mirroring |
| PC-large-screen device | Screen extension or screen mirroring | Screen mirroring |
| Tablet-mobile phone | Same-source screen projection | Same-source screen projection |
| Tablet-PC | Same-source screen projection | Same-source screen projection |
| Tablet-large-screen device | Same-source screen projection | Same-source screen projection |

The following describes a connection process and a disconnection process between the master device and the slave device with reference to FIG. 11A(1) to FIG. 11A(5) and FIG. 11B.

For example, when the user drags the device identifier 602 of the computer on the page shown in FIG. 11A(1) to the vicinity of the device identifier 301 of the master device, the device identifier 301 of the master device automatically adsorbs the device identifier 602 of the computer (as shown in FIG. 11A(2)). When a location at which a drag-and-drop operation ends is near the device identifier 301 of the master device, the master device and the computer start to establish a collaboration connection, and the master device accesses an interface shown in FIG. 11A(3). On the interface, an identifier in the device identifier 602 of the computer becomes a connection identifier, to visually feed back an ongoing state of the collaboration connection to the user.

For example, when a distance, dragged by the user, between the device identifier 602 of the computer and the device identifier 301 of the master device is less than a third threshold, the device identifier 301 of the master device automatically adsorbs the device identifier 602 of the computer. When a distance between the location at which the drag-and-drop operation ends and the device identifier 301 of the master device is less than the third threshold, the master device and the computer start to establish the collaboration connection.

In this embodiment of this application, the third threshold may be 20 pixels (px), or may be any other value. This is not limited herein.

When the collaboration connection between the master device and the computer is established, the master device accesses a page shown in FIG. 11A(4). The page includes the collaboration identifier 1003 and the collaboration type card 1004.

If the master device and the computer are in collaboration, the computer displays a collaboration window 1101, and content displayed in the window is the same as the content displayed by the master device.

If the collaboration connection between the master device and the computer fails to be established, the master device accesses a page shown in FIG. 11A(5). The page includes the device identifier 301 of the master device and the device identifier 602 of the computer.

In some embodiments, if the collaboration connection fails to be established, a prompt message may be displayed on the control center page of the master device, to prompt the user that the collaboration connection fails to be established.

For example, the page shown in 11A(5) further includes a prompt message 1101. The prompt message 1101 is used to prompt the user that the collaboration connection fails to be established. The prompt message 1101 may be a text message, for example, a "connection failure". The prompt message 1101 may be displayed in a form of a bubble, or may be displayed in a form of a toast message. A specific display form of the prompt message 1101 is not limited in this embodiment of this application.

The prompt message 1101 may disappear after being displayed for a period of time, or may disappear after any operation is received. In this way, blocking the control center page by the prompt message 1101 can be reduced. A disappearance manner of the prompt message 1101 is not limited in this embodiment of this application.

In some embodiments, the prompt message 1101 is further used to remind the user of a reason of a transferring failure. In this way, the user can adjust the slave device based on the failure reason, to facilitate performing task transferring again. This improves user experience.

For example, text corresponding to the prompt message 1101 may be: "the connection fails, and you can unlock the peer end and retry", "task transferring to the slave device is not supported temporarily", "the application temporarily does not support transferring to the slave device", "the network connection is unstable, and you can retry later", or the like. Specific content of the prompt message 1101 is not limited in this embodiment of this application.

The following describes the disconnection process between the master device and the slave device with reference to FIG. 11B.

In some embodiments, when the user drags the device identifier of the computer in the collaboration identifier 1003 on an interface shown in part a of FIG. 11B away from a nearby region of the device identifier 301 of the master device, the device identifier 301 of the master device desorbs the device identifier 602 of the computer. In addition, a location of the device identifier 602 of the computer is related to a location of a drag-and-drop operation (as shown in part b of FIG. 11B). When a location at which the drag-and-drop operation ends is not near the device identifier 301 of the master device, the collaboration connection between the master device and the computer is disconnected, the master device accesses an interface shown in part c of FIG. 11B, and the device identifier 602 of the computer is located at the end of a slave device sequence.

For example, when a distance, dragged by the user, between the device identifier 602 of the computer and the device identifier 301 of the master device is greater than or equal to the third threshold, the device identifier 301 of the master device desorbs the device identifier 602 of the computer. When a distance between the location at which the drag-and-drop operation ends and the device identifier 301 of the master device is greater than or equal to the third threshold, the collaboration connection between the master device and the computer is disconnected.

In a possible implementation, when the master device is in collaboration, the control center page continuously displays the collaboration type card 1004 until the collaboration is disconnected. If the user taps the disconnect button 1006 shown in FIG. 11A(4), the master device disconnects from the computer, and the master device accesses a page shown in part c of FIG. 11B. The page includes the device identifier 301 of the master device and the device identifier 602 of the computer. The device identifier 602 of the computer is located at the end of the slave device sequence.

On a basis of the foregoing embodiment, when the user may drag a device identifier of a slave device at the bottom to the vicinity of the collaboration identifier 1003, the master device disconnects from collaboration, and establishes a collaboration connection with the slave device corresponding to the dragged device identifier of the slave device.

For example, as shown in FIG. 12, that the master device establishes collaboration with a slave device 2 is used as an example. When the user drags a device identifier 1201 of a slave device 1 to the vicinity of a collaboration identifier 303, the master device disconnects from the collaboration with the slave device 2, and establishes collaboration with the slave device 1. The master device accesses a page shown in part b of FIG. 12 from a page shown in part a of FIG. 12.

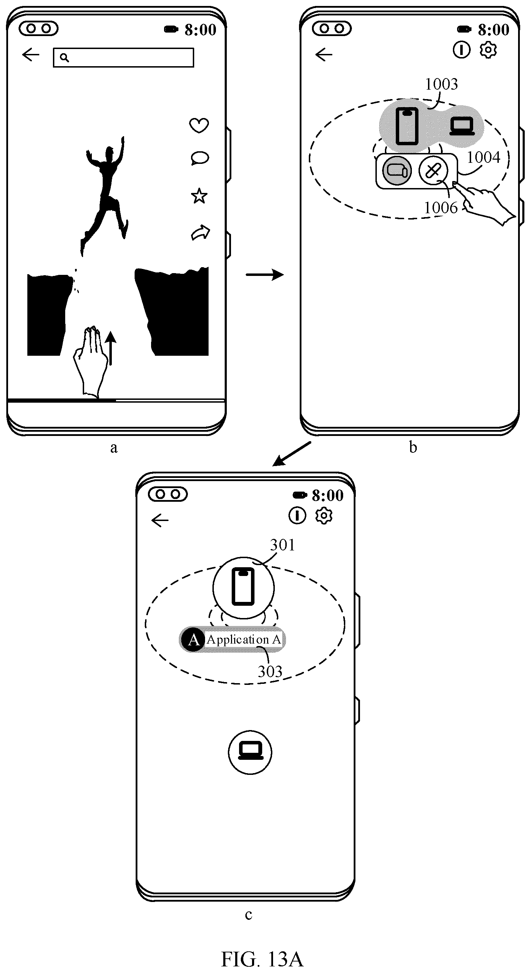

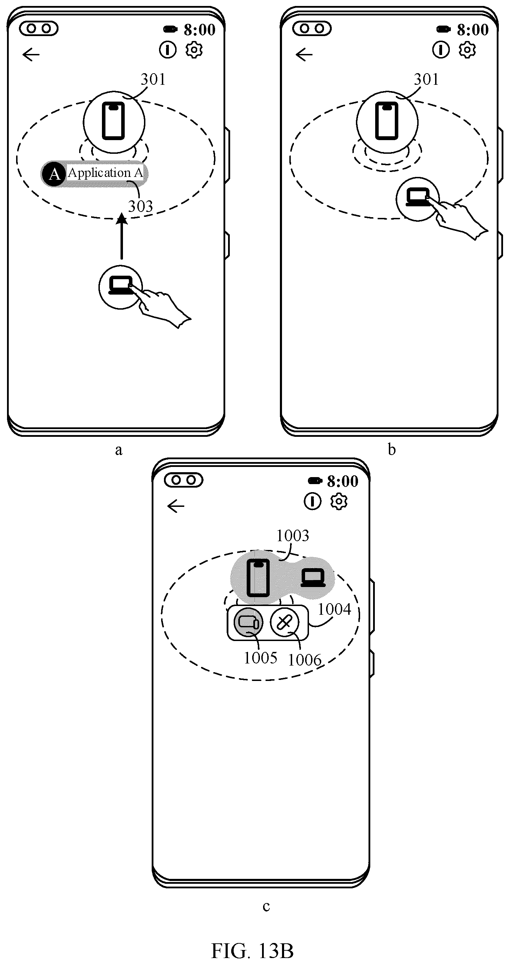

The following describes a scenario in which task transferring and a collaboration scenario conflict with reference to FIG. 13A and FIG. 13B.

In an embodiment of this application, when in collaboration, the master device receives an operation of accessing the control center page by the user, and the control center page displays the collaboration type card 1004, and does not display the task identifier 303 (as shown in part b of FIG. 13A). When the collaboration connection between the master device and the slave device is disconnected, the control center page displays the task identifier 303, as shown in part c of FIG. 13A. When in collaboration, the master device receives an operation of accessing the control center page by the user, and the control center page displays the task identifier 303, as shown in part c of FIG. 13A.

For example, as shown in FIG. 13A, when the master device is in collaboration, and the master device receives a three-finger upward sliding operation on an interface shown in part a of FIG. 13A, the master device accesses a page shown in part b of 16A. The page includes the collaboration type card 1004, and does not include the task identifier 303. When the user taps the disconnect button 1006, the master device displays a page shown in part c of FIG. 13A. The page includes the task identifier 303.

In this embodiment of this application, when not in collaboration and running a foreground application, the master device receives an operation of accessing the control center page by the user, and the control center page displays the task identifier 303. The user may drag the device identifier of the slave device to the vicinity of the device identifier of the master device by using a drag-and-drop operation, to implement a collaboration connection between the master device and the slave device.

For example, as shown in FIG. 13B, when the master device receives the three-finger upward sliding operation on the interface shown in part a of FIG. 13A, the master device accesses a page shown in part a of FIG. 13B. The page includes the device identifier 301 of the master device, the task identifier 303, and the device identifier 602 of the computer, and does not include the collaboration type card 1004. When the user drags the device identifier 602 of the computer to the vicinity of the device identifier 301 of the master device, the device identifier 301 of the master device automatically adsorbs the device identifier 602 of the computer.

When a location at which a drag-and-drop operation ends is near the device identifier 301 of the master device, the master device and the computer establish a collaboration connection, and the master device accesses a page shown in part c of FIG. 13B.

In some embodiments, in a dragging process of the user, the master device does not display the task identifier 303 (as shown in part b of FIG. 13B). In addition, when determining a collaboration manner between the master device and the slave device, the master device does not consider a currently running service, but determines the collaboration manner with reference to Table 2 shown above.

On a basis of the foregoing embodiment, before the master device accesses the control center page, the master device further displays a guidance page, to prompt the user to agree with a privacy agreement, to enable Bluetooth and WLAN, to log in to an account, and the like.

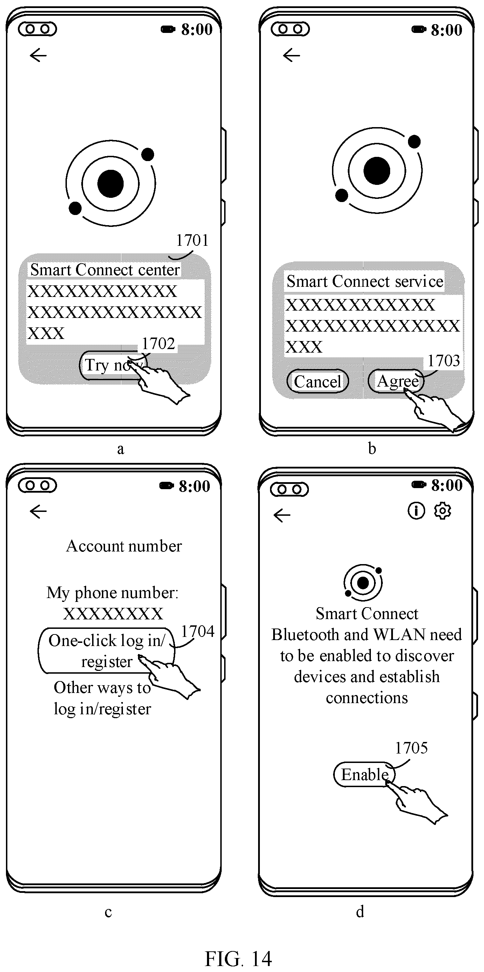

For example, FIG. 14 is a schematic diagram of a page of a master device according to an embodiment of this application. That the master device accesses the control center for the first time is used as an example.

As shown in FIG. 14, if the master device receives a three-finger upward sliding operation of the user, the master device accesses a page shown in part a of FIG. 14. The page includes a guidance pop-up window 1701. When the user taps an agree button 1702, the master device accesses a page shown in part b of FIG. 14, and the page displays the privacy agreement and the agree control 1703. When the user taps the agree control 1703, the master device accesses a page shown in part c of FIG. 14, and the page includes a login control.

When the user taps the login control 1704, the master device accesses a page shown in part d of FIG. 14. The page includes an enable control 1705. When the user taps the enable control 1705, the master device accesses the control center page.

If the master device has enabled Bluetooth and WLAN when the user taps the login control 1704, the master device accesses the control center page, and does not display the page shown in part d of FIG. 14.

The foregoing embodiment is described by using an example in which the master device is a mobile phone. The master device may alternatively be a computer, a pad, or the like. For a task transferring manner, interface display, collaboration, and the like of the master device being another device such as a computer or a pad, refer to the foregoing related description of the master device being a mobile phone. Details are not described herein again.

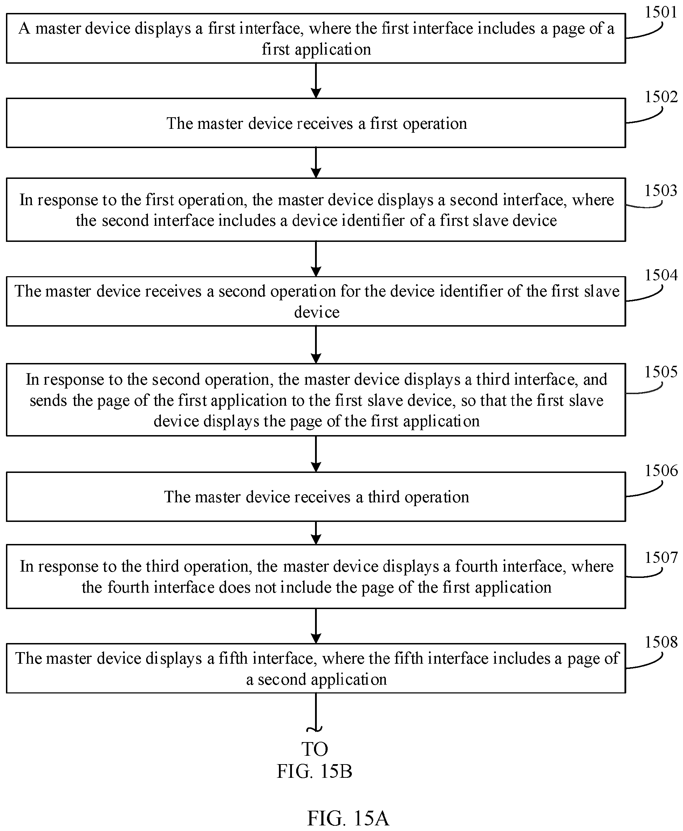

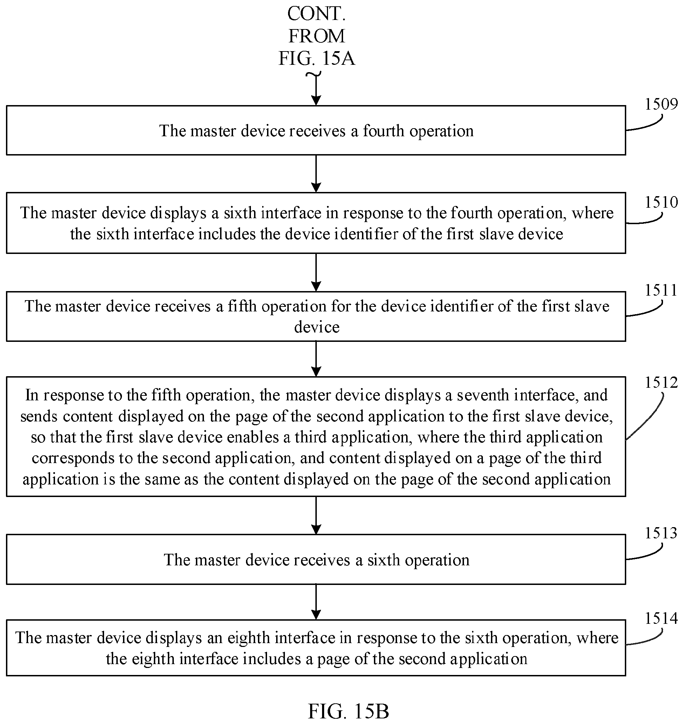

For example, FIG. 15A and FIG. 15B are a schematic flowchart of a multi-device task transferring method according to an embodiment of this application. The method includes:

S1501. The master device displays a first interface, where the first interface includes a page of a first application.

In this embodiment of this application, the first interface is a page of an application, and the first interface may correspond to the interface shown in FIG. 6A(1) or FIG. 7A(1). The page of the first application may correspond to the page of the application A shown in FIG. 6A(1) to FIG. 6A(6). The first application may be a video application, or may be another type of application. This is not limited in this embodiment of this application.

S1502. The master device receives a first operation.

The first operation is used to access a control center page. The first operation may be a shortcut gesture operation, or may be a voice operation or another type of operation. This is not limited in this embodiment of this application. The shortcut gesture operation may be a gesture operation such as three-finger upward sliding.

S1503. In response to the first operation, the master device displays a second interface, where the second interface includes a device identifier of a first slave device.

The second interface is the control center page, and may correspond to the interface shown in FIG. 6A(2) or the interface shown in FIG. 7A(2). For a form of the device identifier of the first slave device, refer to the foregoing device identifier of the slave device. Details are not described herein again.

S1504. The master device receives a second operation for the device identifier of the first slave device.

In this embodiment of this application, the second operation is used to select the first slave device. Based on different pages, selection manners may be different, and may be a drag-and-drop selection, may be tapping on the device identifier of the first slave device for selecting, and the like. A type of the second operation is not limited in this embodiment of this application.

S1505. In response to the second operation, the master device displays a third interface, and sends the page of the first application to the first slave device, so that the first slave device displays the page of the first application.

The third interface is a control center page after task transferring succeeds, and may correspond to the interface shown in FIG. 6A(5) or FIG. 7A(5).

S1506. The master device receives a third operation.

The third operation is a back operation. The back operation in this embodiment of this application is an operation of invoking a back instruction. Alternatively, the back operation may be understood as an operation of exiting the control center page. The third operation may be a tap operation, may be a shortcut operation, or may be a voice operation. A specific type of the third operation is not limited in this embodiment of this application.

S1507. In response to the third operation, the master device displays a fourth interface, where the fourth interface does not include the page of the first application.

The fourth interface is an interface displayed after a control center is exited, and may correspond to the interface shown in FIG. 6A(6) or FIG. 7A(6). It may be understood that, after the master device transfers the first application in a different-source screen projection manner, the master device disables the first application, and does not display the page of the first application.

S1508. The master device displays a fifth interface, where the fifth interface includes a page of a second application.

In this embodiment of this application, the fifth interface is a page of an application, and the fifth interface may correspond to the interface shown in FIG. 6C(1) or FIG. 7B(1). The page of the second application may correspond to the page of the application B shown in FIG. 6C(1) to FIG. 6C(6). The second application may be a note-taking application, or may be another type of application. This is not limited in this embodiment of this application.

S1509. The master device receives a fourth operation.

The fourth operation is used to access the control center page. The fourth operation may be a shortcut gesture operation, or may be a voice operation or another type of operation. This is not limited in this embodiment of this application. The shortcut gesture operation may be a gesture operation such as three-finger upward sliding.

S1510. The master device displays a sixth interface in response to the fourth operation, where the sixth interface includes the device identifier of the first slave device.

The sixth interface is the control center page, and may correspond to the interface shown in FIG. 6C(2) or the interface shown in FIG. 7B(2).

S1511. The master device receives a fifth operation for the device identifier of the first slave device.

In this embodiment of this application, the fifth operation is used to select the first slave device. Based on different pages, selection manners may be different, and may be a drag-and-drop selection, may be tapping on the device identifier of the first slave device for selecting, and the like. A type of the fifth operation is not limited in this embodiment of this application.

S1512. In response to the fifth operation, the master device displays a seventh interface, and sends content displayed on the page of the second application to the first slave device, so that the first slave device enables a third application, where the third application corresponds to the second application, and content displayed on a page of the third application is the same as the content displayed on the page of the second application.

The seventh interface is a control center page after task transferring succeeds, and may correspond to the interface shown in FIG. 6C(5) or FIG. 7B(5). The third application and the second application may be understood as a same application of different versions, for example, a note-taking application on the mobile phone and a note-taking application on the computer.

S1513. The master device receives a sixth operation.

The sixth operation is a back operation. The back operation in this embodiment of this application is an operation of invoking a back instruction. Alternatively, the back operation may be understood as an operation of exiting the control center page. The sixth operation may be a tap operation, may be a shortcut operation, or may be a voice operation. A specific type of the sixth operation is not limited in this embodiment of this application.

S1514. The master device displays an eighth interface in response to the sixth operation, where the eighth interface includes a page of the second application.

The eighth interface is an interface displayed after the control center is exited, and may correspond to the interface shown in FIG. 6C(6) or FIG. 7B(6).

In this way, the first application and the second application are adapted to different manners, and can be transferred to the first slave device respectively through different-source screen projection and handoff. The master device can automatically adjust a transferring manner according to an application, to implement smart transferring. Therefore, it is unnecessary for a user to separately search for a corresponding transferring entry, thereby reducing user memory costs, and improving user experience.

Optionally, the second interface further includes an identifier of the first application, and the sixth interface further includes an identifier of the second application. The second operation is an operation of dragging the identifier of the first application to the vicinity of the device identifier of the first slave device. The fifth operation is an operation of dragging the identifier of the second application to the vicinity of the device identifier of the first slave device.

In this embodiment of this application, both the identifier of the first application and the identifier of the second application may correspond to the foregoing task identifiers. Details are not described herein again. The identifier of the first application may correspond to the task identifier of the application A, and the identifier of the second application may correspond to the task identifier of the application B.

The vicinity of the device identifier of the first slave device may be understood as a case in which a distance away from the device identifier of the first slave device is less than a second threshold.

In this way, an identifier of a corresponding application is displayed on the control center page, which is simple, intuitive, and clear at a glance. A slave device is selected by dragging an identifier of an application to the vicinity of a device identifier of the slave device, so that an operation is simple and easy to understand.

Optionally, the first operation is the same as the fourth operation, and the first operation is any one of the following operations: a three-finger upward sliding operation, a double-tap operation, a three-finger downward sliding operation, and a three-tap operation.

In this way, the control center page is accessed by using a shortcut, so that an operation is convenient and fast, thereby improving user experience.

Optionally, the third operation is a leftward sliding operation or a rightward sliding operation on a screen edge, or a tap operation on a first control displayed on the third interface. The sixth operation is a leftward sliding operation or a rightward sliding operation on the screen edge, or a tap operation on the first control displayed on the seventh interface.

The first control may correspond to an exit control. It may be understood that the master device may exit the control center page by using a sideward sliding operation, or may exit the control center page by tapping the exit control on the control center page. The third operation and the sixth operation may be the same or different.

In this way, a plurality of exit manners are provided, and the user can exit the control center page in a proper manner, thereby improving user experience.

Optionally, the master device is any one of a mobile phone, a computer, and a tablet, and the first slave device is any one of a mobile phone, a computer, and a tablet.

In this way, it can be applicable to task transferring between a plurality of types of devices, so that a coverage area is wide, and practicality is high, thereby improving user experience.

Optionally, the fifth interface and the eighth interface are different interfaces, the fifth interface includes a first page of the second application, the eighth interface includes a second page of the second application, and the first page of the second application is different from the second page of the second application.

It may be understood that the fifth interface may correspond to a page being editing or another page being modified. The second page is a page obtained after editing is exited, or a page obtained after modification is exited.

In this case, when performing task transferring through handoff, the master device exits a state such as editing or modifying. Content on interfaces displayed by the application is different before and after task transferring.

Optionally, the second application is a note-taking application. The first page of the second application is an editing page, and the editing page includes content of a first note. The second page of the second application is a list page, and the list page includes an identifier of the first note.

Task transferring in this embodiment of this application may be applicable to the note-taking application. For the note-taking application, content on interfaces displayed by the application is different before and after task transferring.

Optionally, the first interface includes only the page of the first application, and the fourth interface is a home screen of the master device.

In this embodiment of this application, including only the page of the first application may mean that the page of the first application is displayed in full screen, or may mean that the page of the first application is displayed in a region other than a status bar region above. Alternatively, including only the page of the first application may be understood as including no page of another application other than the page of the first application. This is not specifically limited in this embodiment of this application.

It may be understood that, after the master device transfers the first application in the different-source screen projection manner, the master device disables the first application, and does not display the page of the first application. If running only the first application in the foreground, the master device displays the home screen after transferring the first application in the different-source screen projection manner.

Optionally, the first interface further includes a page of a fourth application, the page of the fourth application and the page of the first application are displayed in split-screen mode, and the fourth interface includes the page of the fourth application.

The fourth application may be a note-taking application, or may be another type of application. This is not limited in this embodiment of this application. The fourth application may be the same as or different from the second application.

It may be understood that, if running the first application and the fourth application in the foreground, the master device displays the page of the fourth application after transferring the first application in the different-source screen projection manner.

Optionally, the fifth interface further includes a page of a fifth application, and the page of the fifth application and the page of the second application are displayed in split-screen mode; and the eighth interface further includes a page of the fifth application, and the page of the second application and the page of the fifth application are displayed in split-screen mode.

The fifth application may be a video application, or may be another type of application. This is not limited in this embodiment of this application. The fifth application may be the same as or different from the first application.

It may be understood that, if running the second application and the fifth application in the foreground, the master device displays the page of the second application and the page of the fifth application after transferring the second application in the handoff manner.

Optionally, the first interface further includes a first floating window, and the first floating window displays a page of a sixth application; the second interface does not include an identifier of the sixth application, and the fourth interface further displays a second control; and the first floating window is displayed on the fourth interface in response to an operation performed by the user on the second control.

The application displayed by using the floating window may correspond to the foregoing small-window application. The sixth application may be a video application, or may be another type of application. This is not limited in this embodiment of this application. The second control may correspond to the zoom-out small-window application, or may be referred to as a floating ball. The fourth interface may correspond to the interface shown in FIG. 8A(1) to FIG. 8A(4) or FIG. 8B(1) to FIG. 8B(5).

It may be understood that task transferring is not performed on the small-window application. After task transferring, the small-window application is zoomed out to the screen edge. Display of the small-window application may be restored by using the zoom-out small-window application.

Optionally, the fifth interface further includes a second floating window, and the second floating window displays a page of a seventh application; the sixth interface does not include an identifier of the seventh application, and the eighth interface further displays a third control; and the second floating window is displayed on the eighth interface in response to an operation performed by the user on the third control. The eighth interface may correspond to the interface shown in FIG. 8A(1) to FIG. 8A(4) or FIG. 8B(1) to FIG. 8B(5).

The application displayed by using the floating window may correspond to the foregoing small-window application. The seventh application may be a video application, or may be another type of application. This is not limited in this embodiment of this application. The third control may correspond to the zoom-out small-window application, or may be referred to as a floating ball. It may be understood that task transferring is not performed on the small-window application. After task transferring, the small-window application is zoomed out to the screen edge. Display of the small-window application may be restored by using the zoom-out small-window application.

Optionally, the master device is any one of a mobile phone, a computer, and a tablet, the first slave device is a large screen, and the fourth interface includes the page of the first application.

When the slave device is a large screen, task transferring is performed on the first application in a same-source screen projection manner. Before and after task transferring in same-source screen projection, a page of an application remains unchanged, and displayed content is the same. A page displayed on the slave device is the same as a page displayed on the master device.

Optionally, the first interface further includes a page of a fourth application, and when the page of the fourth application and the page of the first application are displayed in split-screen mode, the fourth interface does not include the page of the fourth application.

In a split-screen display scenario, before and after task transferring in same-source screen projection, a page of an application remains unchanged, and displayed content is the same. A page displayed on the slave device is the same as a page displayed on the master device.

Optionally, the master device is any one of a mobile phone, a computer, and a tablet, the first slave device is a large screen, and the page of the second application included on the fifth interface and the page of the second application included on the eighth interface are a same page.

When the slave device is a large screen, task transferring is performed on the second application in the same-source screen projection manner. Before and after task transferring in same-source screen projection, a page of an application remains unchanged, and displayed content is the same. A page displayed on the slave device is the same as a page displayed on the master device.

Optionally, the page of the first application is a page for playing a video.

Optionally, the method further includes: The master device displays a ninth interface, where the ninth interface includes a page of an eighth application; the master device receives a seventh operation; the master device displays a tenth interface in response to the seventh operation, where the tenth interface includes a device identifier of a second slave device; the master device receives an eighth operation for the device identifier of the second slave device; and the master device displays an eleventh interface in response to the eighth operation, where the eleventh interface includes a device identifier of the master device and the device identifier of the second slave device, and the device identifier of the master device is connected to the device identifier of the second slave device.

The ninth interface is a page of an application, and may correspond to the interface shown in FIG. 6A(1) or FIG. 6C(1), or another page on which a foreground application runs. The seventh operation is similar to the first operation. For details, refer to the foregoing description of the first operation. Details are not described herein again. The tenth interface may correspond to a control center page not in a collaboration state. The eleventh interface may correspond to a control center page in collaboration. The eighth operation is used to select the device identifier of the second slave device, and may be a tap operation or a drag-and-drop operation. A specific type of the eighth operation is not limited in this embodiment of this application.

In this embodiment of this application, the connection may be a connection, and may be with a relatively close distance (next to or the like). This is not limited herein.

In this way, the control center page may further implement a collaboration connection between the master device and the slave device.

Optionally, the eighth operation is an operation of dragging the device identifier of the second slave device to the vicinity of the device identifier of the master device.

The vicinity of the device identifier of the master device may be understood as a case in which a distance away from the device identifier of the master device is less than a third threshold.

In this way, a slave device collaborating with the master device is selected by dragging a device identifier of the slave device to the vicinity of the device identifier of the master device, so that an operation is simple and easy to understand.

Optionally, the tenth interface further includes an identifier of the eighth application, and the eleventh interface does not include the identifier of the eighth application.

It may be understood that an identifier of an application is displayed on a control center page not in a collaboration state, and task transferring can be performed. The control center page in collaboration does not display an identifier of an application, and task transferring cannot be performed.

Optionally, the eleventh interface further includes a first identifier, and the first identifier indicates a collaboration type between the master device and the second slave device.

The first identifier may correspond to same-source screen projection, screen extension, screen mirroring, keyboard and mouse sharing, and the like.

In this way, it is convenient for the user to confirm the collaboration types of the master device and the slave device, thereby improving user experience.

Optionally, the eleventh interface further includes a second identifier, and the method further includes: The master device receives a ninth operation for the second identifier; and the master device and the second slave device switch to a collaboration type corresponding to the second identifier in response to the ninth operation.

The second identifier may correspond to collaboration types such as same-source screen projection, screen extension, screen mirroring, and keyboard and mouse sharing. The ninth operation may be a tap operation, a touch operation, or the like. The ninth operation is not limited in this embodiment of this application.

In this way, the user can adjust the collaboration type between the master device and the slave device by using the second identifier, and switch a collaboration manner, thereby improving user experience.

Optionally, the eleventh interface further includes a fourth control, and the method further includes: The master device receives a tenth operation for the fourth control; the master device disconnects from the second slave device in response to the tenth operation; and the master device displays a twelfth interface, where the twelfth interface includes the device identifier of the master device and the device identifier of the second slave device, and the device identifier of the master device is not connected to the device identifier of the second slave device.

The twelfth interface is a control center page after the collaboration connection is disconnected, and may correspond to the interface shown in FIG. 11A(1) to FIG. 11A(5). The fourth control may correspond to a disconnect control (button). The tenth operation may be a tap operation, a touch operation, or another type of operation. This is not specifically limited in this embodiment of this application.

In this way, a connection between the master device and the slave device can be disconnected by using the fourth control, to disable collaboration, so that an operation is simple and convenient.

Optionally, the method further includes: The master device receives an eleventh operation for the device identifier of the second slave device on the eleventh interface; the master device disconnects from the second slave device in response to the eleventh operation; and the master device displays a thirteenth interface, where the thirteenth interface includes the device identifier of the master device and the device identifier of the second slave device, and the device identifier of the master device is not connected to the device identifier of the second slave device.

The thirteenth interface is a control center page after the collaboration connection is disconnected, and may correspond to the interface shown in FIG. 11B. The eleventh operation may be a drag-and-drop operation or another type of operation. This is not specifically limited in this embodiment of this application.

In this way, a connection between the master device and the slave device is disconnected in a drag-and-drop manner, to disable collaboration, so that an operation is simple and convenient.

Optionally, the eleventh interface further includes an identifier of a third slave device, and the device identifier of the master device is not connected to the device identifier of the third slave device; and the method further includes: The master device receives a twelfth operation for the device identifier of the third slave device on the eleventh interface; in response to the twelfth operation, the master device disconnects from the second slave device, and establishes a connection to the third slave device; and the master device displays a fourteenth interface, where the fourteenth interface includes the device identifier of the master device, the device identifier of the second slave device, and the identifier of the third slave device, the device identifier of the master device is connected to the device identifier of the third slave device, and the device identifier of the master device is not connected to the device identifier of the second slave device.

The twelfth operation is used to switch a slave device connected to the master device. The twelfth operation may be an operation of dragging the device identifier of the third slave device, or may be another type of operation. This is not limited in this embodiment of this application. The fourteenth interface may correspond to the interface shown in FIG. 12.

In this way, the master device can switch a collaboration slave device, thereby improving user experience.

Optionally, the collaboration type includes any one of the following types: same-source screen projection, screen extension, screen mirroring, and keyboard and mouse sharing.

It should be noted that in embodiments of this application, "when ... " may be an instantaneous occurrence time of a case, or may be a period of time after occurrence of a case, and this is not specifically limited in embodiments of this application. In addition, a display interface provided in embodiments of this application is merely an example, and the display interface may further include more or less content.

The foregoing describes the multi-device task transferring method in the embodiments of this application. The following describes an apparatus for performing the multi-device task transferring method in the embodiments of this application. A person skilled in the art may understand that the method and the apparatus may be mutually combined and referenced. The related apparatus provided in this embodiment of this application may perform the steps in the multi-device task transferring method.

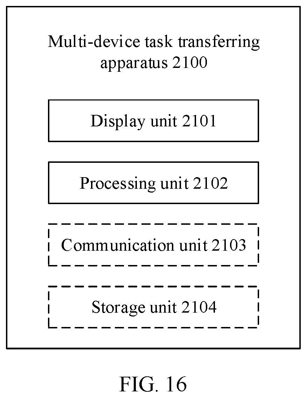

FIG. 16 is a schematic diagram of a structure of a multi-device task transferring apparatus according to an embodiment of this application. The multi-device task transferring apparatus may be the terminal device in the embodiments of this application, or may be a chip or a chip system in the terminal device.

As shown in FIG. 16, a multi-device task transferring apparatus 2100 may be used in a communication device, a circuit, a hardware component, or a chip, and the multi-device task transferring apparatus includes: a display unit 2101 and a processing unit 2102. The display unit 2101 is configured to support a display step performed by the multi-device task transferring apparatus 2100. The processing unit 2102 is configured to support the multi-device task transferring apparatus 2100 to perform an information processing step.

In a possible implementation, the multi-device task transferring apparatus 2100 may further include a communication unit 2103. Specifically, the communication unit is configured to support the multi-device task transferring apparatus 2100 in performing steps of data sending and data receiving. The communication unit 2103 may be an input or output interface, a pin, a circuit, or the like.

In a possible embodiment, the multi-device task transferring apparatus may further include: a storage unit 2104. The processing unit 2102 and the storage unit 2104 are connected to each other by using a line. The storage unit 2104 may include one or more memories, and the memory may be one or more components that are in a device or a circuit and that are configured to store a program or data. The storage unit 2104 may exist independently, and is connected to the processing unit 2102 included in the multi-device task transferring apparatus by using a communication line. Alternatively, the storage unit 2104 may be integrated into the processing unit 2102.

The storage unit 2104 may store computer-executable instructions of the method in the terminal device, so that the processing unit 2102 performs the method in the foregoing embodiments. The storage unit 2104 may be a register, a cache, a RAM, or the like, and the storage unit 2104 may be integrated into the processing unit 2102. The storage unit 2104 may be a read-only memory (read-only memory, ROM) or another type of static storage device that may store static information and instructions. The storage unit 2104 may be independent of the processing unit 2102.

The multi-device task transferring method provided in the embodiments of this application may be applied to an electronic device having a display function. The electronic device includes the terminal device. For a specific device form and the like of the terminal device, refer to the foregoing related description. Details are not described herein again.

An embodiment of this application provides an electronic device, and the electronic device includes a processor and a memory. The memory stores computer-executable instructions. The processor executes the computer-execution instructions stored in the memory, to enable the electronic device to perform the foregoing method.

An embodiment of this application provides a chip. The chip includes a processor, and the processor is configured to invoke a computer program in a memory to execute the technical solutions in the foregoing embodiments. The implementation is similar to the foregoing related embodiments in terms of implementation principles and technical effects. Details are not repeated herein again.

An embodiment of this application further provides a computer-readable storage medium. The computer-readable storage medium stores a computer program. The foregoing method is implemented when the computer program is executed by a processor. All or some of the methods described in the foregoing embodiments may be implemented by using software, hardware, firmware, or any combination thereof. If implemented in software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible to a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that aims to carry or store required program code in a form of an instruction or a data structure, and may be accessed by the computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (Digital Versatile Disc, DVD), a floppy disk, and a Blu-ray disc, and the magnetic disk usually reproduces data magnetically, while the optical disc reproduces data optically by using a laser. A combination of the foregoing should also be included in the scope of the computer-readable medium.

An embodiment of this application provides a computer program product. The computer program product includes a computer program, and when the computer program is run, a computer is enabled to perform the foregoing method.

The embodiments of this application are described with reference to the flowcharts and/or the block diagrams of the method, the device (system), and the computer program product according to the embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. A multi-device task transferring method, comprising:
displaying, by a master device, a first interface, wherein the first interface comprises a page of a first application;
receiving, by the master device, a first operation;
displaying, by the master device, a second interface in response to the first operation, wherein the second interface comprises a device identifier of a first slave device;
receiving, by the master device, a second operation for the device identifier of the first slave device;
in response to the second operation, displaying, by the master device, a third interface, and sending the page of the first application to the first slave device, so that the first slave device displays the page of the first application;
receiving, by the master device, a third operation, wherein the third operation is a back operation;
displaying, by the master device, a fourth interface in response to the third operation, wherein the fourth interface does not comprise the page of the first application;
displaying, by the master device, a fifth interface, wherein the fifth interface comprises a page of a second application;
receiving, by the master device, a fourth operation;
displaying, by the master device, a sixth interface in response to the fourth operation, wherein the sixth interface comprises the device identifier of the first slave device;
receiving, by the master device, a fifth operation for the device identifier of the first slave device;
in response to the fifth operation, displaying, by the master device, a seventh interface, and sending content displayed on the page of the second application to the first slave device, so that the first slave device starts a third application, wherein the third application corresponds to the second application, and content displayed on a page of the third application is the same as the content displayed on the page of the second application;
receiving, by the master device, a sixth operation, wherein the sixth operation is a back operation; and
displaying, by the master device, an eighth interface in response to the sixth operation, wherein the eighth interface comprises a page of the second application.

2. The method according to claim 1, wherein
the second interface further comprises an identifier of the first application, and the sixth interface further comprises an identifier of the second application;
the second operation is an operation of dragging the identifier of the first application to the vicinity of the device identifier of the first slave device; and
the fifth operation is an operation of dragging the identifier of the second application to the vicinity of the device identifier of the first slave device.

3. The method according to claim 1 or 2, wherein the first operation is the same as the fourth operation, and the first operation is any one of the following operations: a three-finger upward sliding operation, a double-tap operation, a three-finger downward sliding operation, and a three-tap operation.

4. The method according to any one of claims 1-3, wherein
the third operation is a leftward sliding operation or a rightward sliding operation on a screen edge, or a tap operation on a first control displayed on the third interface; and
the sixth operation is a leftward sliding operation or a rightward sliding operation on a screen edge, or a tap operation on the first control displayed on the seventh interface.

5. The method according to any one of claims 1-4, wherein the master device is any one of a mobile phone, a computer, and a tablet, and the first slave device is any one of a mobile phone, a computer, and a tablet.

6. The method according to any one of claims 1-5, wherein the fifth interface and the eighth interface are different interfaces, the fifth interface comprises a first page of the second application, the eighth interface comprises a second page of the second application, and the first page of the second application is different from the second page of the second application.

7. The method according to claim 6, wherein the second application is a note-taking application;
the first page of the second application is an editing page, and the editing page comprises content of a first note; and
the second page of the second application is a list page, and the list page comprises an identifier of the first note.

8. The method according to any one of claims 1-7, wherein the first interface comprises only the page of the first application, and the fourth interface is a home screen of the master device.

9. The method according to any one of claims 1-7, wherein the first interface further comprises a page of a fourth application, and the page of the fourth application and the page of the first application are displayed in split-screen mode; and
the fourth interface comprises the page of the fourth application.

10. The method according to any one of claims 1-7 and 9, wherein the fifth interface further comprises a page of a fifth application, and the page of the fifth application and the page of the second application are displayed in split-screen mode; and
the eighth interface further comprises a page of the fifth application, and the page of the second application and the page of the fifth application are displayed in split-screen mode.

11. The method according to any one of claims 1-10, wherein the first interface further comprises a first floating window, and the first floating window displays a page of a sixth application;
the second interface does not comprise an identifier of the sixth application, and the fourth interface further displays a second control; and
the first floating window is displayed on the fourth interface in response to an operation performed by a user on the second control.

12. The method according to any one of claims 1-10, wherein the fifth interface further comprises a second floating window, and the second floating window displays a page of a seventh application;
the sixth interface does not comprise an identifier of the seventh application, and the eighth interface further displays a third control; and
the second floating window is displayed on the eighth interface in response to an operation performed by a user on the third control.

13. The method according to any one of claims 1-4 and 9, wherein the master device is any one of a mobile phone, a computer, and a tablet, the first slave device is a large screen, and the fourth interface comprises the page of the first application.

14. The method according to claim 13, wherein the first interface further comprises the page of the fourth application, and when the page of the fourth application and the page of the first application are displayed in split-screen mode, the fourth interface does not comprise the page of the fourth application.

15. The method according to any one of claims 1-4 and 10, wherein the master device is any one of a mobile phone, a computer, and a tablet, and the first slave device is a large screen; and
the page of the second application comprised on the fifth interface and the page of the second application comprised on the eighth interface are a same page.

16. The method according to any one of claims 1-15, wherein the page of the first application is a page for playing a video.

17. The method according to any one of claims 1-16, wherein the method further comprises:
displaying, by the master device, a ninth interface, wherein the ninth interface comprises a page of an eighth application;
receiving, by the master device, a seventh operation;
displaying, by the master device, a tenth interface in response to the seventh operation, wherein the tenth interface comprises a device identifier of a second slave device;
receiving, by the master device, an eighth operation for the device identifier of the second slave device; and
in response to the eighth operation, displaying, by the master device, an eleventh interface, wherein the eleventh interface comprises a device identifier of the master device and the device identifier of the second slave device, and the device identifier of the master device is connected to the device identifier of the second slave device.

18. The method according to claim 17, wherein the eighth operation is an operation of dragging the device identifier of the second slave device to the vicinity of the device identifier of the master device.

19. The method according to claim 17 or 18, wherein
the tenth interface further comprises an identifier of the eighth application, and the eleventh interface does not comprise the identifier of the eighth application.

20. The method according to any one of claims 17-19, wherein the eleventh interface further comprises a first identifier, and the first identifier indicates a collaboration type between the master device and the second slave device.

21. The method according to claim 20, wherein the eleventh interface further comprises a second identifier, and the method further comprises:
receiving, by the master device, a ninth operation for the second identifier; and
switching, by the master device and the second slave device, to a collaboration type corresponding to the second identifier in response to the ninth operation.

22. The method according to any one of claims 17-21, wherein the eleventh interface further comprises a fourth control, and the method further comprises:
receiving, by the master device, a tenth operation for the fourth control;
disconnecting, by the master device, from the second slave device in response to the tenth operation; and
displaying, by the master device, a twelfth interface, wherein the twelfth interface comprises the device identifier of the master device and the device identifier of the second slave device, and the device identifier of the master device is not connected to the device identifier of the second slave device.

23. The method according to any one of claims 17-21, wherein the method further comprises:
receiving, by the master device, an eleventh operation for the device identifier of the second slave device on the eleventh interface;
disconnecting, by the master device, from the second slave device in response to the eleventh operation; and
displaying, by the master device, a thirteenth interface, wherein the thirteenth interface comprises the device identifier of the master device and the device identifier of the second slave device, and the device identifier of the master device is not connected to the device identifier of the second slave device.

24. The method according to any one of claims 17-21, wherein the eleventh interface further comprises an identifier of a third slave device, and the device identifier of the master device is not connected to the device identifier of the third slave device; and
the method further comprises:
receiving, by the master device, a twelfth operation for the device identifier of the third slave device on the eleventh interface;
in response to the twelfth operation, disconnecting, by the master device, from the second slave device, and establishing a connection to the third slave device; and
displaying, by the master device, a fourteenth interface, wherein the fourteenth interface comprises the device identifier of the master device, the device identifier of the second slave device, and the identifier of the third slave device, the device identifier of the master device is connected to the device identifier of the third slave device, and the device identifier of the master device is not connected to the device identifier of the second slave device.

25. The method according to any one of claims 17-24, wherein the collaboration type comprises any one of the following types: same-source screen projection, screen extension, screen mirroring, and keyboard and mouse sharing.

26. The method according to any one of claims 16-25, wherein
the second slave device is any one of a mobile phone, a computer, a tablet, and a large screen.

27. An electronic device, comprising a processor and a memory, wherein
the memory stores computer-executable instructions; and
the processor executes the computer-executable instructions stored in the memory, to enable the electronic device to perform the method according to any one of claims 1-26.

28. A computer-readable storage medium, wherein the computer-readable storage medium stores a computer program, and when the computer program is executed by a processor, the method according to any one of claims 1-26 is implemented.

29. A computer program product, comprising a computer program, wherein when the computer program is run, a computer is enabled to perform the method according to any one of claims 1-26.
